# EUROPEAN PATENT APPLICATION

(11) **EP 4 273 207 A1**
(43) Date of publication of application: **08.11.2023**
(21) Application number: 23171389.2
(22) Date of filing: 03.05.2023
(51) Int. Cl.: C09K 19/06, C09K 19/30, C09K 19/34, C09K 19/04, C09K 19/12

(54) **LIQUID-CRYSTAL MEDIUM**

(30) Priority: 06.05.2022 EP 22172035
(71) Applicant: Merck Patent GmbH, 64293 Darmstadt (DE)
(72) Inventor: Hirschmann, Harald, 64293 Darmstadt (DE); Schoen, Sabine, 64293 Darmstadt (DE)

(57) **Abstract**

The present invention relates to a liquid crystal medium comprising
a) one or more compounds of formula I 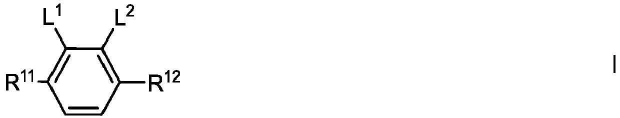 b) one or more compounds of the formula IIBa 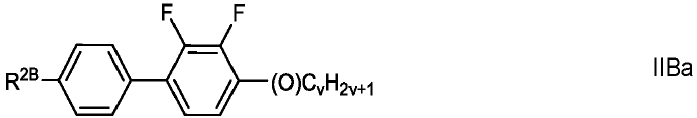 and c) one or more compounds of the formula IIDa 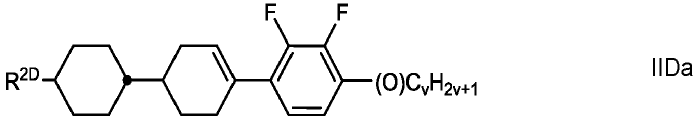 as defined in claim 1, and to the use thereof for optical, electro-optical and electronic purposes, in particular in LC displays, especially in IPS, FFS, VA or PS-VA displays.

## Description

The present invention relates to liquid-crystal (LC) media and to the use of the LC media for optical, electro-optical and electronic purposes, in particular in LC displays, preferably of the VA, IPS or FFS type.

One of the liquid-crystal display (LCD) modes used at present is the TN ("twisted nematic") mode. However, TN LCDs have the disadvantage of a strong viewing-angle dependence of the contrast.

In addition, so-called VA ("vertically aligned") displays are known which have a broader viewing angle. The LC cell of a VA display contains a layer of an LC medium between two transparent electrodes, where the LC medium usually has a negative dielectric anisotropy. In the switched-off state, the molecules of the LC layer are aligned perpendicular to the electrode surfaces (homeotropically) or have a tilted homeotropic alignment. On application of an electrical voltage to the two electrodes, a realignment of the LC molecules parallel to the electrode surfaces takes place.

Also known are so-called IPS ("in-plane switching") displays, which contain an LC layer between two substrates, where the two electrodes are arranged on only one of the two substrates and preferably have intermeshed, comb-shaped structures. On application of a voltage to the electrodes, an electric field which has a significant component parallel to the LC layer is thereby generated between them. This causes realignment of the LC molecules in the layer plane.

Furthermore, so-called FFS ("fringe-field switching") displays have been reported (see, inter alia, S.H. Jung et al., Jpn. J. Appl. Phys., Volume 43, No. 3, 2004, 1028), which contain two electrodes on the same substrate, one of which structured in a comb-shaped manner and the other is unstructured. A strong, so-called "fringe field" is thereby generated, i.e. a strong electric field close to the edge of the electrodes, and, throughout the cell, an electric field which has both a strong vertical component and also a strong horizontal component. FFS displays have a low viewing-angle dependence of the contrast. FFS displays usually contain an LC medium with positive dielectric anisotropy, and an alignment layer, usually of polyimide, which provides planar alignment to the molecules of the LC medium.

FFS displays can be operated as active-matrix or passive-matrix displays. In the case of active-matrix displays, individual pixels are usually addressed by integrated, non-linear active elements, such as, for example, transistors (for example thin-film transistors ("TFTs")), while in the case of passive-matrix displays, individual pixels are usually addressed by the multiplex method, as known from the prior art.

Furthermore, FFS displays have been disclosed (see S.H. Lee et al., Appl. Phys. Lett. 73(20), 1998, 2882-2883 and S.H. Lee et al., Liquid Crystals 39(9), 2012, 1141-1148), which have similar electrode design and layer thickness as FFS displays but comprise a layer of an LC medium with negative dielectric anisotropy instead of an LC medium with positive dielectric anisotropy. The LC medium with negative dielectric anisotropy shows a more favourable director orientation that has less tilt and more twist orientation compared to the LC medium with positive dielectric anisotropy, as a result of which these displays have a higher transmission. The displays further comprise an alignment layer, preferably of polyimide provided on at least one of the substrates that is in contact with the LC medium and induces planar alignment of the LC molecules of the LC medium. These displays are also known as "Ultra Brightness FFS (UB-FFS)" mode displays. These displays require an LC medium with high reliability.

In VA displays of the more recent type, uniform alignment of the LC molecules is restricted to a plurality of relatively small domains within the LC cell. Disclinations may exist between these domains, also known as tilt domains. VA displays having tilt domains have, compared with conventional VA displays, a greater viewing-angle independence of the contrast and the grey shades. In addition, displays of this type are simpler to produce since additional treatment of the electrode surface for uniform alignment of the molecules in the switched-on state, such as, for example, by rubbing, is no longer necessary. Instead, the preferential direction of the tilt or pretilt angle is controlled by a special design of the electrodes.

In so-called MVA ("multidomain vertical alignment") displays, this is usually achieved by the electrodes having protrusions which cause a local pretilt. As a consequence, the LC molecules are aligned parallel to the electrode surfaces in different directions in different, defined regions of the cell on application of a voltage. "Controlled" switching is thereby achieved, and the formation of interfering disclination lines is prevented. Although this arrangement improves the viewing angle of the display, it results, however, in a reduction in its transparency to light. A further development of MVA uses protrusions on only one electrode side, while the opposite electrode has slits, which improves the transparency to light. The slitted electrodes generate an inhomogeneous electric field in the LC cell on application of a voltage, meaning that controlled switching is still achieved. For further improvement of the transparency to light, the separations between the slits and protrusions can be increased, but this in turn results in a lengthening of the response times. In so-called PVA ("patterned VA") displays, protrusions are rendered completely superfluous in that both electrodes are structured by means of slits on the opposite sides, which results in increased contrast and improved transparency to light but is technologically difficult and makes the display more sensitive to mechanical influences ("tapping", etc.). For many applications, such as, for example, monitors and especially TV screens, however, a shortening of the response times and an improvement in the contrast and luminance (transmission) of the display are demanded.

A further development are displays of the so-called PS ("polymer sustained") or PSA ("polymer sustained alignment") type, for which the term "polymer stabilised" is also occasionally used. In these, a small amount (for example 0.3% by weight, typically < 1% by weight) of one or more polymerisable, compound(s), preferably polymerisable monomeric compound(s), is added to the LC medium and, after filling the LC medium into the display, is polymerised or crosslinked in situ, usually by UV photopolymerisation, optionally while a voltage is applied to the electrodes of the display. The polymerisation is carried out at a temperature where the LC medium exhibits a liquid crystal phase, usually at room temperature. The addition of polymerisable mesogenic or liquid-crystalline compounds, also known as reactive mesogens or "RMs", to the LC mixture has proven particularly suitable.

In the meantime, the PS(A) principle is being used in various conventional LC display modes. Thus, for example, PS-VA, PS-OCB, PS-IPS, PS-FFS, PS-UB-FFS and PS-TN displays are known. The polymerisation of the RMs preferably takes place with an applied voltage in the case of PS-VA and PS-OCB displays, and with or without, preferably without, an applied voltage in the case of PS-IPS displays. As can be demonstrated in test cells, the PS(A) method results in a pretilt in the cell. In the case of PS-VA displays, the pretilt has a positive effect on response times. For PS-VA displays, a standard MVA or PVA pixel and electrode layout can be used. In addition, however, it is also possible, for example, to manage with only one structured electrode side and no protrusions, which significantly simplifies production and at the same time results in very good contrast and in very good transparency to light.

PS-VA displays are described, for example, in EP 1 170 626 A2, US 6,861,107, US 7,169,449, US 2004/0191428 A1, US 2006/0066793 A1 and US 2006/0103804 A1. PS-OCB displays are described, for example, in T.-J- Chen et al., Jpn. J. Appl. Phys. 45, 2006, 2702-2704 and S. H. Kim, L.-C- Chien, Jpn. J. Appl. Phys. 43, 2004, 7643-7647. PS-IPS displays are described, for example, in US 6,177,972 and Appl. Phys. Lett. 1999, 75(21), 3264. PS-TN displays are described, for example, in Optics Express 2004, 12(7), 1221.

Below the layer formed by the phase-separated and polymerised RMs which induce the above mentioned pretilt angle, the PSA display typically contains an alignment layer on one or both of the substrates forming the display cell, that provides the initial alignment of the LC molecules before the polymer stabilisation step. The alignment layer is usually applied on the electrodes (where such electrodes are present) such that it is in contact with the LC medium and induces initial alignment of the LC molecules. The alignment layer may comprise or consist of, for example, a polyimide, which may also be rubbed, or may be prepared by a photoalignment method.

Like the conventional LC displays described above, PSA displays can be operated as active-matrix or passive-matrix displays. In the case of active-matrix displays, individual pixels are usually addressed by integrated, non-linear active elements, such as, for example, transistors (for example thin-film transistors ("TFTs")), while in the case of passive-matrix displays, individual pixels are usually addressed by the multiplex method, as known from the prior art.

In particular for monitor and especially TV applications, optimisation of the response times, but also of the contrast and luminance (thus also transmission) of the LC display continues to be demanded. The PSA method can provide significant advantages here. In particular in the case of PS-VA, PS-IPS and PS-FFS displays, a shortening of the response times, which correlate with a measurable pretilt in test cells, can be achieved without significant adverse effects on other parameters.

Another problem observed in prior art is that the use of conventional LC media in LC displays, including but not limited to displays of the PSA type, often leads to the occurrence of mura in the display, especially when the LC medium is filled in the display cell manufactured using the one drop filling (ODF) method. This phenomenon is also known as "ODF mura". It is therefore desirable to provide LC media which lead to reduced ODF mura.

Another problem observed in prior art is that LC media for use in PSA displays, including but not limited to displays of the PSA type, do often exhibit high viscosities and, as a consequence, high switching times. In order to reduce the viscosity and switching time of the LC medium, it has been suggested in prior art to add LC compounds with an alkenyl group. However, it was observed that LC media containing alkenyl compounds often show a decrease of the reliability and stability, and a decrease of the VHR especially after exposure to UV radiation. Especially for use in PSA displays this is a considerable disadvantage because the photopolymerisation of the RMs in the PSA display is usually carried out by exposure to UV radiation, which may cause a VHR drop in the LC medium.

Especially in view of mobile devices there is great demand for displays with high transmission, which enable the use of less intensive backlight, and, hence, leads to longer battery lifetime. Alternatively, of course, displays with higher brightness can be achieved having improved contrast especially under ambient light.

In addition there is a great demand for PSA displays, and LC media and polymerisable compounds for use in such PSA displays, which enable a high specific resistance at the same time as a large working-temperature range, short response times, even at low temperatures, and a low threshold voltage, a low pretilt angle, a multiplicity of grey shades, high contrast and a broad viewing angle, have high reliability and high values for the VHR after UV exposure, and, in case of the polymerisable compounds, have low melting points and a high solubility in the LC host mixtures. In PSA displays for mobile applications, it is especially desired to have available LC media that show low threshold voltage and high birefringence.

The invention is based on the object of providing novel suitable materials, in LC media comprising reactive mesogens (RM), for use in PSA displays, which do not have the disadvantages indicated above or do so to a reduced extent.

In particular, the invention is based on the object of LC media comprising RMs for use in PSA displays, which enable displays with high transmittance and at the same time very high specific resistance values, high VHR values, high reliability, low threshold voltages, short response times, high birefringence, show good UV absorption especially at longer wavelengths, enable quick and complete polymerisation of the RMs, allow the generation of a low pretilt angle, preferably as quickly as possible, enable a high stability of the pretilt even after longer time and/or after UV exposure, reduce or prevent the occurrence of "image sticking" and "ODF mura" in the display, and in case of the RMs polymerise as rapidly and completely as possible and show a high solubility in the LC media which are typically used as host mixtures in PSA displays.

There is thus still a great demand for LC media optionally comprising polymerisable compounds for use in VA or PSA or FFS displays, which do not show the drawbacks as described above, or only do so to a small extent, and have improved properties.

These objects have been achieved in accordance with the present invention by materials and processes as described in the present application. In particular, it has been found, surprisingly, that the use of liquid crystalline hosts as described hereinafter allows to overcome the disadvantages of the media known from prior art.

The invention relates to an LC medium comprising
a) one or more compounds of formula I 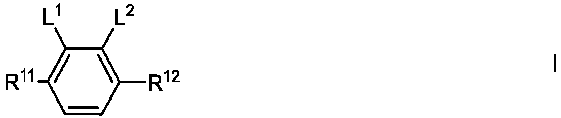 in which
   - R¹¹, R¹²: identically or differently, denote H, a straight chain or branched alkyl or alkenyl or alkoxy radical having 1 to 15 C atoms, where one or more CH₂ groups in these radicals may each be replaced, independently of one another, by 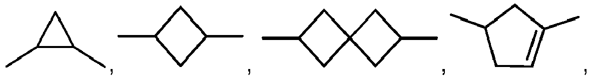 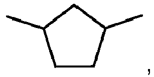 -C≡C-, -CF₂O-, -OCF₂-, -O-, -CO-O- or -O-CO- in such a way that O atoms are not linked directly to one another, and in which, in addition, one or more H atoms may be replaced by halogen,
   - L¹, L²: identically or differently, denote F or CI, preferably both F, and
b) one or more compounds of the formula IIBa 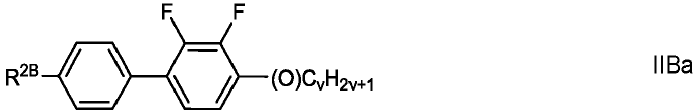 in which
   - R^{2B}: denotes alkyl or alkoxy each having 1 to 7 C atoms or alkenyl having 2 to 7 C atoms,
   - (O): denotes O or a single bond, and
   - v: is an integer from 1 to 5; and
c) one or more compounds of the formula IlDa 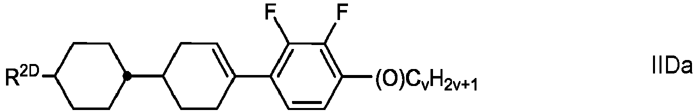 in which
   - R^{2B}: denotes alkyl or alkoxy each having 1 to 7 C atoms or alkenyl having 2 to 7 C atoms,
   - (O): denotes O or a single bond, and
   - v: is an integer from 1 to 5, and
   preferably
d) one or more compounds of formula III 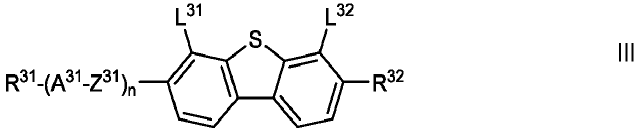 in which
   - R³¹ and R³²: each, independently of one another, denote H, an alkyl or alkoxy radical having 1 to 15 C atoms, where one or more CH₂ groups in these radicals may each be replaced, independently of one another, by 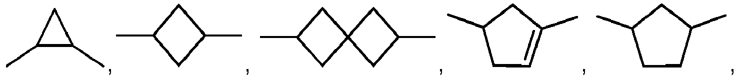 -C≡C-, -CF₂O-, -OCF₂-, -CH=CH-, by -O-, -CO-O- or -O-CO- in such a way that O atoms are not linked directly to one another, and in which, in addition, one or more H atoms may be replaced by halogen,
   - A³¹: on each occurrence, independently of one another, denotes
   a) 1,4-cyclohexylene or 1,4-cyclohexenylene radical, in which one or two non-adjacent CH₂ groups may be replaced by -O- or -S-,
   b) a 1,4-phenylene radical, in which one or two CH groups may be replaced by N, or
   c) a radical from the group consisting of spiro[3.3]heptane-2,6-diyl, 1,4-bicyclo[2.2.2]octylene, naphthalene-2,6-diyl, decahydronaphthalene-2,6-diyl, 1,2,3,4-tetrahydronaphthalene-2,6-diyl, phenanthrene-2,7-diyl and fluorene-2,7-diyl,
   where the radicals a), b) and c) may be mono- or polysubstituted by halogen atoms,
   - Z³¹: on each occurrence independently of one another denotes -CO-O-, -O-CO-, -CF₂O-, -OCF₂-, -CHzO-, -OCH₂-, -CH₂-, -CH₂CH₂-, -(CH₂)₄-, -CH=CH-CH₂O-, -C₂F₄-, -CH₂CF₂-, -CF₂CH₂-, -CF=CF-, -CH=CF-, -CF=CH-, -CH=CH-, -C≡C- or a single bond,
   - L³¹ and L³²: each, independently of one another, denote F, CI, CF₃ or CHF₂, and
   - n: is 0, 1 or 2.

The medium optionally comprises one or more polymerisable compounds of formula R

P-Sp-A¹-(Z¹-A²)_{z}-R R

in which the individual radicals, independently of each other and on each occurrence identically or differently, have the following meanings:
- P: a polymerisable group,
- Sp: a spacer group or a single bond,
- A¹, A²: an aromatic, heteroaromatic, alicyclic or heterocyclic group, preferably having 4 to 25 ring atoms, which may also contain fused rings, and which is unsubstituted, or mono- or polysubstituted by L,
- Z¹: -O-, -S-, -CO-, -CO-O-, -O-CO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -CH=CF-, -CF=CH-, -C≡C-, -CH=CH-CO-O-, -O-CO-CH=CH-, -CH₂-CH₂-CO-O-, -O-CO-CH₂-CH₂-, -CR⁰R⁰⁰-, or a single bond,
- R⁰, R⁰⁰: H or alkyl having 1 to 12 C atoms,
- R: H, L, or P-Sp-,
- L: F, CI, -CN, P-Sp- or straight chain, branched or cyclic alkyl having 1 to 25 C atoms, wherein one or more non-adjacent CH₂-groups are optionally replaced by -O-, -S-, -CO-, -CO-O-, -O-CO-, -O-CO-O- in such a manner that O- and/or S-atoms are not directly connected with each other, and wherein one or more H atoms are each optionally replaced by P-Sp-, F or C!,
- z: 0, 1, 2 or 3,
- n1: 1, 2, 3 or 4.

The invention furthermore relates to an LC display comprising the LC medium described above.

The invention furthermore relates to an LC medium, or LC display as described above, wherein the compounds of formula R are polymerised.

The invention furthermore relates to a process for preparing an LC medium as described above and below, comprising the steps of mixing one or more compounds of the formulae I, IIBa, IIDa and preferably with one or more compounds of the formula III optionally with one or more compounds of formula R, and optionally with further LC compounds, preferably of the formula IIA, IIB, IIC and/or IID, and/or additives.

The invention furthermore relates to the use of LC media according to the invention in PSA displays, in particular the use in PSA displays containing an LC medium, for the production of a tilt angle in the LC medium by in-situ polymerisation of the compound(s) of the formula R in the PSA display, preferably in an electric or magnetic field.

The invention furthermore relates to an LC display comprising an LC medium according to the invention, in particular a VA or PSA display, or an IPS or FFS display, particularly preferably a UB-FFS display.

The invention furthermore relates to the use of LC media according to the invention in polymer stabilised SA-VA displays, and to a polymer stabilised SA-VA display comprising the LC medium according to the invention.

The invention furthermore relates to an LC display of the VA or PSA type comprising two substrates, at least one which is transparent to light, an electrode provided on each substrate or two electrodes provided on only one of the substrates, and located between the substrates a layer of an LC medium that optionally comprises one or more polymerisable compounds and an LC component as described above and below, wherein the polymerisable compounds are polymerised between the substrates of the display.

The invention furthermore relates to a process for manufacturing an LC display as described above and below, comprising the steps of filling or otherwise providing an LC medium, which optionally comprises one or more polymerisable compounds as described above and below, between the substrates of the display, and optionally polymerising the polymerisable compounds.

The PSA displays according to the invention have two electrodes, preferably in the form of transparent layers, which are applied to one or both of the substrates. In some displays, for example in PS-VA displays, one electrode is applied to each of the two substrates.

In a preferred embodiment the polymerisable component is polymerised in the LC display while a voltage is applied to the electrodes of the display.

The polymerisable compounds of the polymerisable component are preferably polymerised by photopolymerisation, very preferably by UV photopolymerisation.

The LC media according to the invention show the following advantageous properties when used in VA or FFS displays:
- improved transmission of the display,
- a high clearing temperature,
- a high voltage-holding-ratio,
- fast switching,
- sufficient stability against heat and/or UV in particular when used outdoors,

The LC media according to the invention show the following advantageous properties when used in PSA displays:
- improved transmission of the display
- a high clearing temperature,
- a suitable tilt generation, which is inside a certain process window,
- fast polymerization leading to minimal residues of RM after the UV-process,
- a high voltage-holding-ratio after the UV-process,
- good tilt stability,
- sufficient stability against heat and/or UV in particular when used outdoors,
- fast switching.

Surprisingly, it has been found that the medium according to the invention in particular is distinguished by a favourably low ratio of rotational viscosity (y1) to elastic constants K₁ and K₃ which enables displays, in particular FFS displays, with very fast switching times.

The medium according to the invention preferably comprises one or more compounds selected from the group of compounds of the formulae IIA, IIB, IIC and IID, 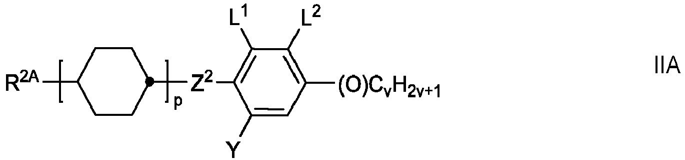 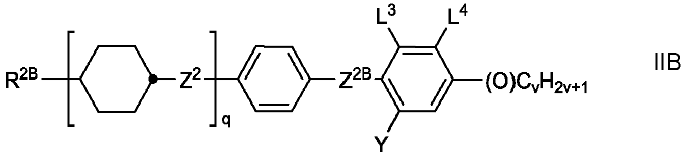 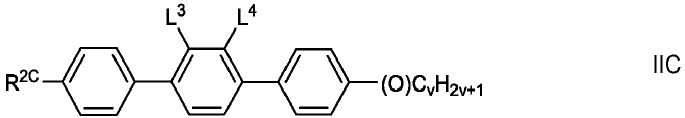 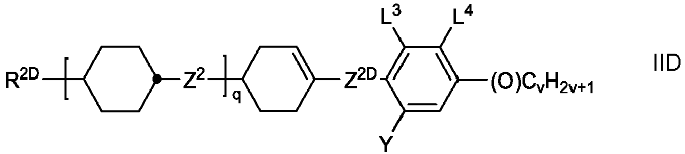 in which
- R^{2A}, R^{2B}, R^{2C} and R^{2D}: identically or differently, denote H, straight chain alkyl or alkoxy having 1 to 15 C atoms, straight chain alkenyl or alkenyloxy having 2 to 15 C atoms or branched alkyl or alkoxy or alkenyl or alkenyloxy having 3 to 15 C atoms, where one or more CH₂ groups in these radicals may each be replaced, independently of one another, by 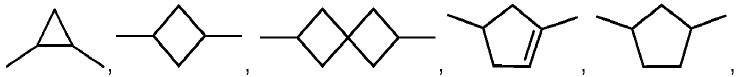 -C≡C-, -CF₂O-, -OCF₂-, -CH=CH-, by -O-, -CO-O- or -O-CO- in such a way that O atoms are not linked directly to one another, and in which one or more H atoms may be replaced by halogen,
- L¹ to L⁴: each, independently of one another, denote F, CI, CF₃ or CHF₂,
- Y: denotes H, F, Cl, CF₃, CHF₂ or CH₃,
- Z², Z^{2B} and Z^{2D}: each, independently of one another, denote a single bond, -CH₂CH₂-, -CH=CH-, -CF₂O-, -OCF₂-, -CHzO-, -OCH₂-, -COO-, -OCO-, -C₂F₄-, -CF=CF- or -CH=CHCH₂O-,
- p: denotes 0, 1 or 2,
- q: denotes 0 or 1, and
- v: denotes an integer from 1 to 6,
wherein the compounds of the formulae IIBa and IIDa are excluded from formulae IIB and IID.

The compounds of formula I are preferably selected from the compounds of the formulae I-1 and I-2: 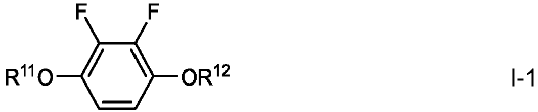 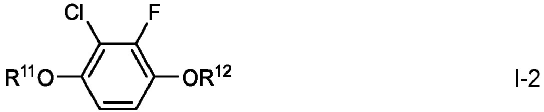 in which R¹¹ and R¹² have the meanings given above for formula I, and preferably R¹¹ and R¹² independently denote alkyl having 1 to 6 C atoms or alkenyl having 2 to 6 C atoms, where at least one of R¹¹ and R¹² denotes alkenyl having 2 to 6 C atoms.

More preferably, the medium according to the invention comprises one or more compounds of formula I-1 in which R¹¹ denotes alkyl having 1 to 6 C atoms and R¹² denotes alkenyl having 2 to 6 C atoms.

Preferred compounds of formula I are selected from the compounds of the formulae I-1-1 to I-1-29:

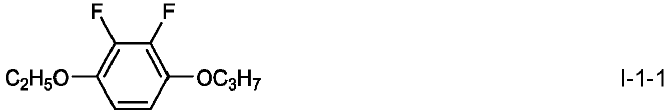

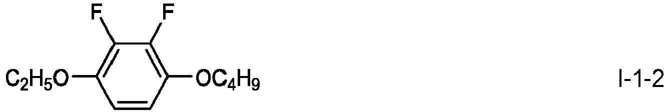

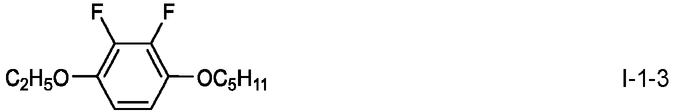

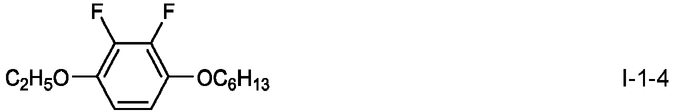

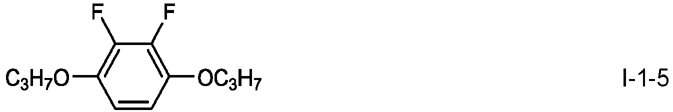

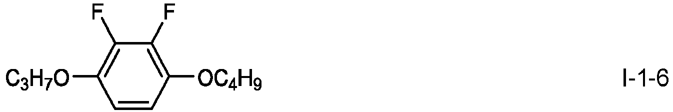

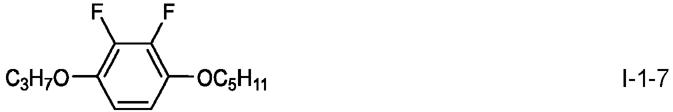

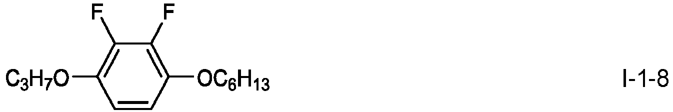

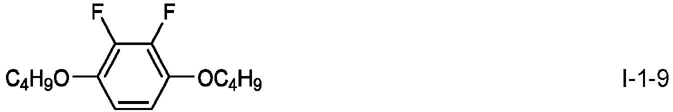

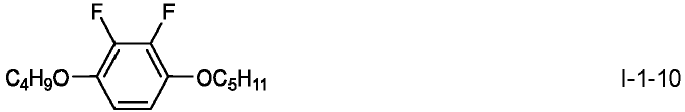

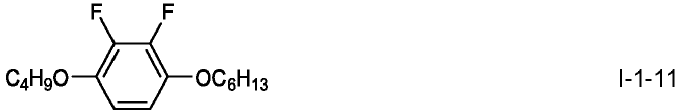

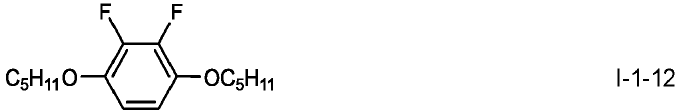

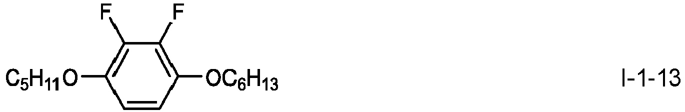

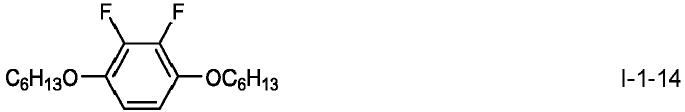

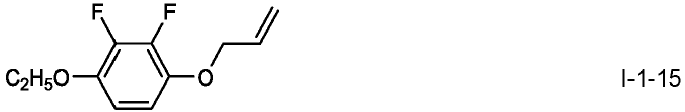

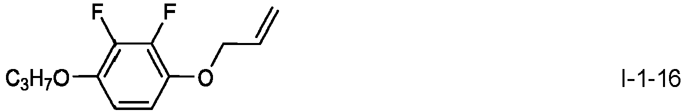

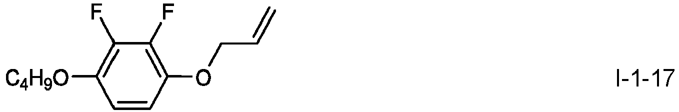

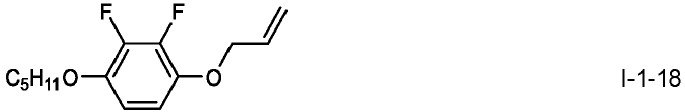

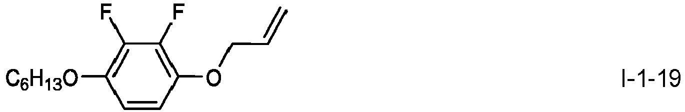

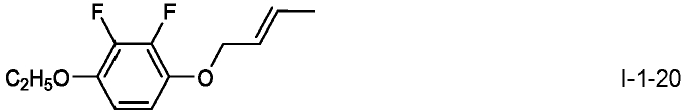

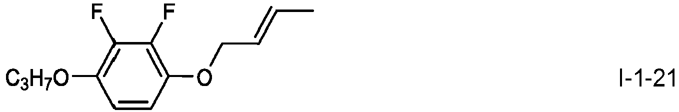

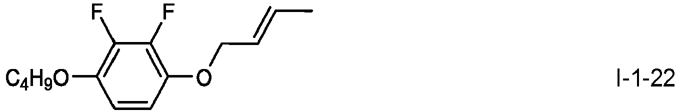

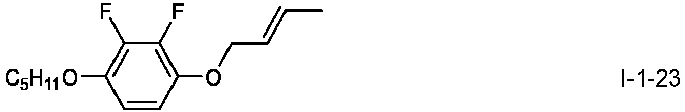

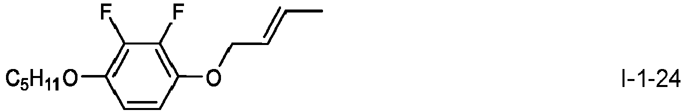

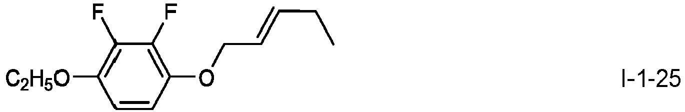

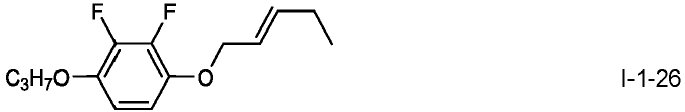

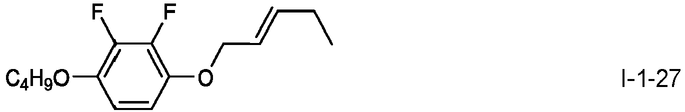

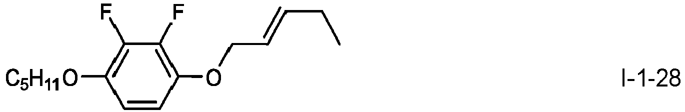

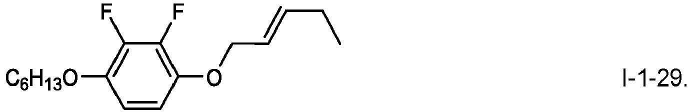

Very preferred are the compounds of the formulae I-1-15 bis I-1-29. Particularly preferred is the compound of the formula I-1-15.

Alternatively, preferably additionally, the medium comprises one or more compounds of formula I selected from the compounds of the formulae IA-1 to IA-23

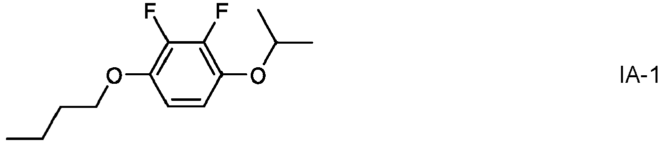

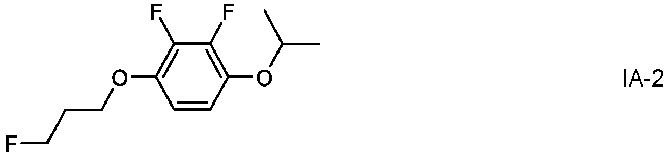

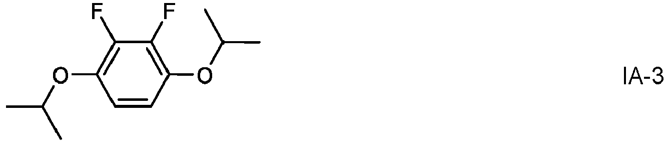

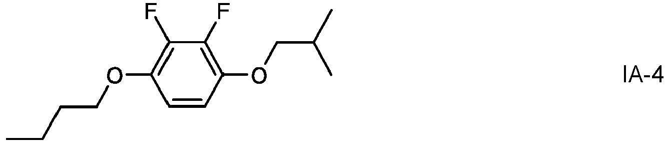

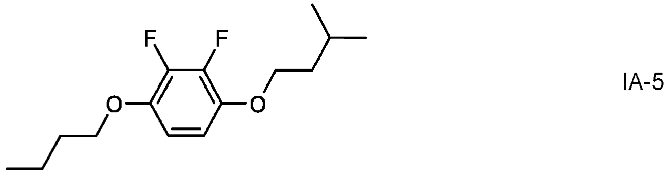

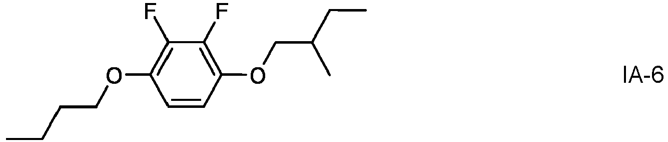

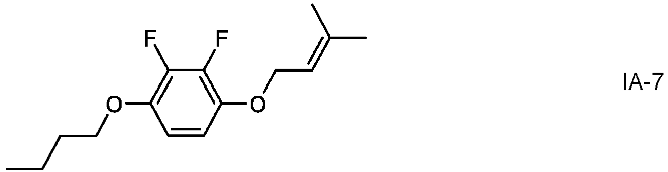

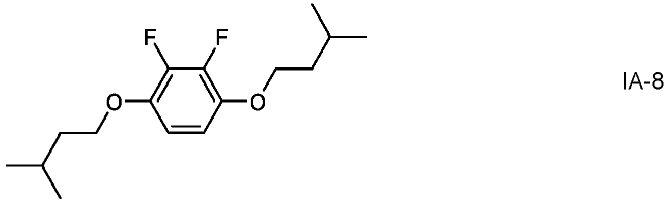

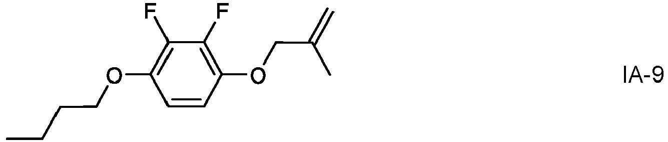

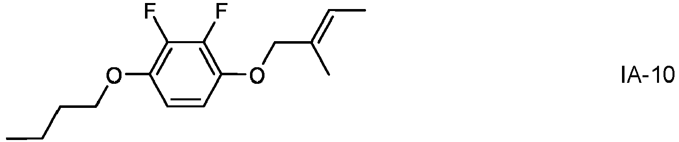

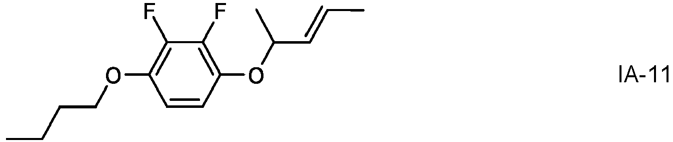

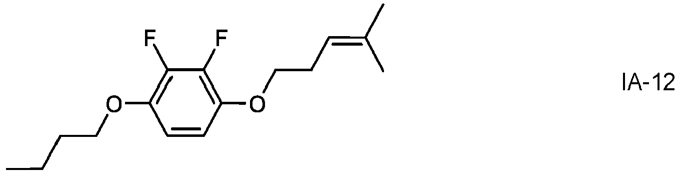

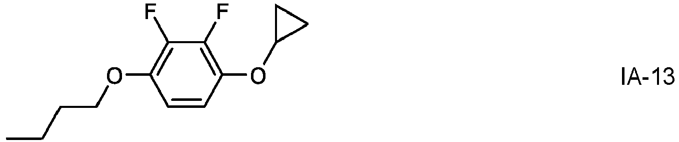

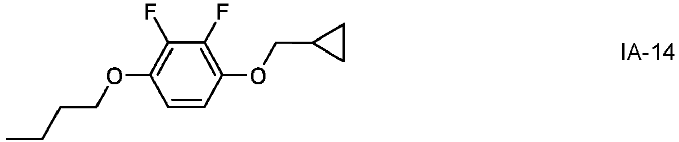

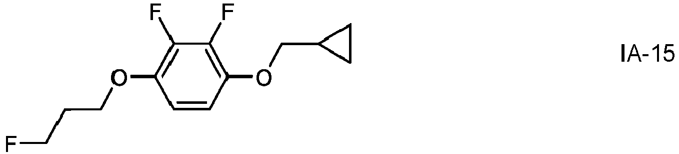

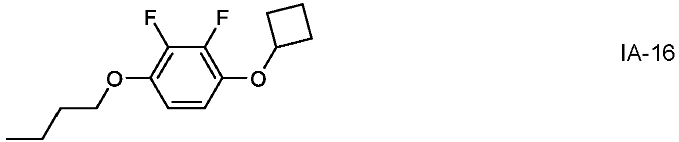

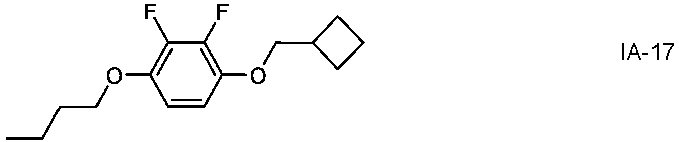

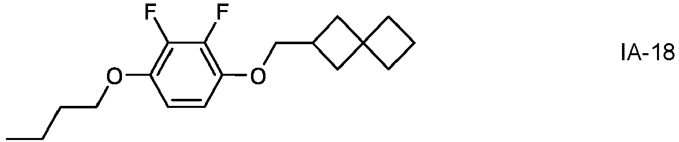

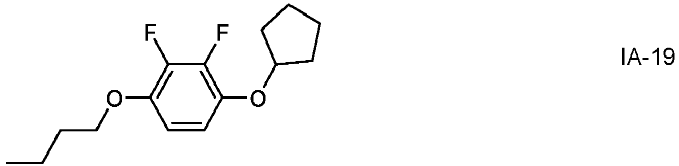

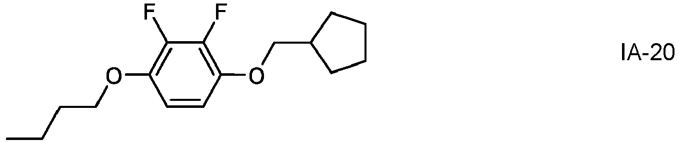

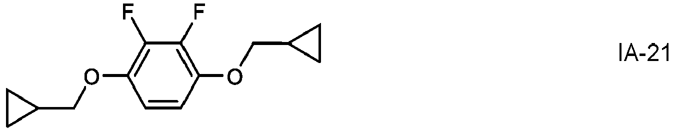

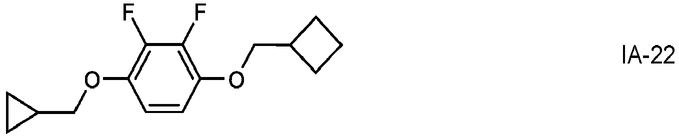

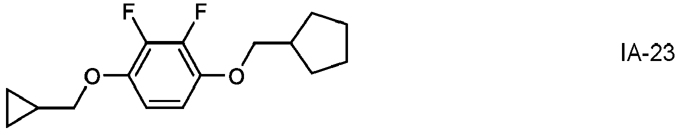

By adding a total amount of 0.5 to 2% of one or more compounds of the formulae IA-1 to IA-23 to the medium according to the invention, an improved low-temperature stability (LTS) is observed.

Preferred compounds of the formulae IIA, IIB, IIC and IID are indicated below: 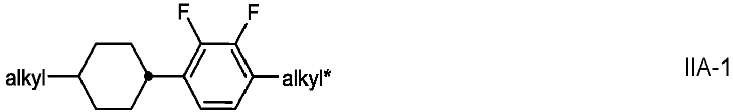 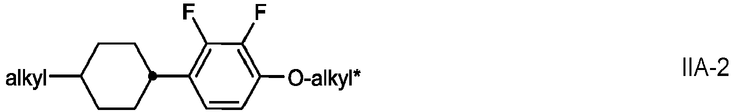 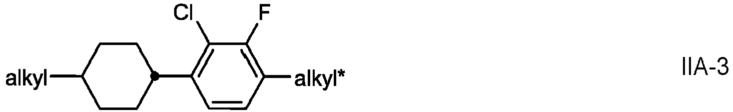 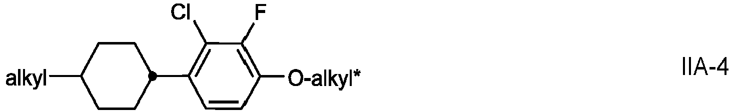 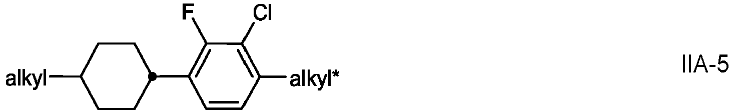 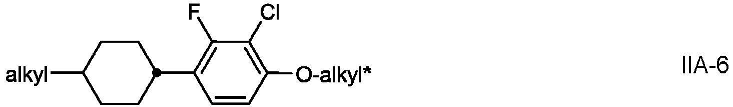 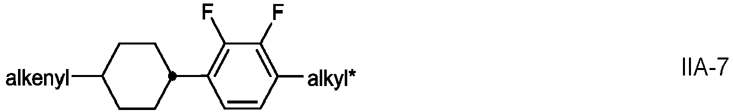 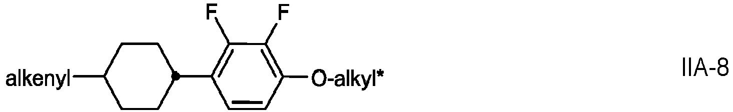 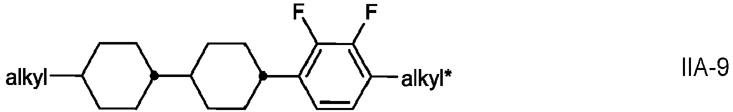 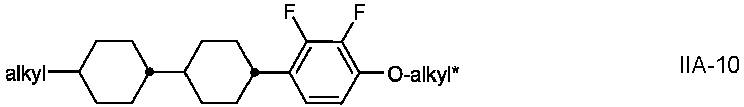 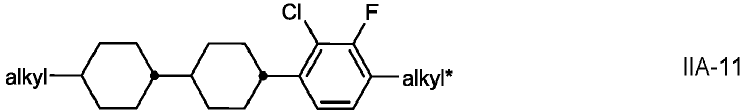 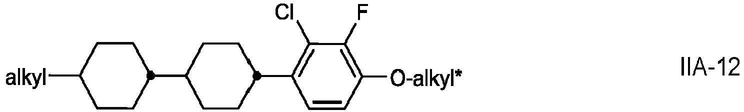 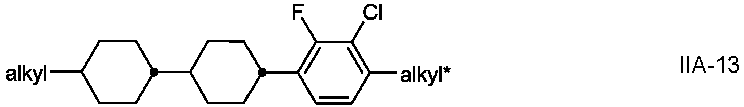 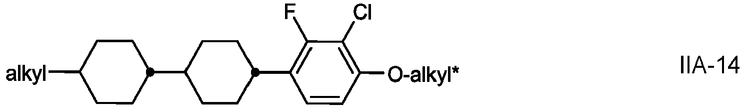 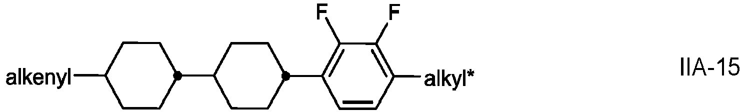 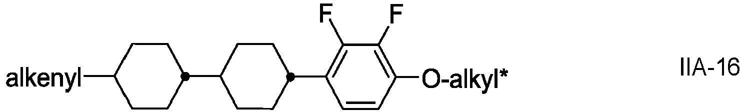 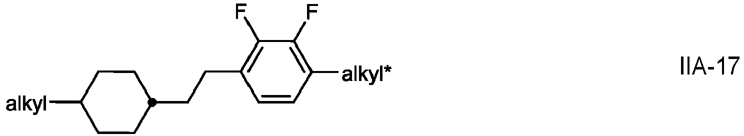 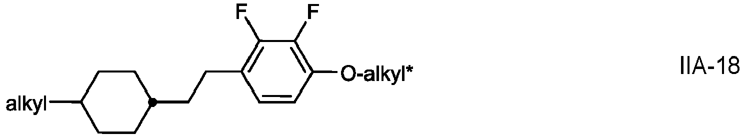 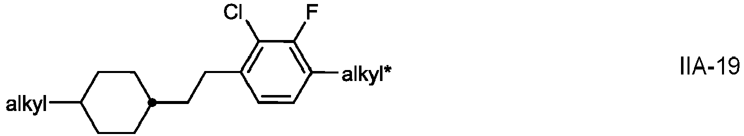 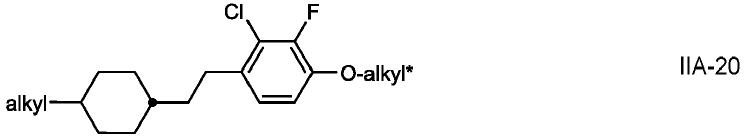 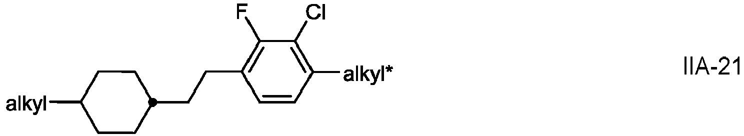 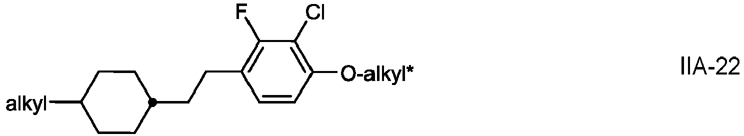 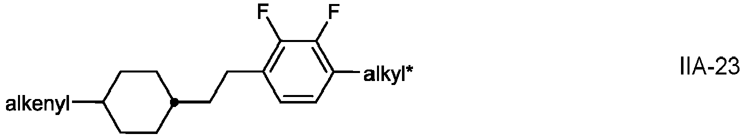 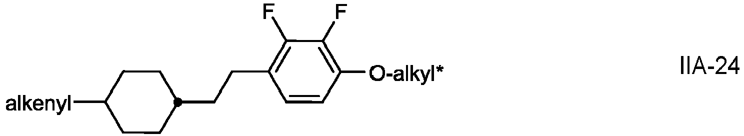 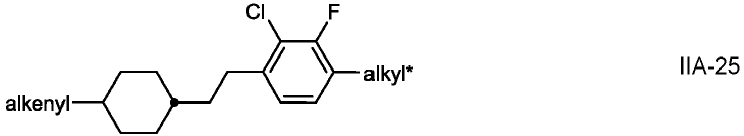 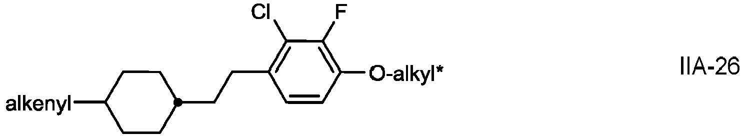 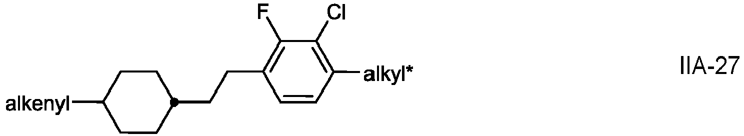 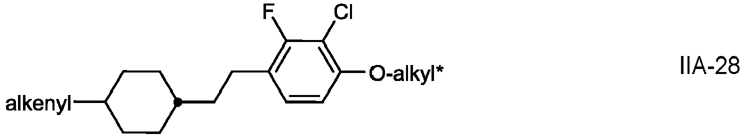 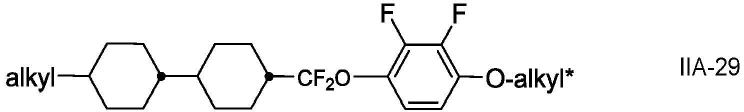 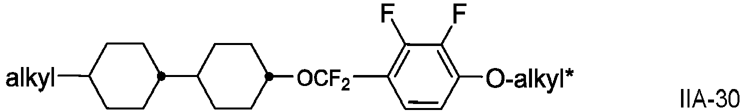 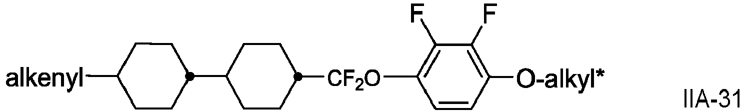 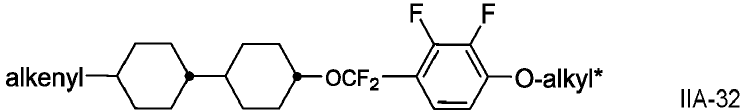 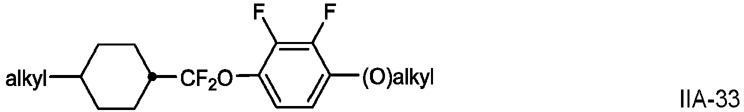 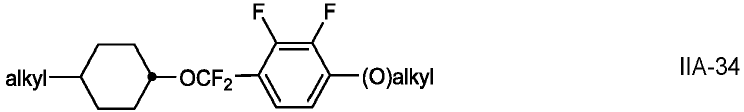 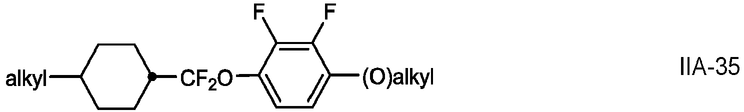 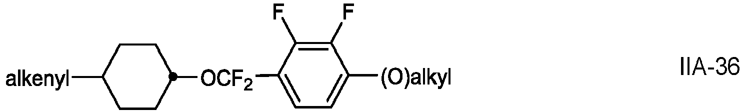 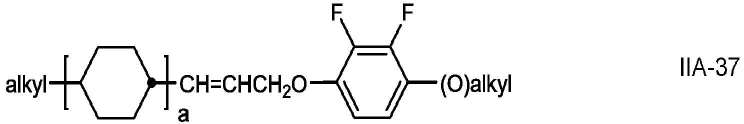 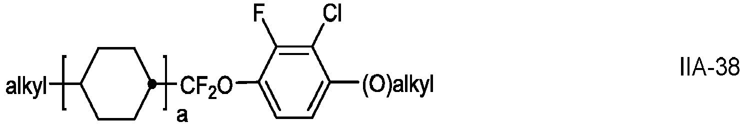 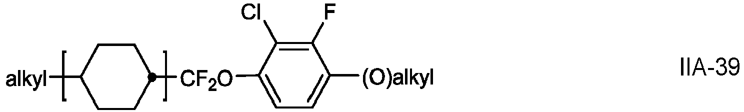 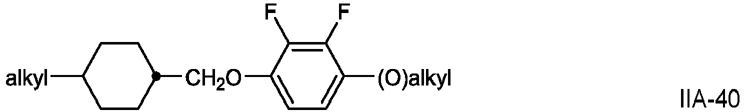 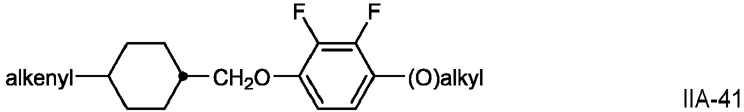 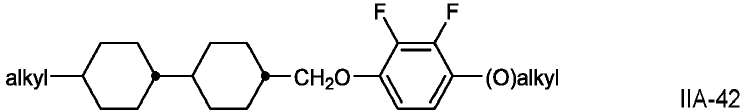 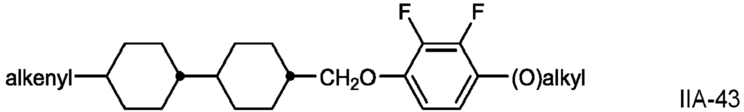 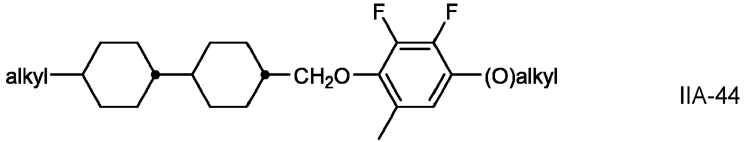 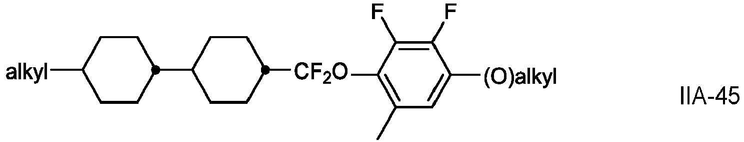 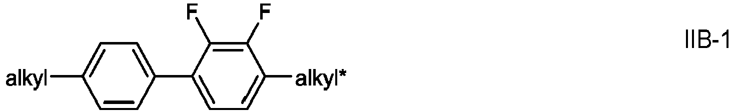 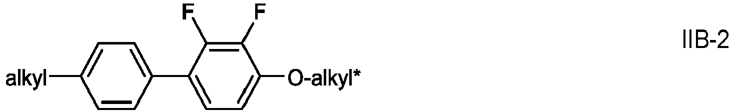 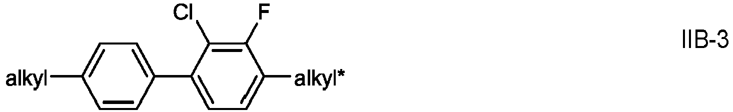 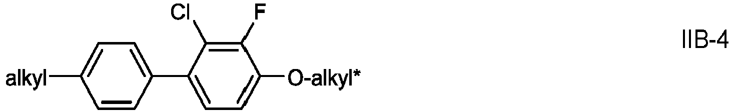 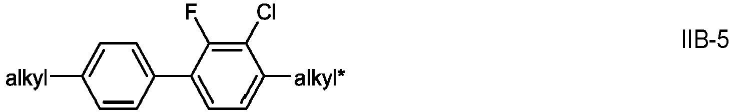 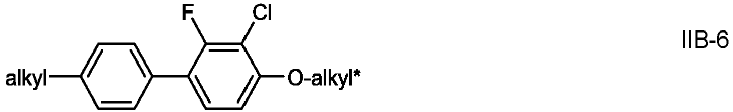 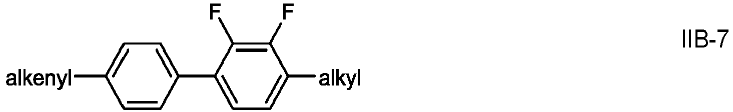 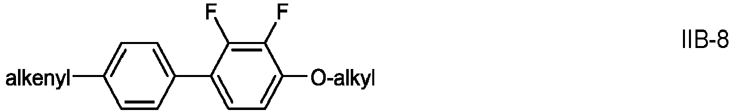 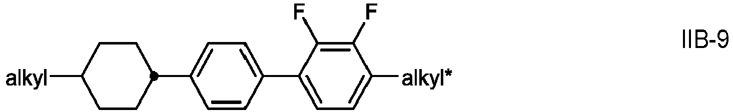 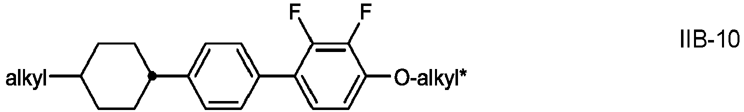 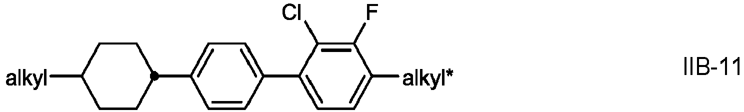 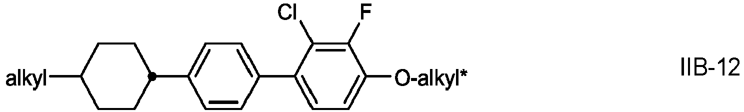 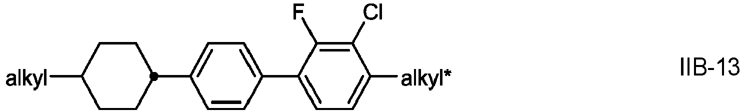 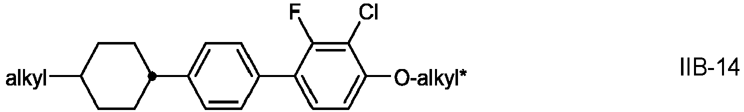 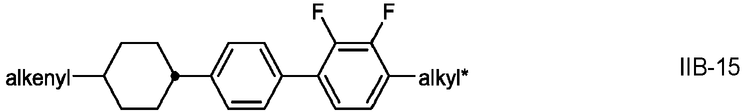 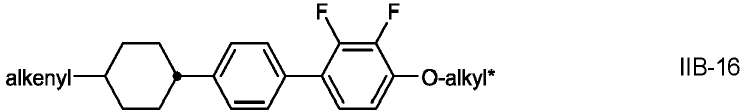 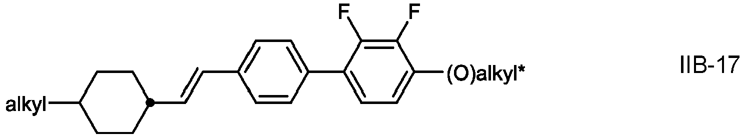 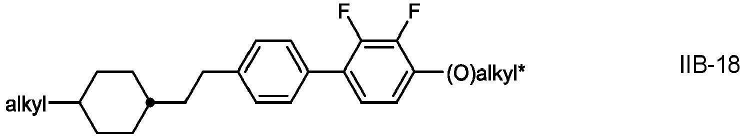 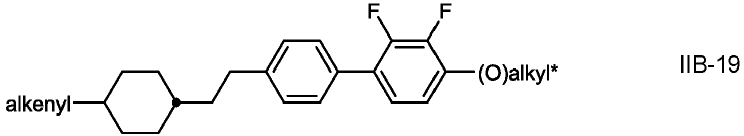 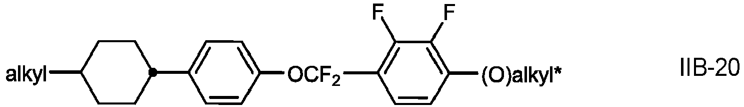 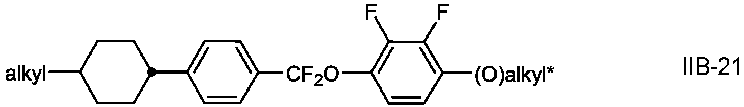 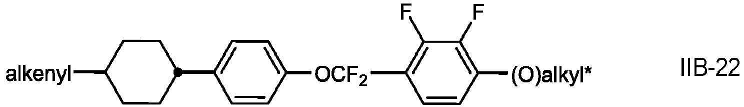 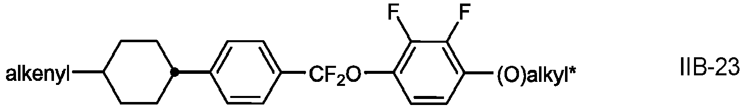 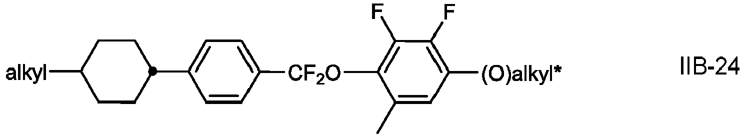 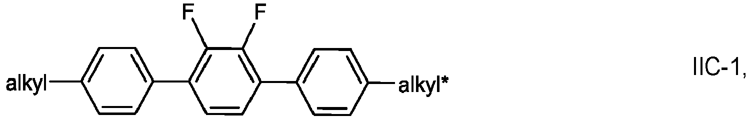 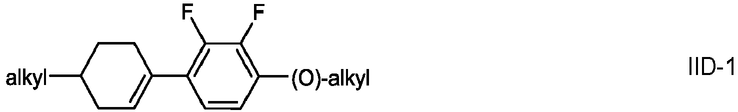 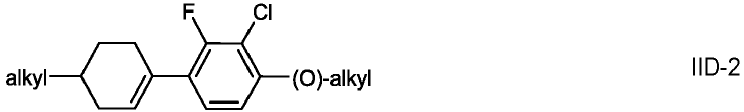 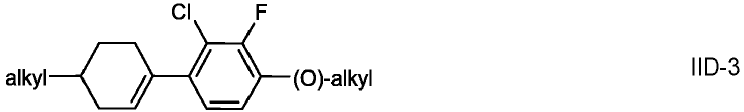 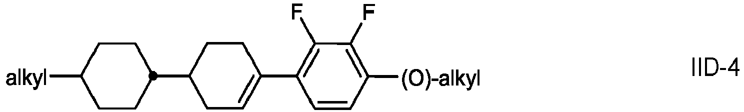 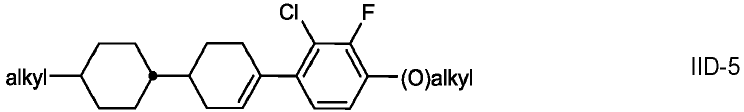 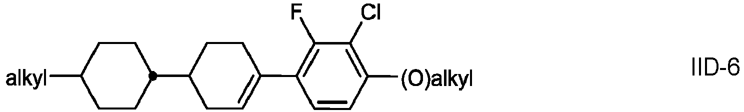 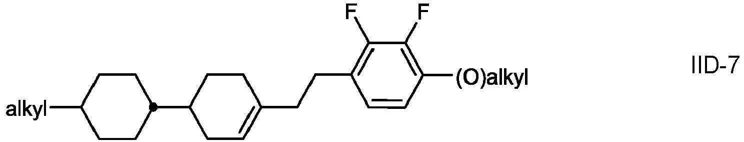 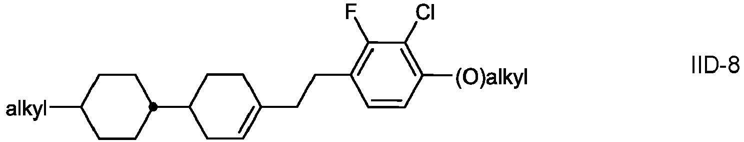 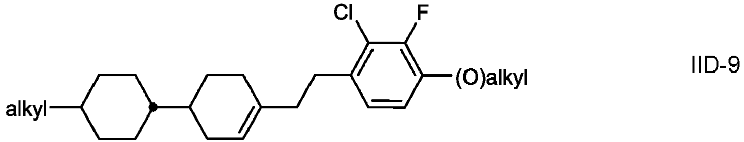 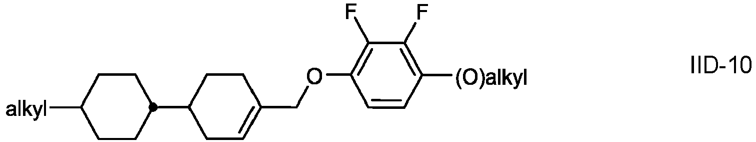 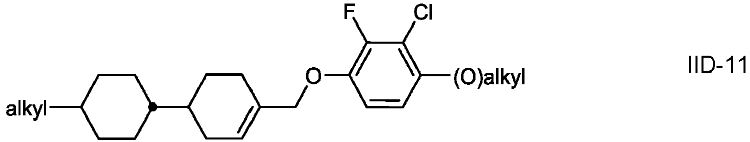 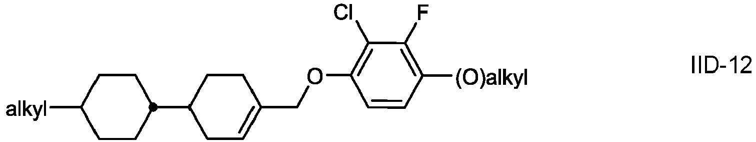 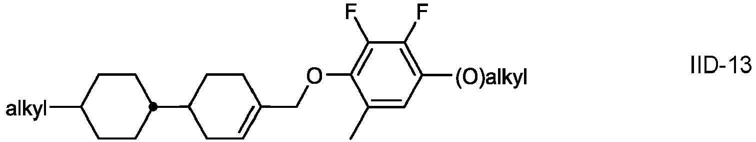 in which the parameter a denotes 1 or 2, alkyl and alkyl* each, independently of one another, denote a straight-chain alkyl radical having 1-6 C atoms, and alkenyl denotes a straight-chain alkenyl radical having 2-6 C atoms, and (O) denotes an oxygen atom or a single bond. Alkenyl preferably denotes CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.

Very preferred compounds of the formula IID are compounds of the formula IID-10 selected from the following sub-formulae:

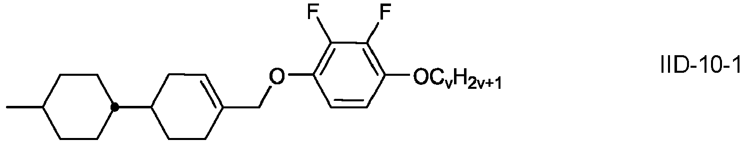

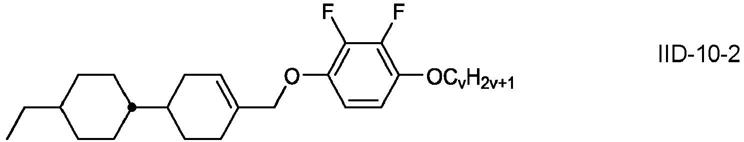

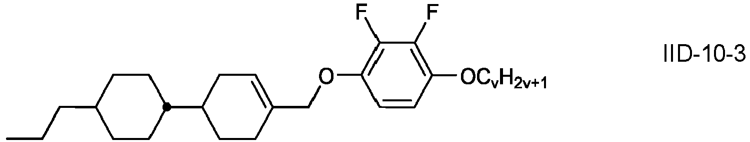

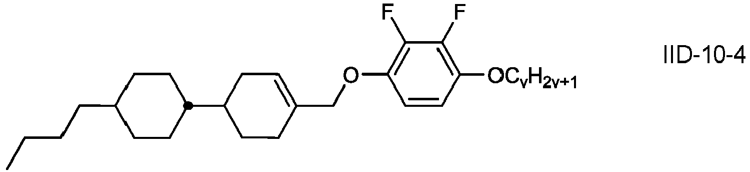

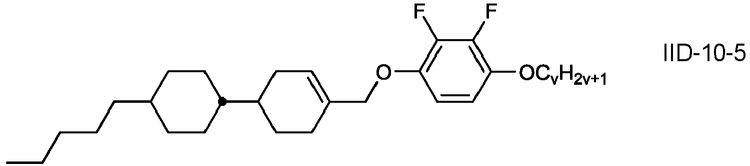

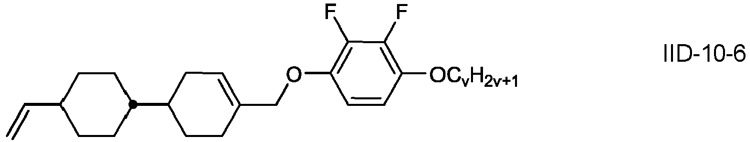

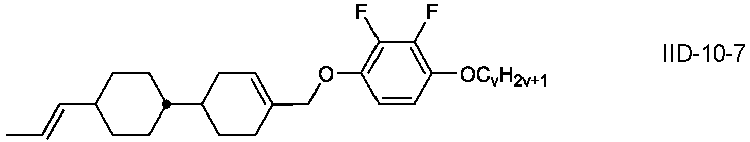

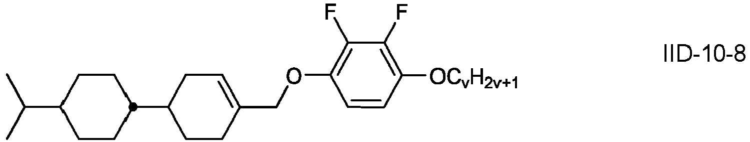

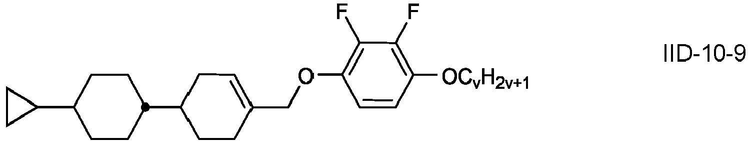

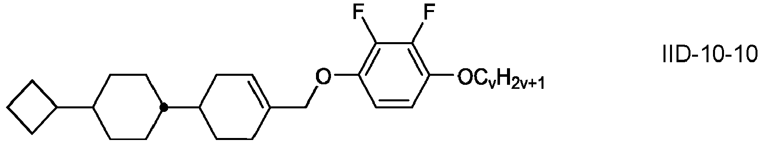

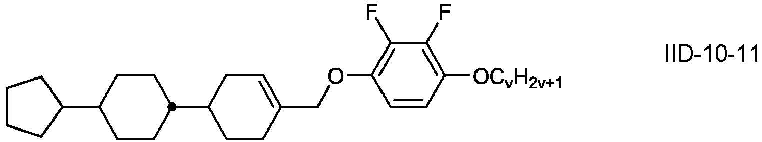

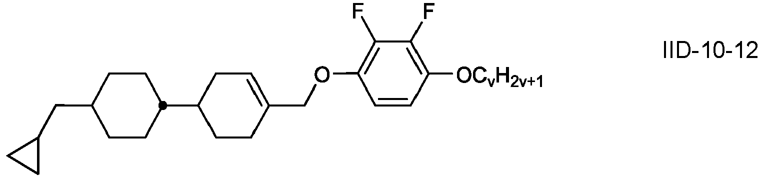

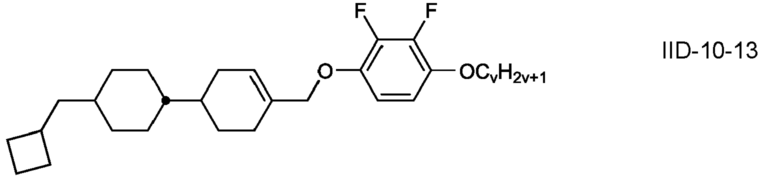

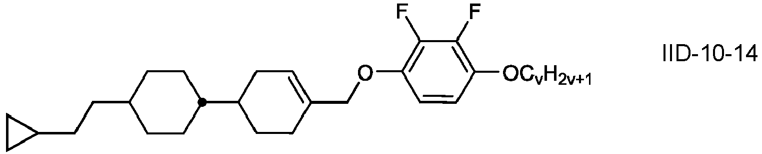

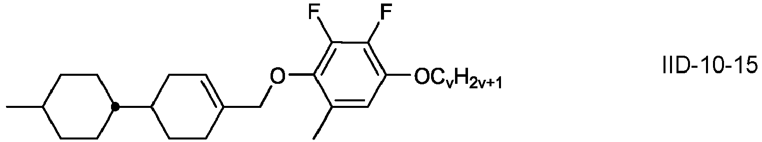

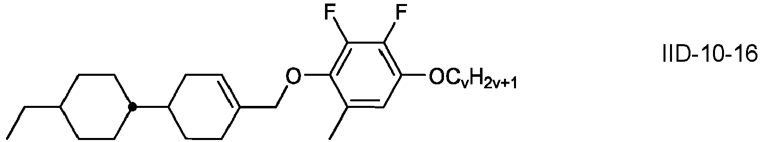

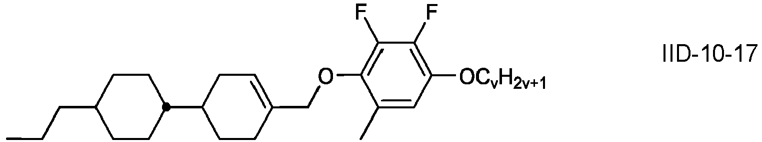

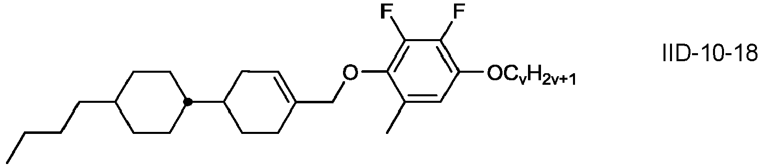

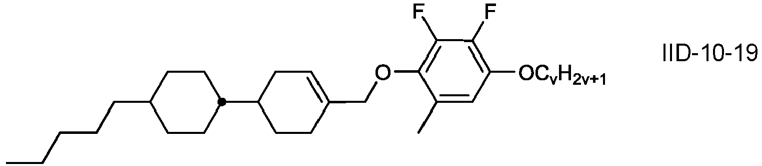

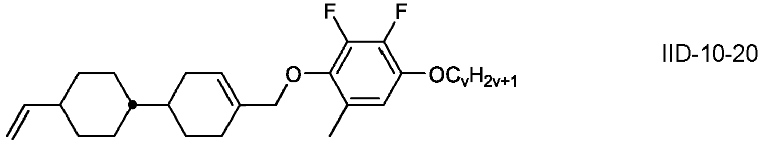

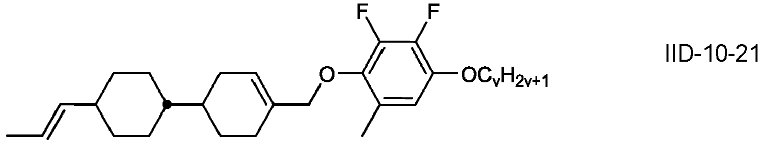

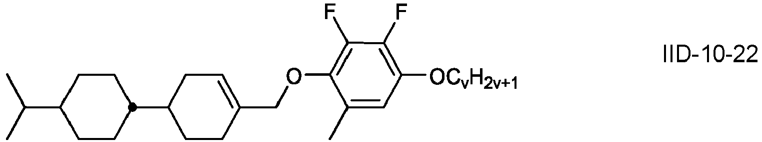

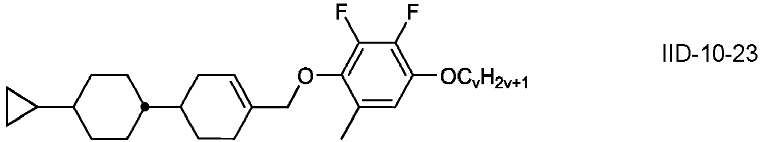

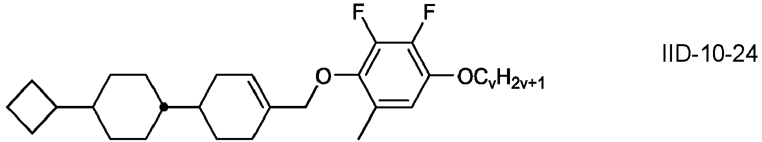

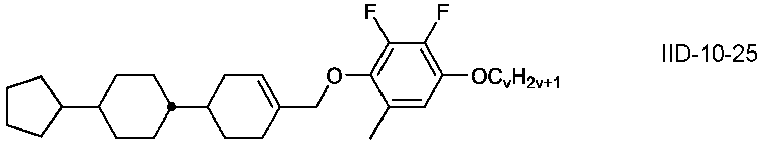

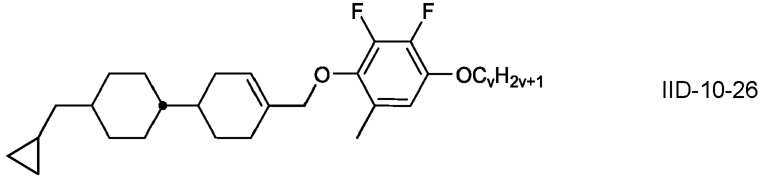

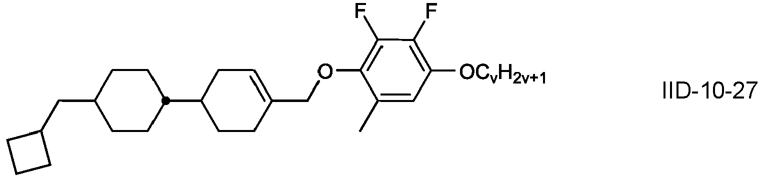

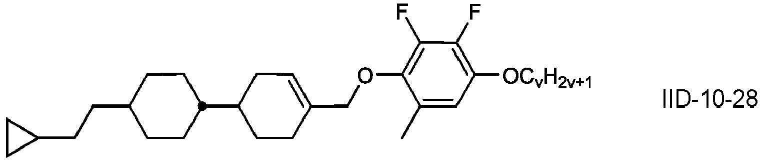

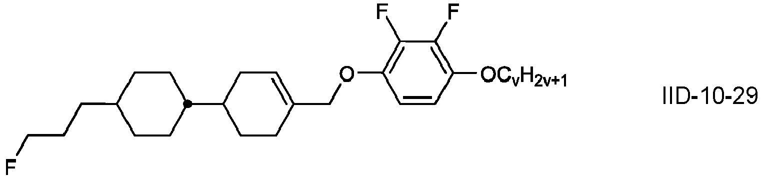

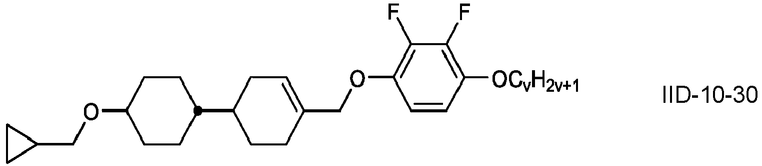

In a preferred embodiment, the medium comprises one or more compounds of formula IID-10a 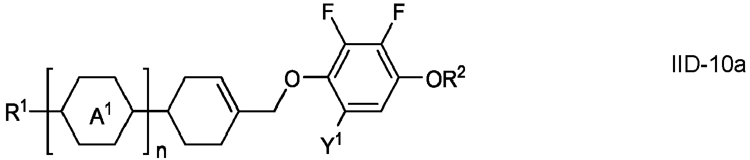
in which the occurring groups and parameters have the meanings given above under formula IID, and
R² denotes 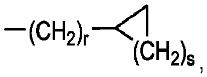 in which r is 0, 1, 2, 3, 4, 5 or 6 and s is 1, 2 or 3.

Preferred compounds of formula IID-10a are the compounds IID-10a-1 to IID-10a-14.

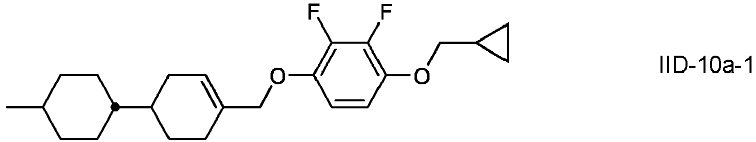

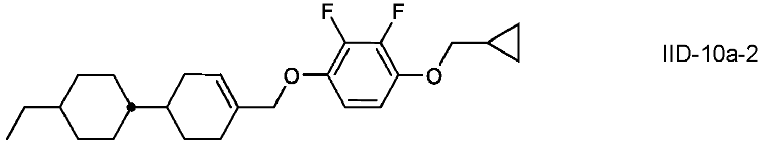

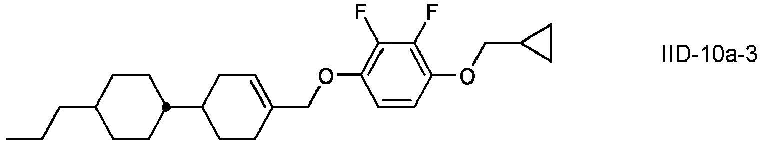

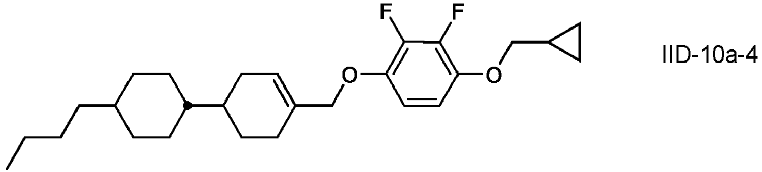

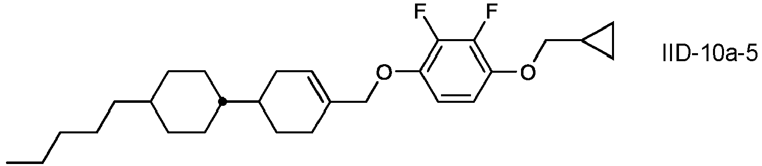

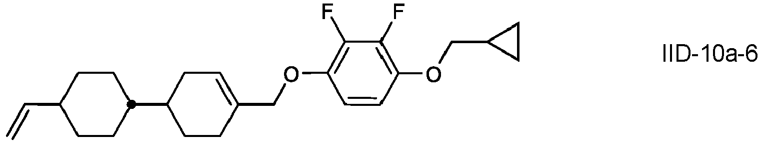

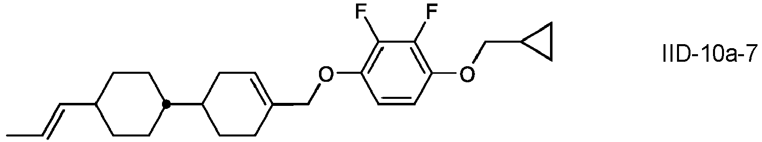

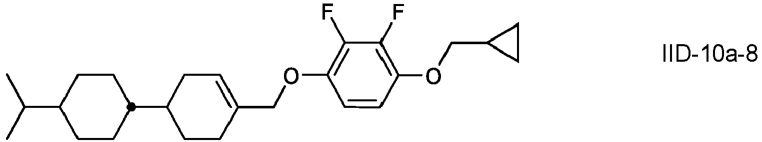

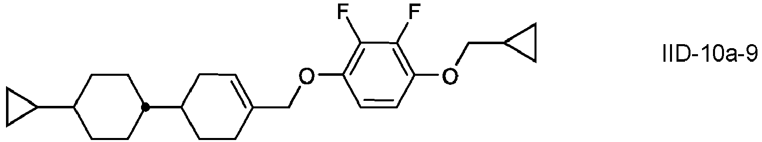

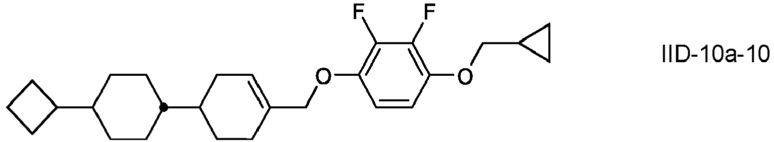

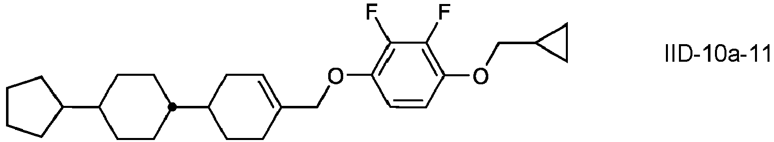

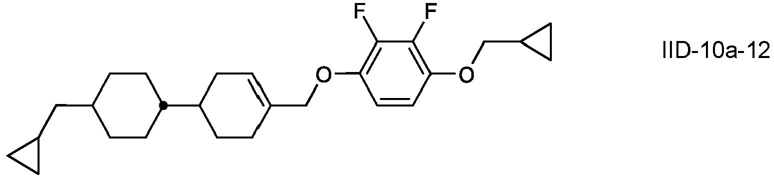

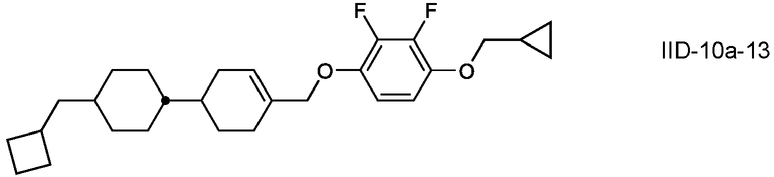

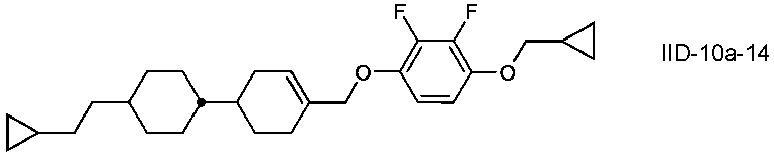

Particularly preferred mixtures according to the invention comprise one or more compounds of the formulae IIA-2, IIA-8, IIA-10, IIA-16, IIA-18, IIA-40, IIA-41, IIA-42, IIA-43, IIB-2, IIB-10, IIB-16, IIC-1, IID-4 and IID-10.

Preferred media according to the invention comprise at least one compound of the formula IIC-1, 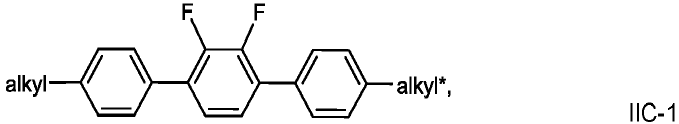 in which alkyl and alkyl* have the meanings indicated above, preferably in amounts of 0.5% to 5 % by weight, in particular 1% to 3 % by weight.

In particular, the medium comprises one or more compounds of the formula IIA-2 selected from the following sub-formulae:

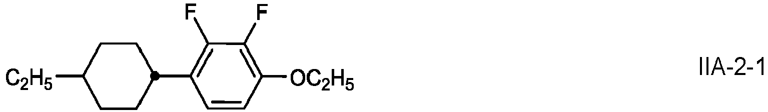

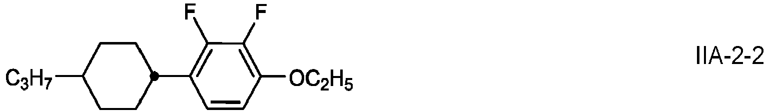

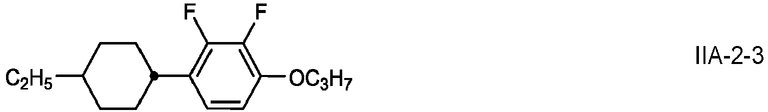

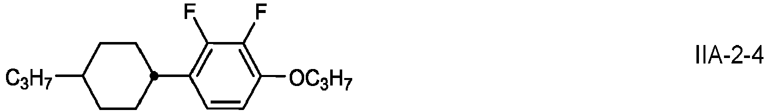

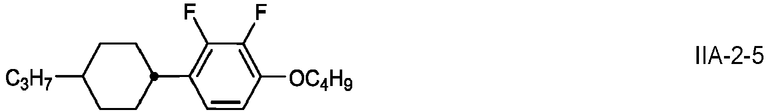

Alternatively, preferably in addition to the compounds of the formulae IIA-2-1 to IIA-2-5, the medium comprises one or more compounds of the formulae IIA-2a-1 to IIA-2a-5:

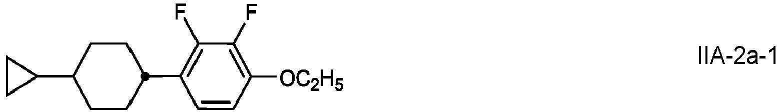

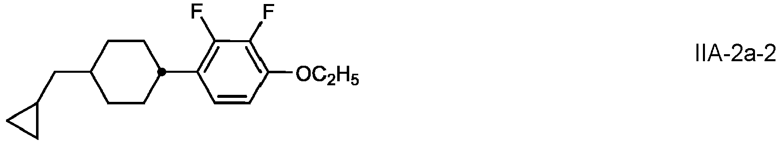

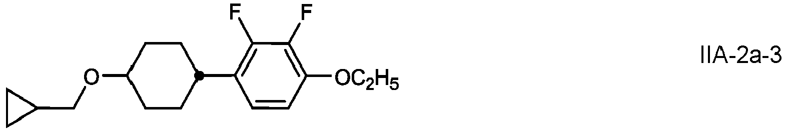

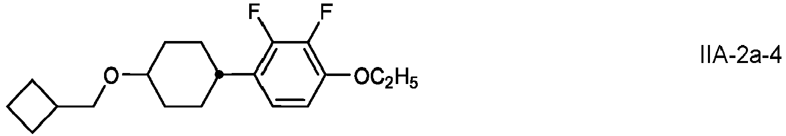

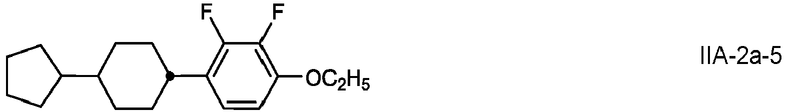

In particular, the medium comprises one or more compounds of the formula IIA-10 selected from the following sub-formulae:

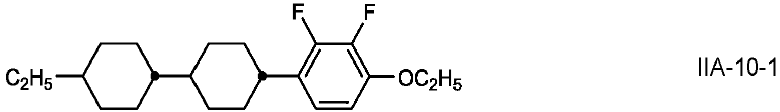

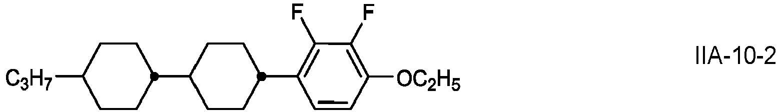

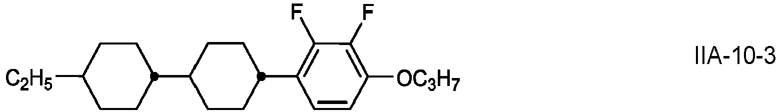

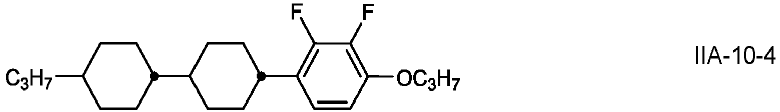

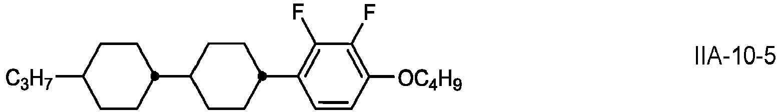

Alternatively, preferably in addition to the compounds of the formulae IIA-10-1 to IIA-10-5, the medium comprises one or more compounds of the formulae IIA-10a-1 to IIA-10a-5:

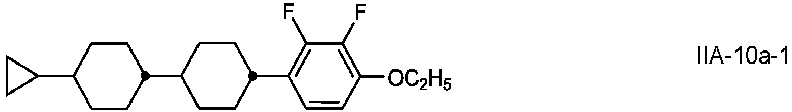

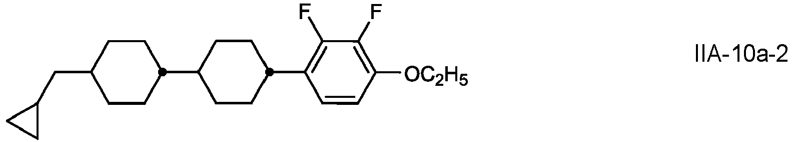

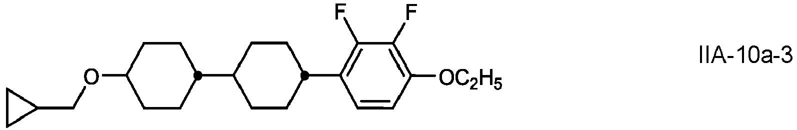

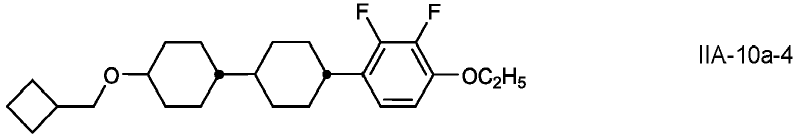

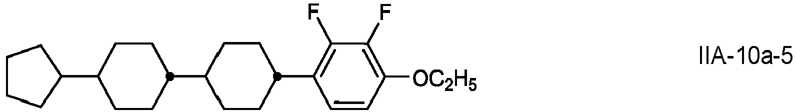

In particular, the medium comprises one or more compounds of the formula IIB-10 selected from the following sub-formulae:

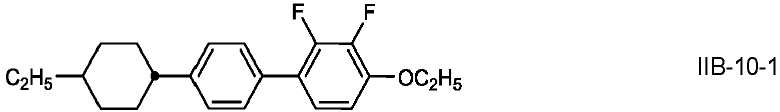

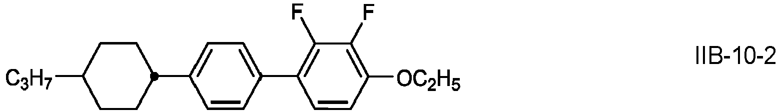

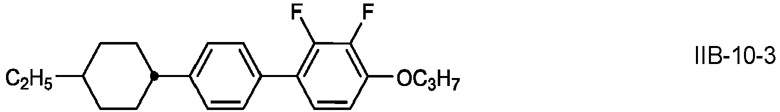

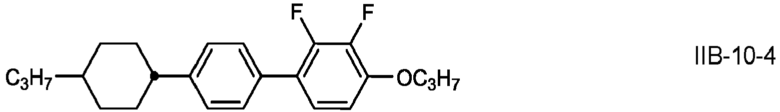

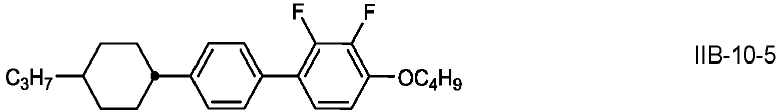

Alternatively, preferably in addition to the compounds of the formulae IIB-10-1 to IIB-10-5, the medium comprises one or more compounds of the formulae IIB-10a-1 to IIB-10a-5:

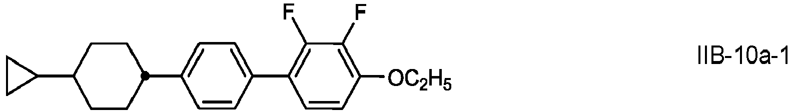

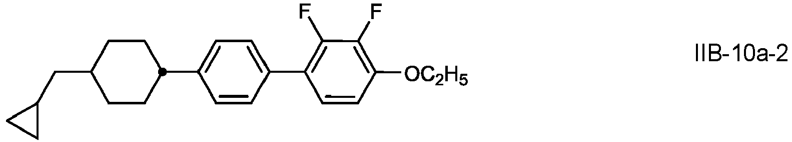

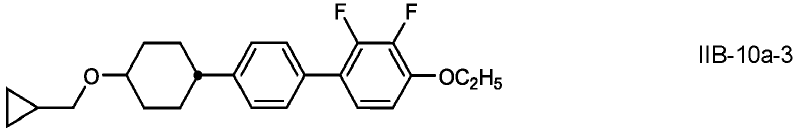

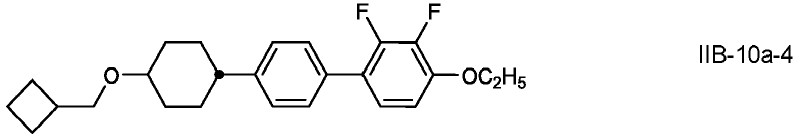

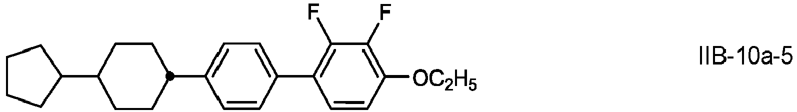

The compounds of formula III are preferably selected from the compounds of the formula !!!-1 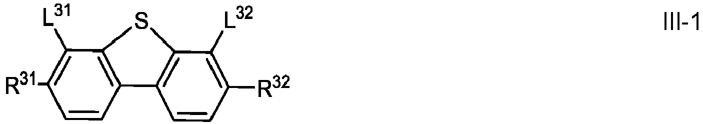
in which the occurring groups have the meanings given under formula III above and preferably
R³¹ and R³² each, independently of one another, denote an alkyl or alkoxy radical having 1 to 15 C atoms or an alkenyl radical having 2 to 15 C atoms, more preferably one or both of them denote an alkoxy radical having 1 to 7 C atoms, and
L³¹ and L³² preferably denote F.

The liquid crystal medium according to the invention preferably comprises one, two or more compounds of formula !!!-1.

Preferably, the compounds of the formula !!!-1 are selected from the group of compounds of formulae III-1-1 to !!!-1-10, preferably of formula !!!-1-6, 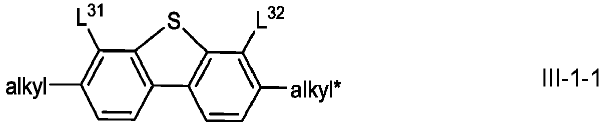 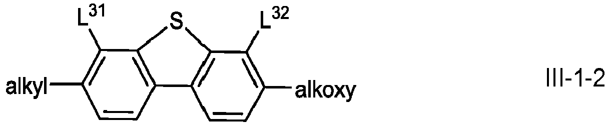 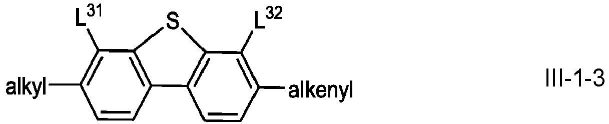 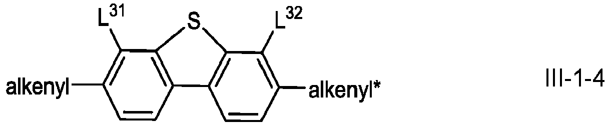 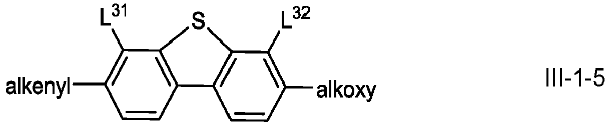 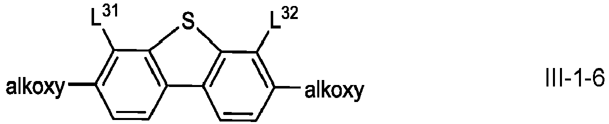 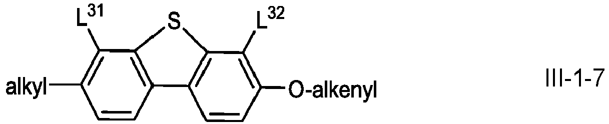 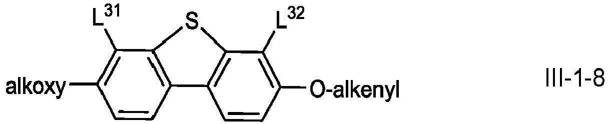 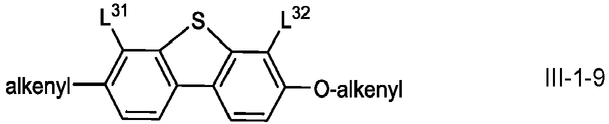 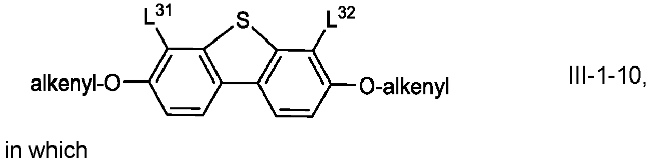 alkyl and alkyl* each, independently of one another, denote a straight-chain alkyl radical having 1-6 C atoms, alkenyl and alkenyl* each, independently of one another, denote a straight-chain alkenyl radical having 2-6 C atoms, alkoxy and alkoxy* each, independently of one another, denote a straight-chain alkoxy radical having 1-6 C atoms, and L³¹ and L³² each, independently of one another, denote F or CI, preferably both F.

In a preferred embodiment, the medium according to the invention additionally comprises one or more compounds of the formula IIIA 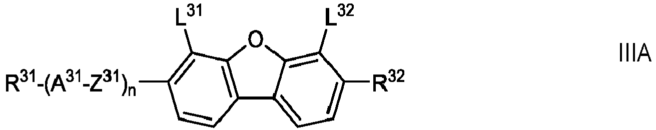 in which the occurring groups and the parameter n have the meanings defined above for formula III.

Preferably, the compounds of the formula IIIA are selected from the group of compounds of the formulae IIIA-1 to IIIA-10, preferably of formula IIIA-6, 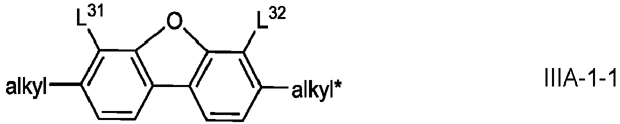 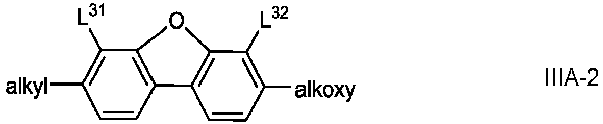 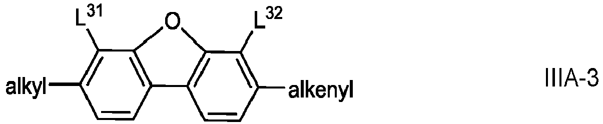 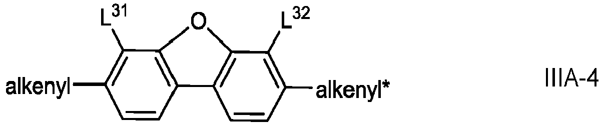 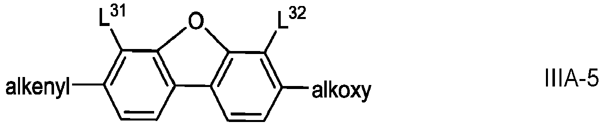 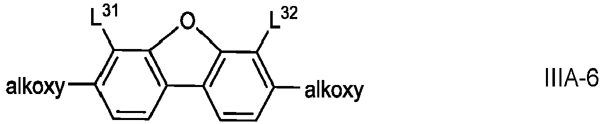 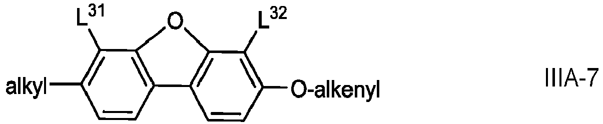 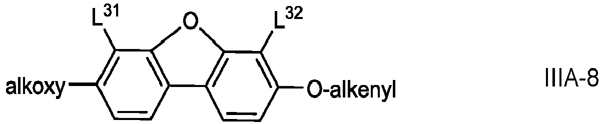 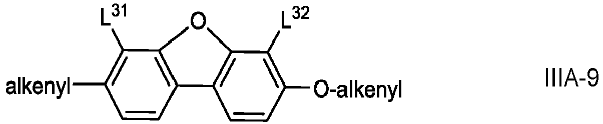 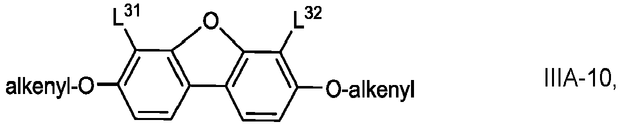 in which
alkyl and alkyl* each, independently of one another, denote a straight-chain alkyl radical having 1-6 C atoms, alkenyl and alkenyl* each, independently of one another, denote a straight-chain alkenyl radical having 2-6 C atoms, alkoxy and alkoxy* each, independently of one another, denote a straight-chain alkoxy radical having 1-6 C atoms, and L³¹ and L³² each, independently of one another, denote F or CI, preferably both F.

Optionally the medium comprises one or more compounds of the formula IIIB-1 and/or IIIB-2 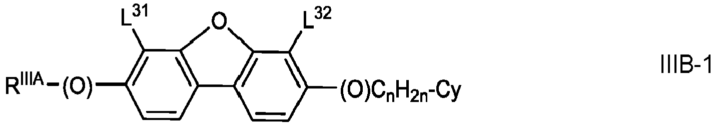 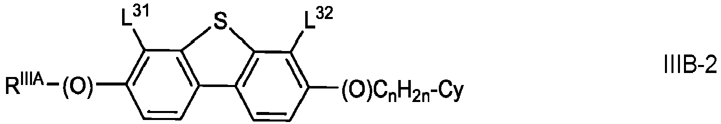
in which L³¹ and L³² have the same meanings as given under formula III, (O) denotes O or a single bond,
R^{IIIA} denotes alkyl or alkenyl having up to 7 C atoms or a group Cy-CₘH₂ₘ₊₁-,
m and n are, identically or differently, 0, 1, 2, 3, 4, 5 or 6, preferably 1, 2 or 3, very preferably 1,
Cy denotes a cycloaliphatic group having 3, 4 or 5 ring atoms, which is optionally substituted with alkyl or alkenyl each having up to 3 C atoms, or with halogen or CN, and preferably denotes cyclopropyl, cyclobutyl or cyclopentyl.

The compounds of formula IIIB-1 and/or IIIB-2 are contained in the medium either alternatively or in addition to the compounds of formula III, preferably additionally.

Very preferred compounds of the formulae IIIB-1 and IIIB-2 are the following: 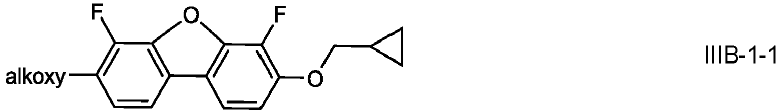 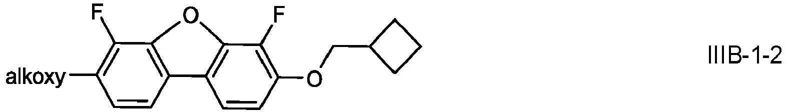 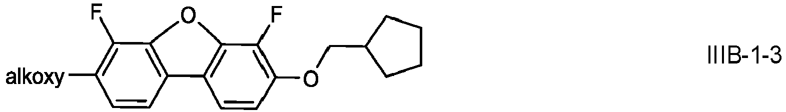 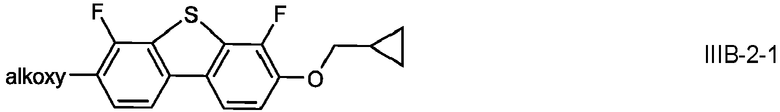 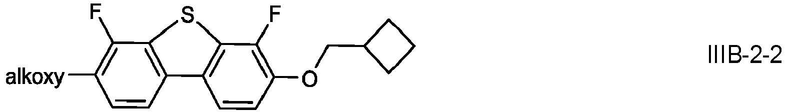 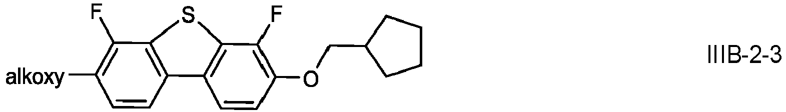 in which alkoxy denotes a straight-chain alkoxy radical having 1-6 C atoms or alternatively -(CH₂)ₙF in which n is 2,3,4, or 5, preferably C₂H₄F.

In a preferred embodiment of the present invention, the medium comprises one or more compounds of formula III-2 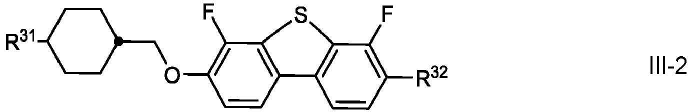 in which
R³¹, R³² identically or differently, denote H, an alkyl or alkoxy radical having 1 to 15 C atoms, in which one or more CH₂ groups in these radicals are optionally replaced, independently of one another, by -C≡C-, -CF₂O-, -OCF₂-, -CH=CH-, 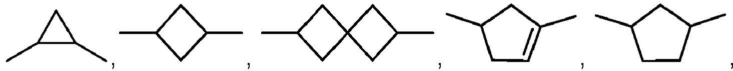 -O-, -CO-O- or -O-CO- in such a way that O atoms are not linked directly to one another, and in which, in addition, one or more H atoms may be replaced by halogen.

The compounds of formula III-2 are preferably selected from the group of compounds of the formulae III-2-1 to III-2-10:

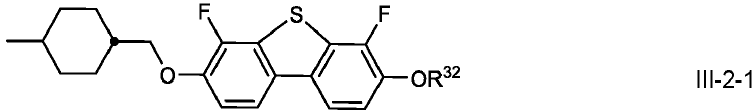

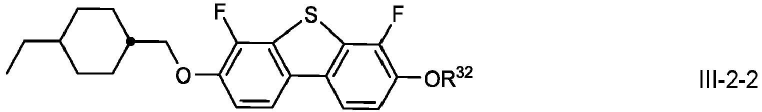

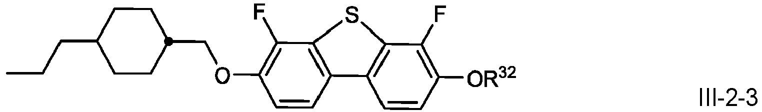

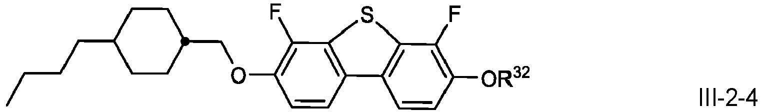

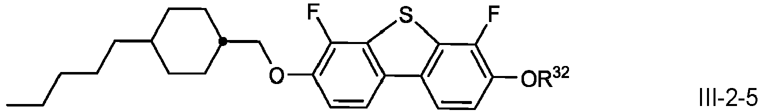

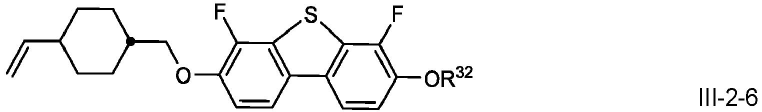

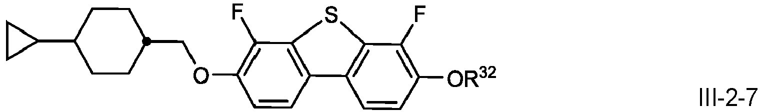

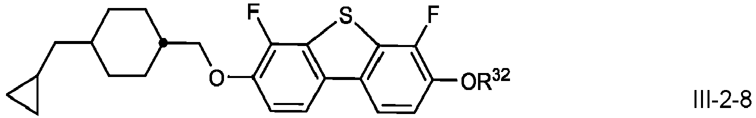

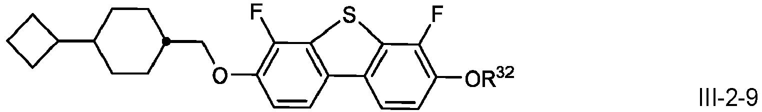

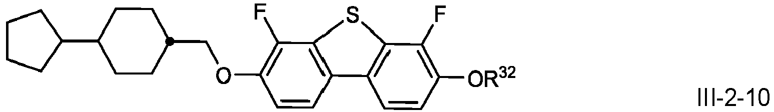

in which R³² denotes alkyl having 1 to 7 C-atoms, preferably ethyl, n-propyl or n-butyl, or alternatively cyclopropylmethyl, cyclobutylmethyl or cyclopentylmethyl or alternatively -(CH₂)ₙF in which n is 2,3,4, or 5, preferably C₂H₄F.

In a preferred embodiment of the present invention, the medium comprises one or more compounds of the formulae III-3 to III-5, preferably of formula III-4, 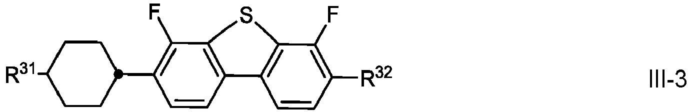 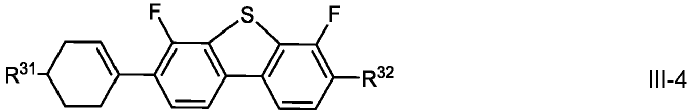 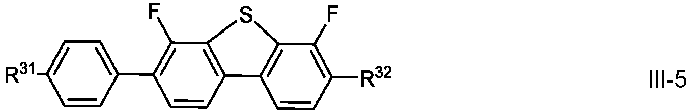 in which the parameters have the meanings given above, R³¹ preferably denotes straight-chain alkyl having 1 to 7 C atoms and R³² preferably denotes alkoxy having 1 to 7 C atoms.

In a preferred embodiment the media according to the invention comprise one or more compounds of the formula III selected from the group of compounds of formulae III-6 to III-8, preferably of formula III-7, 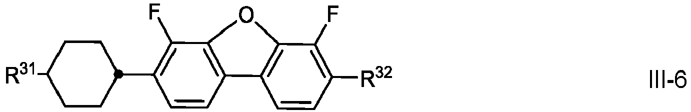 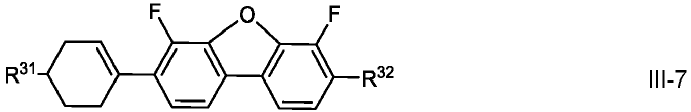 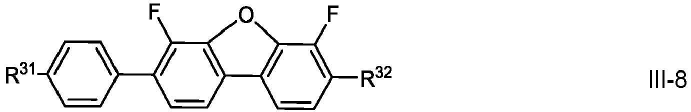 in which the parameters have the meanings given above, R³¹ preferably denotes straight-chain alkyl having 1 to 7 C atoms and R³² preferably denotes alkoxy having 1 to 7 C atoms.

In a preferred embodiment, the medium comprises one or more compounds of the formula IV, 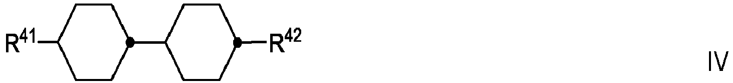 in which
- R⁴¹: denotes an unsubstituted alkyl radical having 1 to 7 C atoms or an unsubstituted alkenyl radical having 2 to 7 C atoms, preferably an n-alkyl radical, particularly preferably having 2, 3, 4 or 5 C atoms, and
- R⁴²: denotes an unsubstituted alkyl radical having 1 to 7 C atoms or an unsubstituted alkoxy radical having 1 to 6 C atoms, both preferably having 2 to 5 C atoms, an unsubstituted alkenyl radical having 2 to 7 C atoms, preferably having 2, 3 or 4 C atoms, more preferably a vinyl radical or a 1-propenyl radical and in particular a vinyl radical.

The compounds of the formula IV are preferably selected from the group of the compounds of the formulae IV-1 to IV-4, 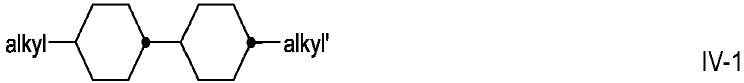 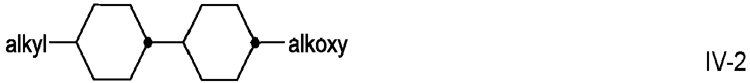 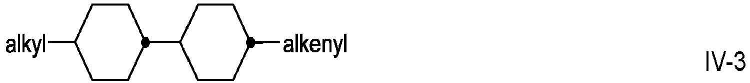 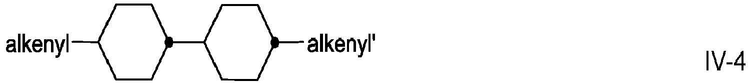 in which
alkyl and alkyl', independently of one another, denote alkyl having 1 to 7 C atoms, preferably having 2 to 5 C atoms,
alkenyl denotes an alkenyl radical having 2 to 5 C atoms, preferably having 2 to 4 C atoms, particularly preferably 2 C atoms,
alkenyl' denotes an alkenyl radical having 2 to 5 C atoms, preferably having 2 to 4 C atoms, particularly preferably having 2 to 3 C atoms, and
alkoxy denotes alkoxy having 1 to 5 C atoms, preferably having 2 to 4 C atoms.

Preferably, the medium comprises one or more compounds selected from the compounds of the formulae IV-1-1 to IV-1-4

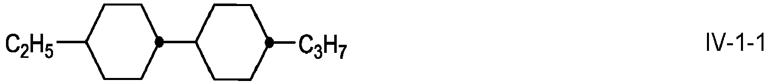

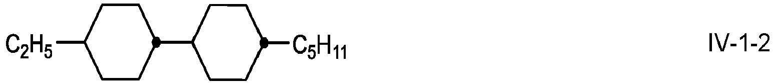

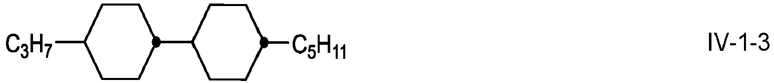

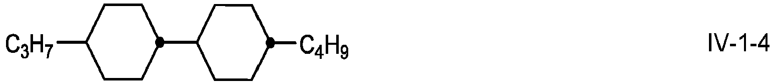

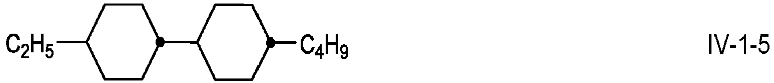

Very preferably, the medium according to the invention comprises one or more compounds of the formulae IV-2-1 and/or IV-2-2

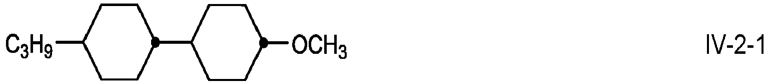

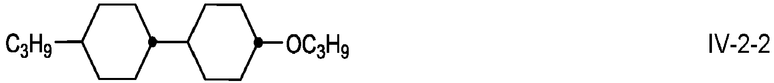

Very preferably, the medium according to the invention comprises a compound of formula IV-3, in particular selected from the compounds of the formulae IV-3-1 to IV-3-5

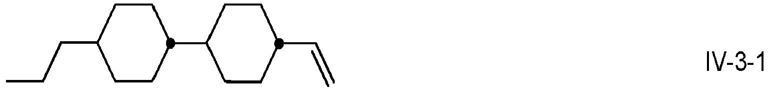

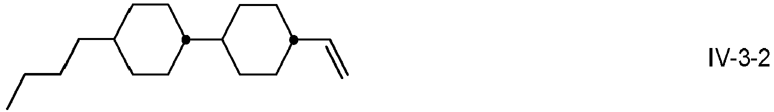

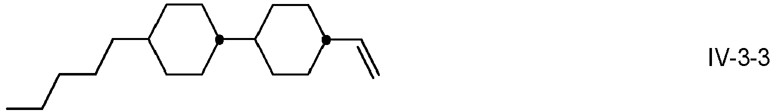

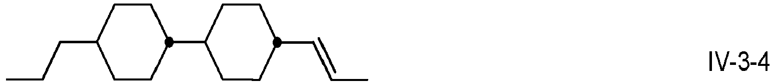

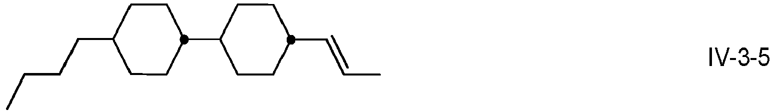

Very preferably, the medium according to the invention comprises a compound of formula IV-4, in particular selected from the compounds of the formulae IV-4-1 and IV-4-2

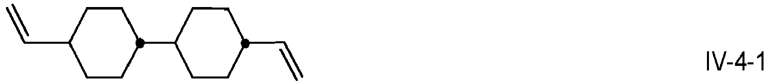

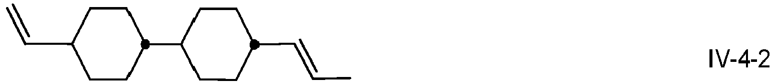

The liquid-crystalline medium preferably additionally comprises one or more compounds of the formula IVa, 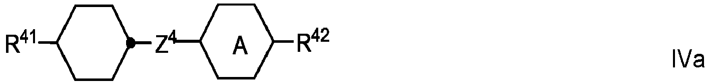 in which
- R⁴¹ and R⁴²: each, independently of one another, denote a straight-chain alkyl, alkoxy, alkenyl, alkoxyalkyl or alkoxy radical having up to 12 C atoms, and 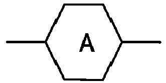 denotes 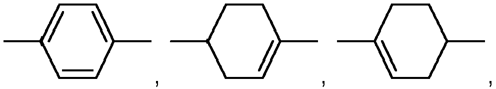 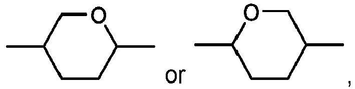
- Z⁴: denotes a single bond, -CH₂CH₂-, -CH=CH-, -CF₂O-, -OCF₂-, -CHzO-, -OCH₂-, -COO-, -OCO-, -C₂F₄-, -C₄H₈-, -CF=CF-.

Preferred compounds of the formula IVa are indicated below: 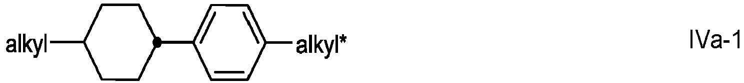 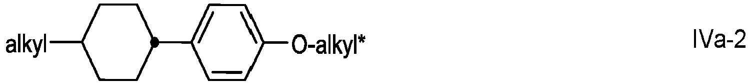 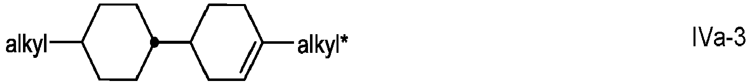 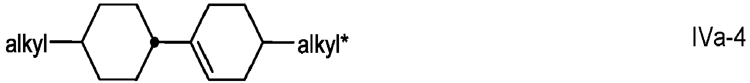 in which
alkyl and alkyl* each, independently of one another, denote a straight-chain alkyl radical having 1 to 6 C atoms.

The medium according to the invention preferably comprises at least one compound of the formula IVa-1and/or formula IVa-2.

The proportion of compounds of the formula IVa in the mixture as a whole is preferably at least 5 % by weight

Preferably, the medium comprises one or more compounds of formula IVb-1 to lVb-3 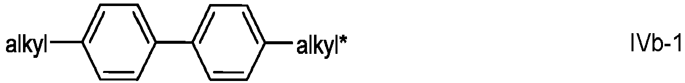 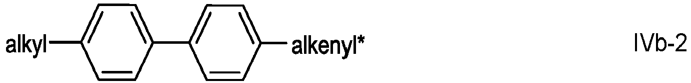 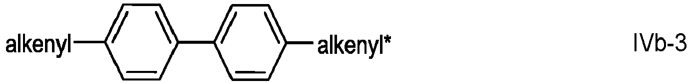 in which
alkyl and alkyl* each, independently of one another, denote a straight-chain alkyl radical having 1 to 6 C atoms, and
alkenyl and alkenyl* each, independently of one another, denote a straight-chain alkenyl radical having 2 to 6 C atoms.

The proportion of the biphenyls of the formulae IV-1 to IV-3 in the mixture as a whole is preferably at least 3 % by weight, in particular ≥ 5 % by weight.

Of the compounds of the formulae IVb-1 to IVb-3, the compounds of the formula IVb-2 are particularly preferred.

Particularly preferred biphenyls are 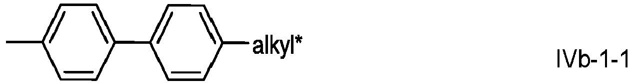 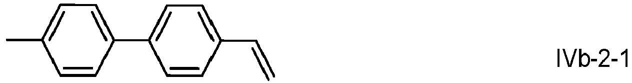 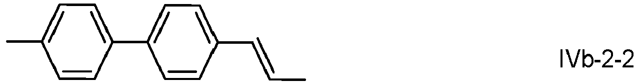 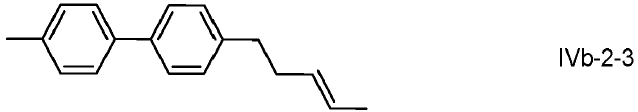 in which alkyl* denotes an alkyl radical having 1 to 6 C atoms and preferably denotes n-propyl. The medium according to the invention particularly preferably comprises one or more compounds of the formulae IVb-1-1 and/or IVb-2-3.

In a preferred embodiment, the medium according to the invention comprises one or more compounds of formula V 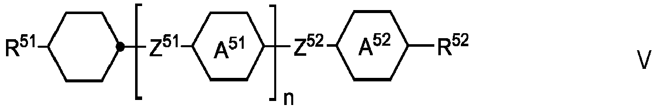 in which
- R⁵¹, R⁵²: denote alkyl having 1 to 7 C atoms, alkoxy having 1 to 7 C atoms, or alkoxyalkyl, alkenyl or alkenyloxy having 2 to 7 C atoms, 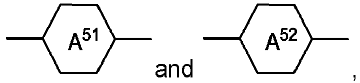 identically or differently, denote 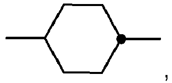 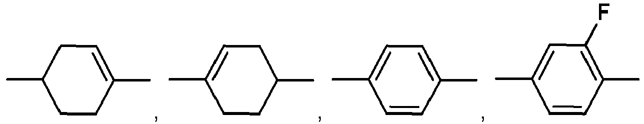 or 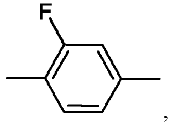
- Z⁵¹ , Z⁵²: each, independently of one another, denote -CH₂-CH₂-, -CHz-O-, -CH=CH-, -C=C-, -COO- or a single bond, and
- n: is 1 or 2.

Preferably, the compounds of the formula V are selected from the group consisting of the formulae

The compounds of formula V are preferably selected from the compounds of the formulae V-1 to V-16: 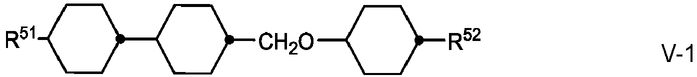 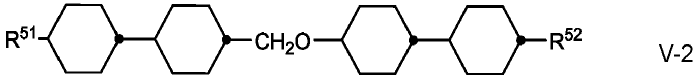 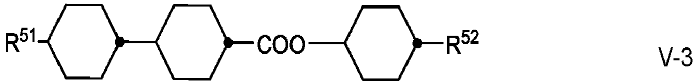 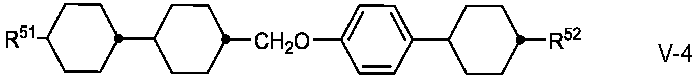 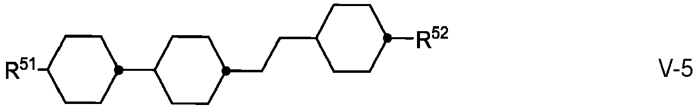 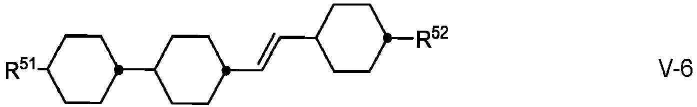 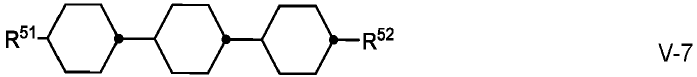 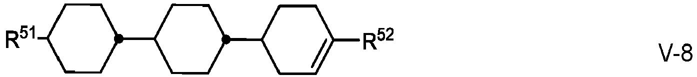 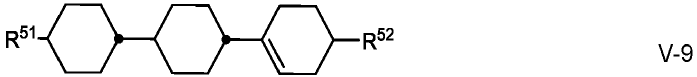 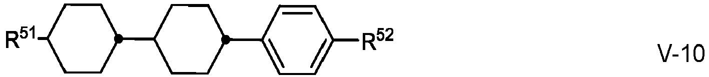 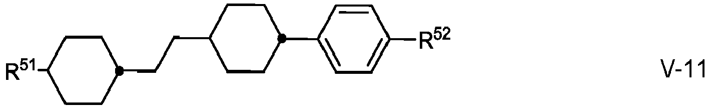 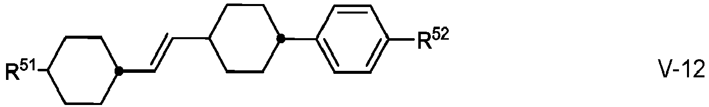 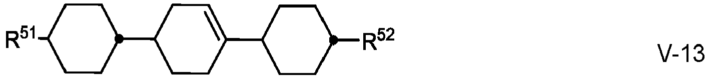 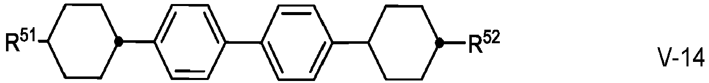 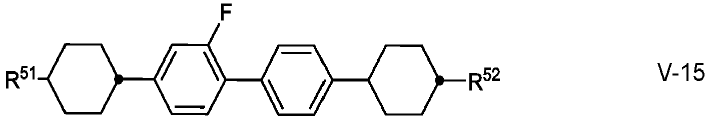 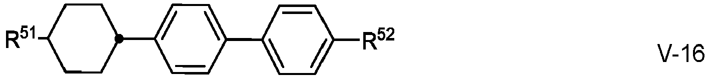
in which R⁵¹ and R⁵² have the meanings indicated for Formula V above.
R⁵¹ and R⁵² preferably each, independently of one another, denote straight-chain alkyl having 1 to 7 C atoms or alkenyl having 2 to 7 C atoms.

Preferred media comprise one or more compounds of the formulae V-1, V-3, V-4, V-6, V-7, V-10, V-11, V-12, V-14, V-15, and/or V-16, very preferably V-3.

In a preferred embodiment of the present invention the medium additionally comprises one or more compounds of the formulae VI-1 to VI-21, 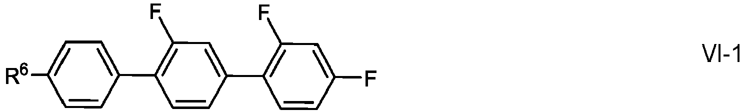 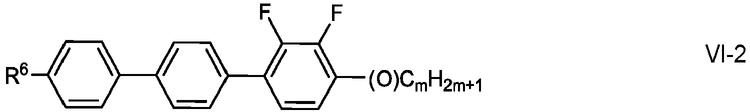 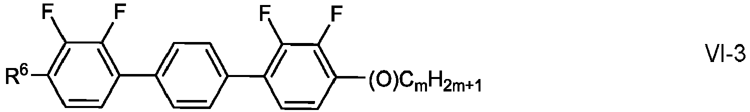 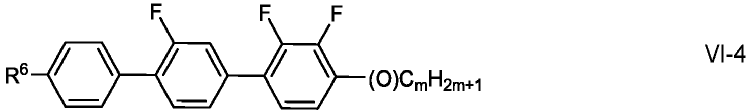 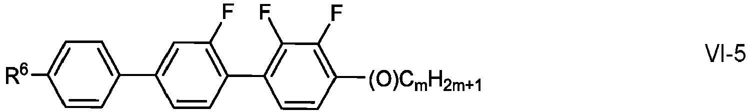 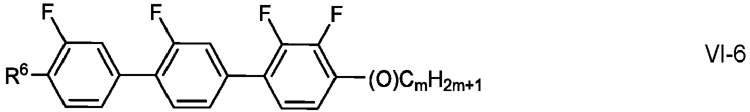 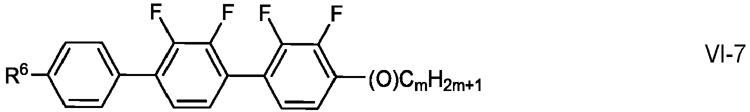 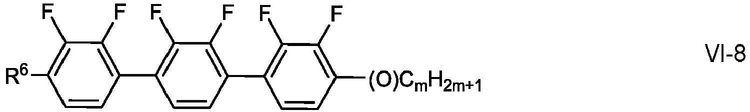 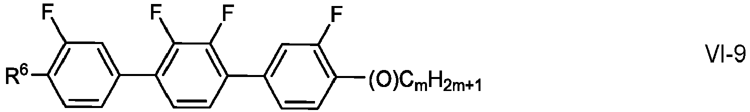 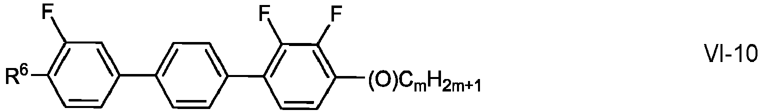 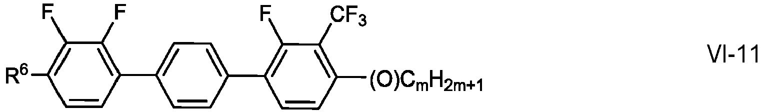 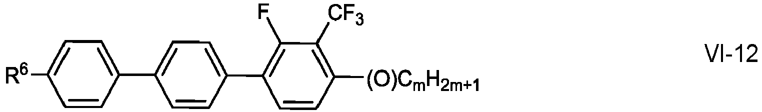 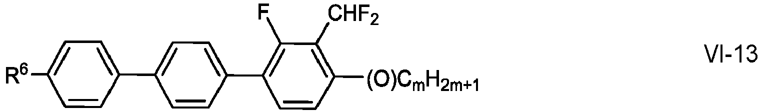 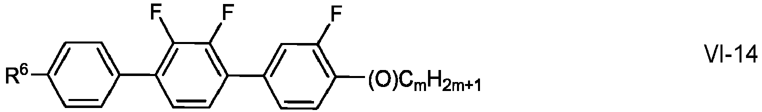 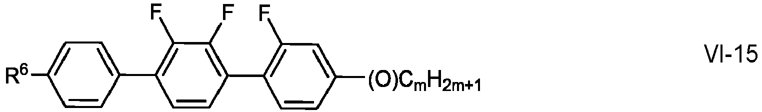 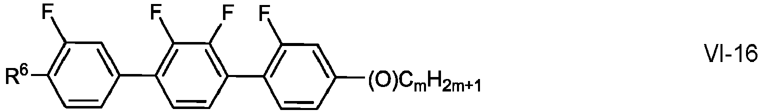 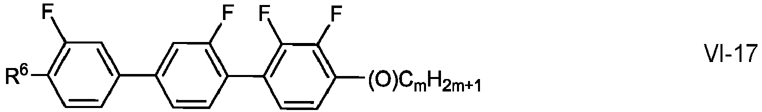 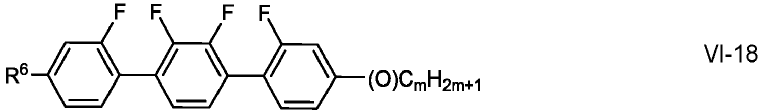 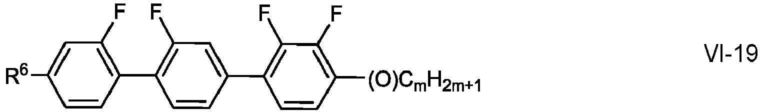 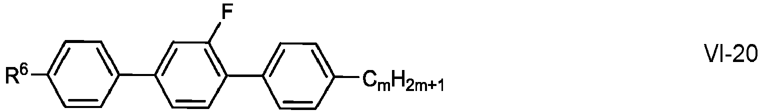 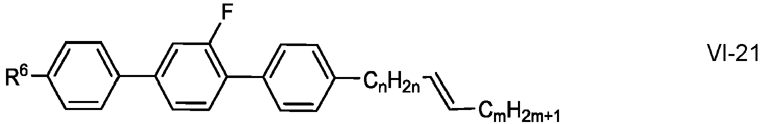
in which R denotes a straight-chain alkyl or alkoxy radical having 1 to 6 C atoms, (O) denotes -O- or a single bond, and m is 0, 1, 2, 3, 4, 5 or 6 and n is 0, 1, 2, 3 or 4.
R preferably denotes methyl, ethyl, propyl, butyl, pentyl, hexyl, methoxy, ethoxy, propoxy, butoxy, pentoxy.

In a preferred embodiment of the present invention the medium additionally comprises one or more compounds of the formulae VII-1 to VII-9 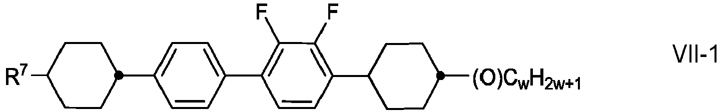 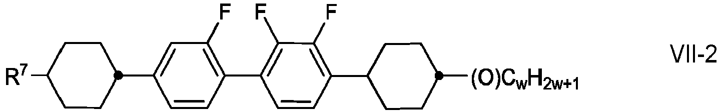 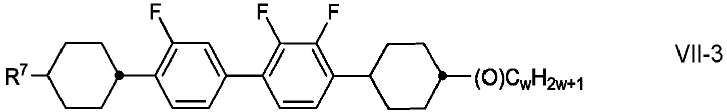 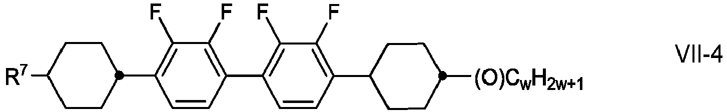 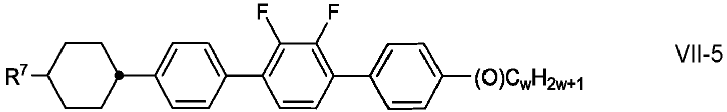 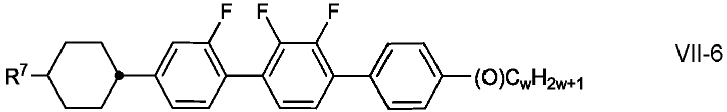 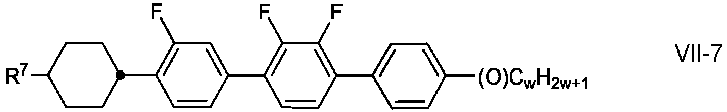 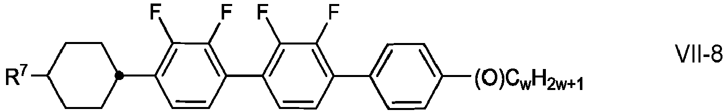 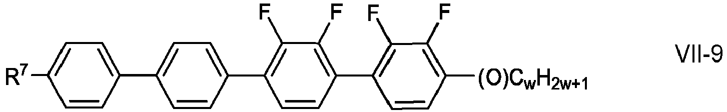 in which
- R⁷: denotes a straight-chain alkyl or alkoxy radical having 1 to 6 C atoms, or a straight chain alkenyl radical having 2 to 6 C atoms, and
- w: is an integer from 1 to 6.

Particular preference is given to mixtures comprising at least one compound of the formula V-9.

Particular preference is given to compounds of the formulae VI-1, VI-2, VI-4, VI-20 and VI-21. In these compounds, R preferably denotes alkyl, furthermore alkoxy, each having 1 to 5 C atoms. In the compounds of the formula VI-20, R preferably denotes alkyl or alkenyl, in particular alkyl. In the compound of the formula VI-21, R preferably denotes alkyl.

Further preferred embodiments are listed below:
a) Liquid-crystalline medium comprising at least one compound of the formulae Z-1 to Z-7, 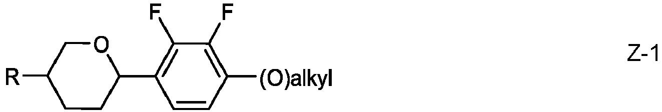 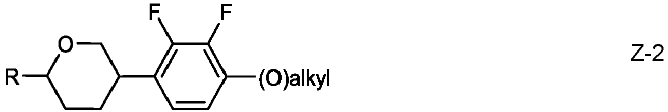 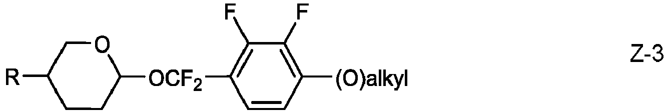 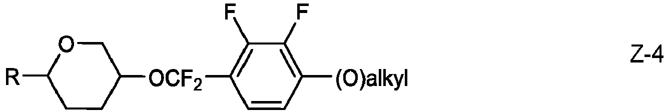 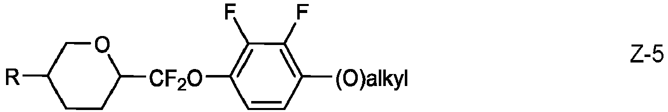 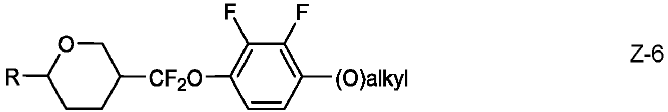 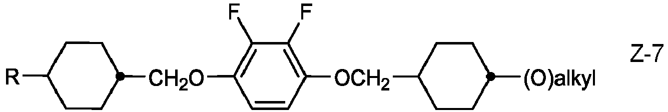 in which R and alkyl have the meanings indicated above for formula III.
b) Preferred liquid-crystalline media according to the invention comprise one or more substances which contain a tetrahydronaphthyl or naphthyl unit, such as, for example, the compounds of the formulae N-1 to N-5, 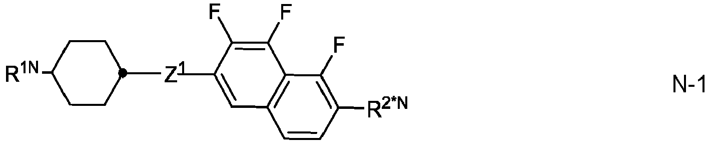 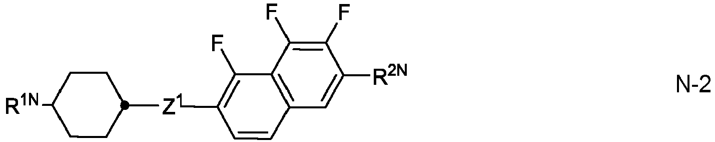 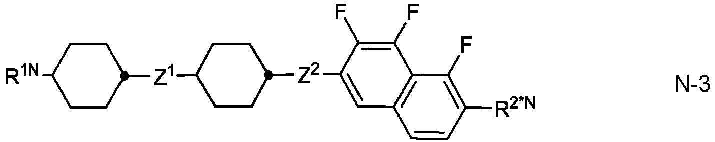 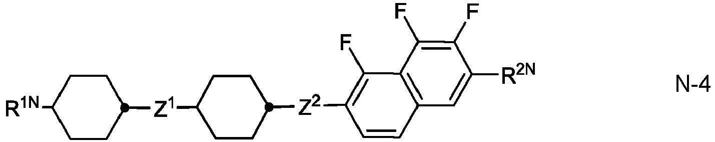 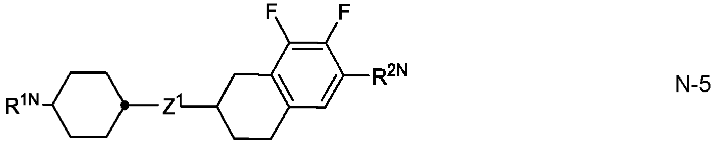
   in which R^{1N} and R^{2N} each, independently of one another, have the meanings indicated for R^{2A}, preferably denote straight-chain alkyl, straight-chain alkoxy or straight-chain alkenyl, and
   Z¹ and Z² each, independently of one another,
      denote -C₂H₄-, -CH=CH-, -(CH₂)₄-, -(CH₂)₃O-, -O(CH₂)₃-, -CH=CHCH₂CH₂-, -CH₂CH₂CH=CH-, -CH₂O-, -OCH₂-, -COO-, -OCO-,
      -C₂F₄-, -CF=CF-, -CF=CH-, -CH=CF-, -CF₂O-, -OCF₂-, -CH₂- or a single bond.
c) Preferred mixtures comprise one or more compounds selected from the group of the difluorodibenzochroman compounds of the formula BC, chromans of the formula CR, and fluorinated phenanthrenes of the formulae PH-1 and PH-2, 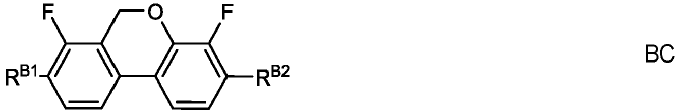 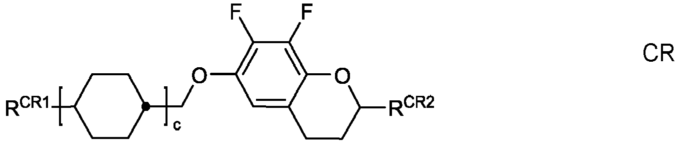 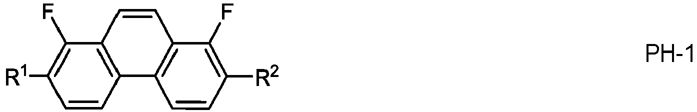 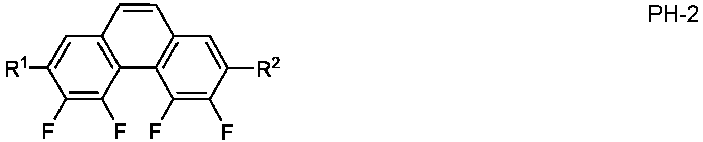 in which R^{B1}, R^{B2}, R^{CR1}, R^{CR2}, R¹, R² each, independently of one another, have the meaning of R^{2A}. c is 0, 1 or 2. R¹ and R² preferably, independently of one another, denote alkyl or alkoxy having 1 to 6 C atoms.

Particularly preferred compounds of the formulae BC and CR are the compounds BC-1 to BC-7 and CR-1 to CR-5, 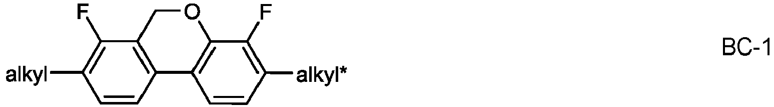 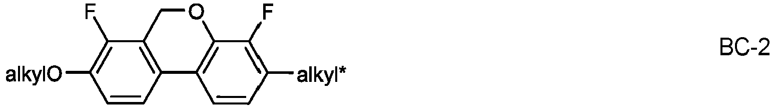 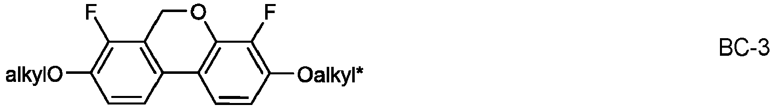 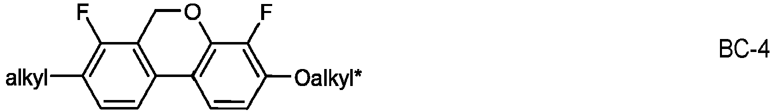 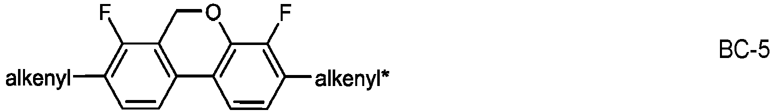 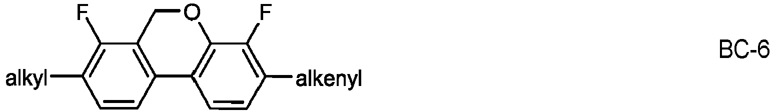 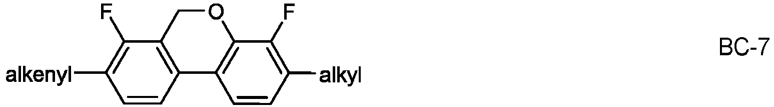 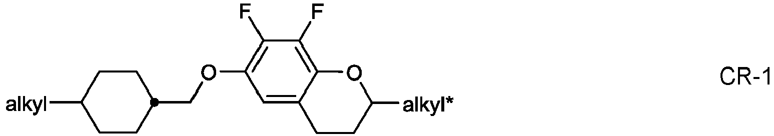 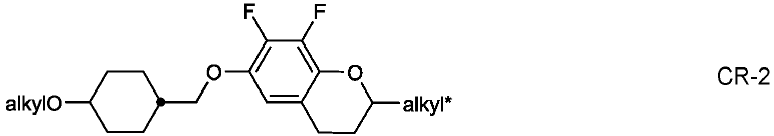 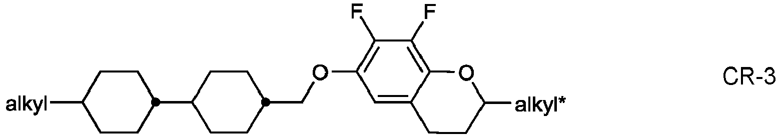 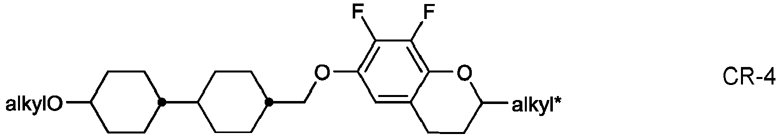 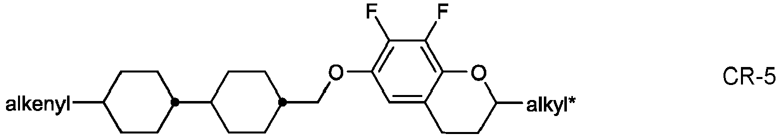 in which
alkyl and alkyl* each, independently of one another, denote a straight-chain alkyl radical having 1 to 6 C atoms, and
alkenyl and alkenyl* each, independently of one another, denote a straight-chain alkenyl radical having 2 to 6 C atoms.

Very particular preference is given to mixtures comprising one, two or three compounds of the formula BC-2, BF-1 and/or BF-2.
d) Preferred mixtures comprise one or more indane compounds of the formula In, 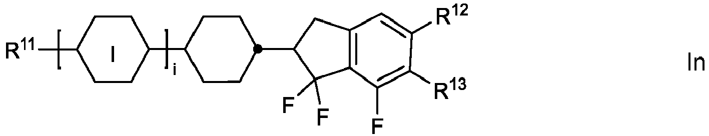 in which
- R¹¹, R¹², and R¹³: each, independently of one another, denote a straight-chain alkyl, alkoxy, alkoxyalkyl or alkenyl radical having 1 to 6 C atoms,
- R¹² and R¹³: alternatively denote halogen, preferably F, 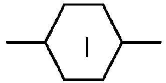 denotes 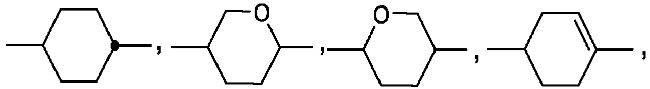 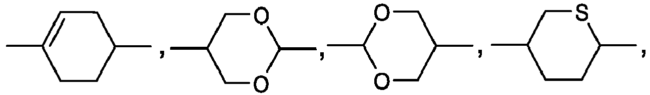 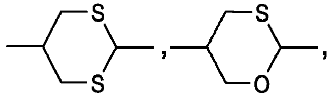
- i: denotes 0, 1 or 2.

Preferred compounds of the formula In are the compounds of the formulae In-1 to In-16 indicated below:

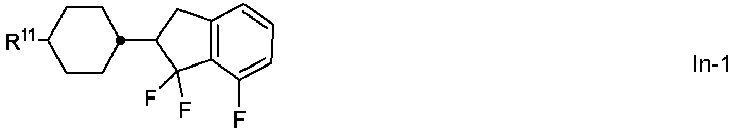

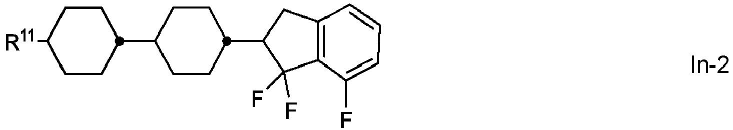

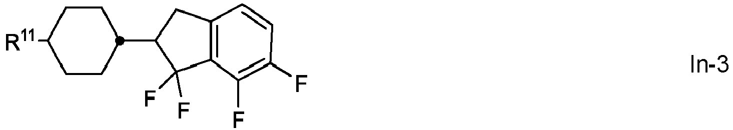

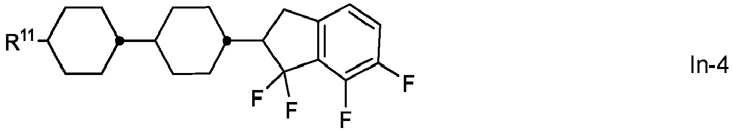

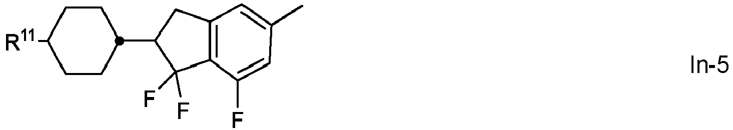

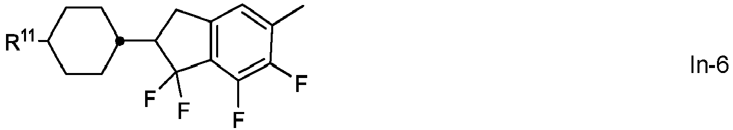

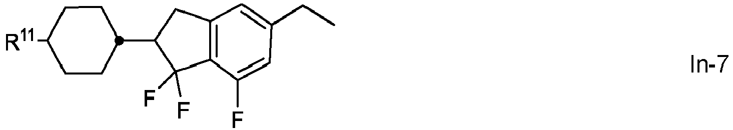

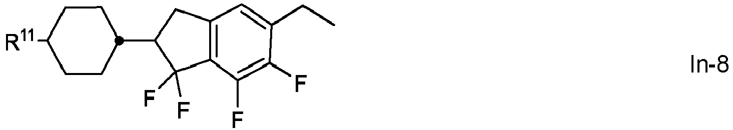

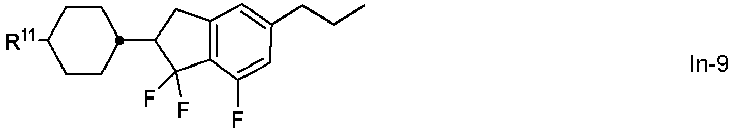

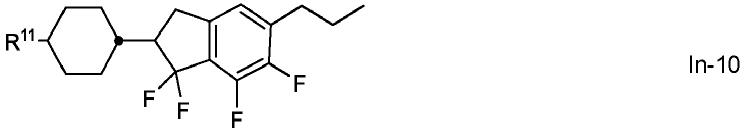

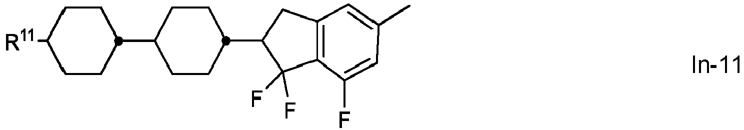

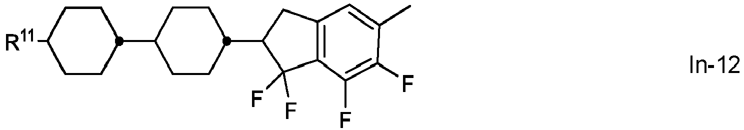

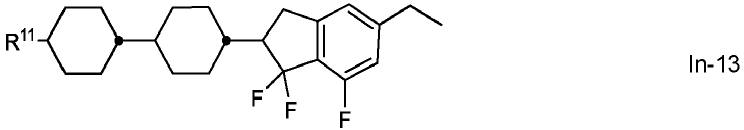

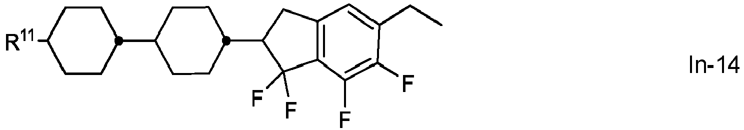

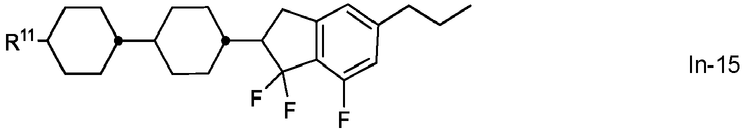

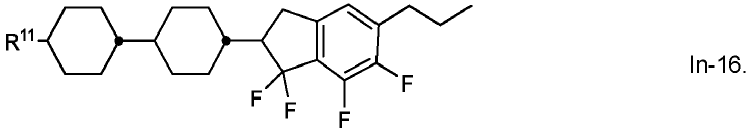

Particular preference is given to the compounds of the formulae In-1, In-2, In-3 and In-4.
e) Preferred mixtures additionally comprise one or more compounds of the formulae L-1 to L-5, 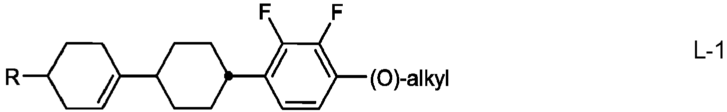 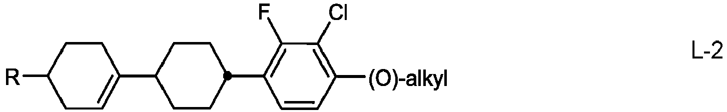 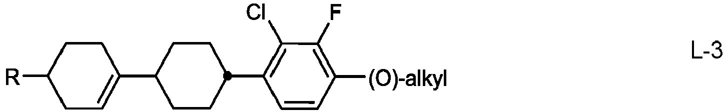 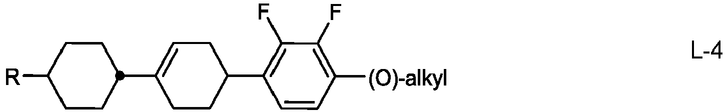 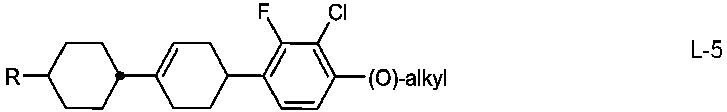 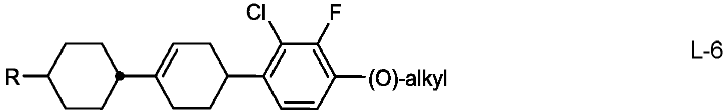 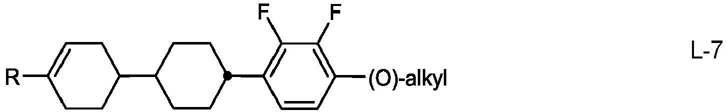 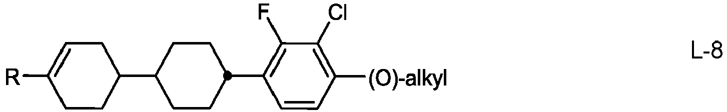 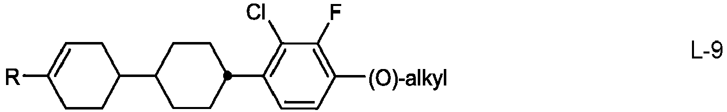 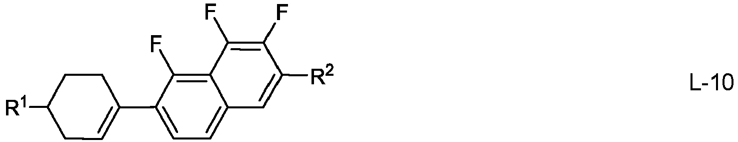 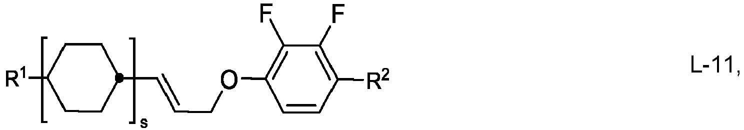 in which
R, R¹ and R² each, independently of one another, have the meanings indicated for R^{2A} in formula IIA above, and alkyl denotes an alkyl radical having 1 to 6 C atoms. The parameter s denotes 1 or 2.
The compounds of the formulae L-1 to L-9 are preferably employed in concentrations of 5 to 15 % by weight, in particular 5 to 12 % by weight and very particularly preferably 8 to 10 % by weight.

Preferably, the medium according to the invention comprises one or more compounds of the formula S, very preferably in a total concentration in the range of from 1000 ppm to 5000 ppm: 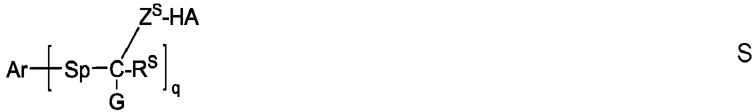 in which
- Ar: denotes an aromatic or heteroaromatic hydrocarbon group having 4 to 40 C atoms;
- Sp: denotes a spacer group;
- R^{S}: denotes H, alkyl having 1 to 12 C atoms or alkenyl having 2 to 12 C atoms;
- Z^{S}: denotes -O-, -C(O)O-, -(CH₂)_{z}- or -(CH₂)_{z}O-, or a single bond;
- HA: denotes 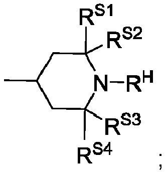
- R^{H}: denotes H, O^{•}, CH₃, OH or OR^{S};
- R^{S1}, R^{S2}, R^{S3} and R^{S4},: identically or differently, denote alkyl having 1 to 6 C atoms, preferably having 1 to 3 C atoms, very preferably CH₃;
- G: denotes H or R^{S} or a group Z^{S}-HA;
- z: is an integer from 1 to 6, and
- q: is 3 or 4.

The compounds of formula S are preferably selected from the compounds of the formulae S-1, S-2 and S-3: 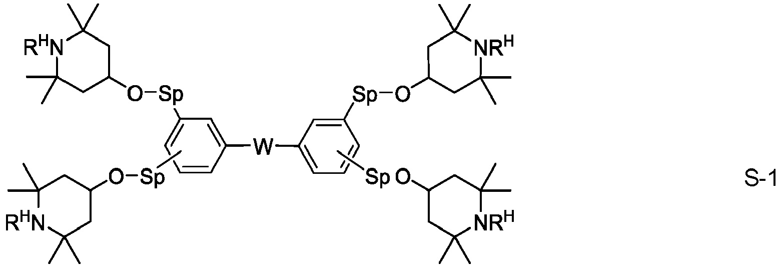 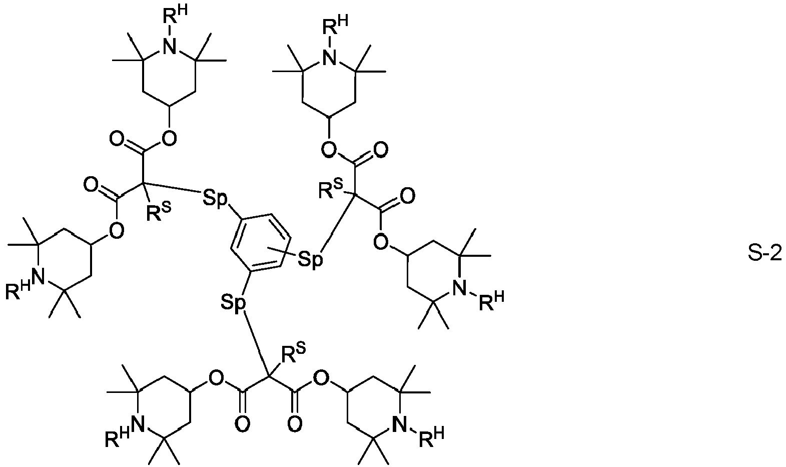 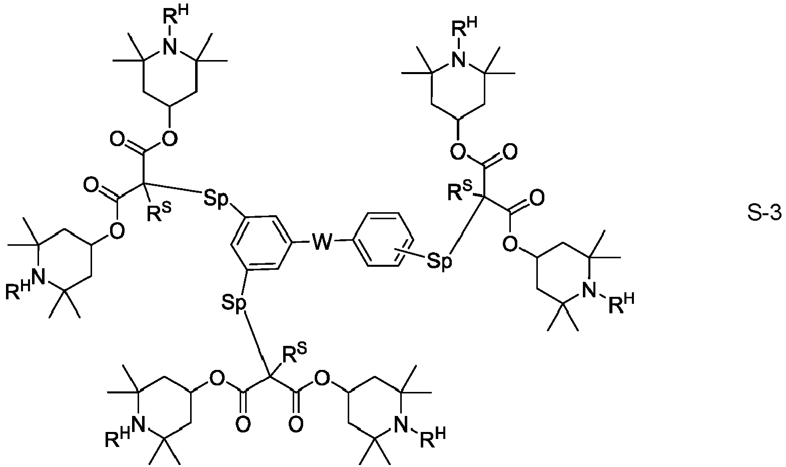 in which R" has the meanings given above and preferably denotes H or O^{▪}, Sp on each occurrence, identically or differently, denotes a spacer group, and W denotes linear or branched, optionally unsaturated alkylene having 1 to 12 C atoms, in which one or more non-adjacent -CH₂- groups may be replaced with -O-.

Preferred compounds of formula S-1 are selected from the compounds of the formula S-1-1: 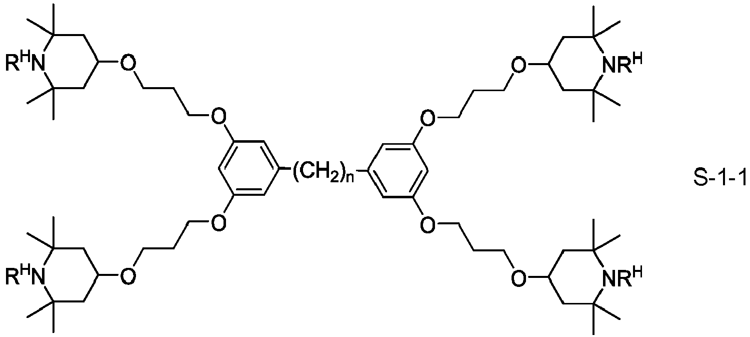 in which R^{H} has the meanings given above and preferably denotes H or O^{▪}, and n is an integer from 0 to 12, preferably 5, 6, 7, 8 or 9, very preferably 7.

Preferred compounds of formula S-2 are selected from the compounds of the formula S-2-1: 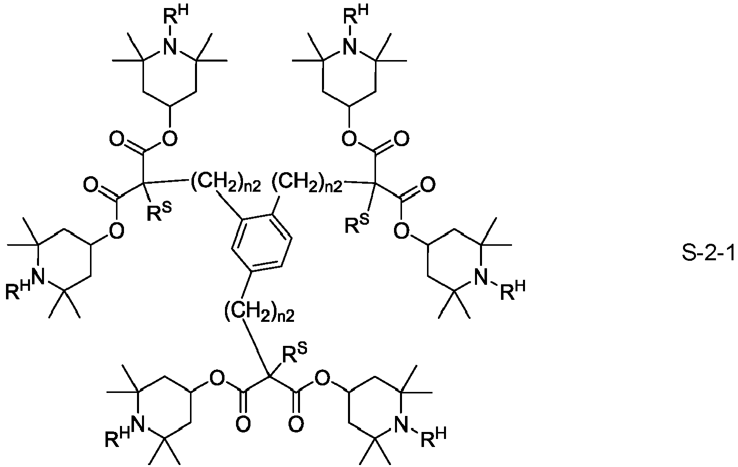 in which R" has the meanings given above and preferably denotes H or O^{▪}, and n2, on each occurrence identically or differently, preferably identically, is an integer from 1 to 12, preferably 2, 3, 4, 5, or 6, very preferably 3, and R^{S} on each occurrence identically or differently, preferably identically, denotes alkyl having 1 to 6 C atoms, preferably n-butyl.

Preferred compounds of formula S-3 are selected from the compounds of the formula S-3-1: 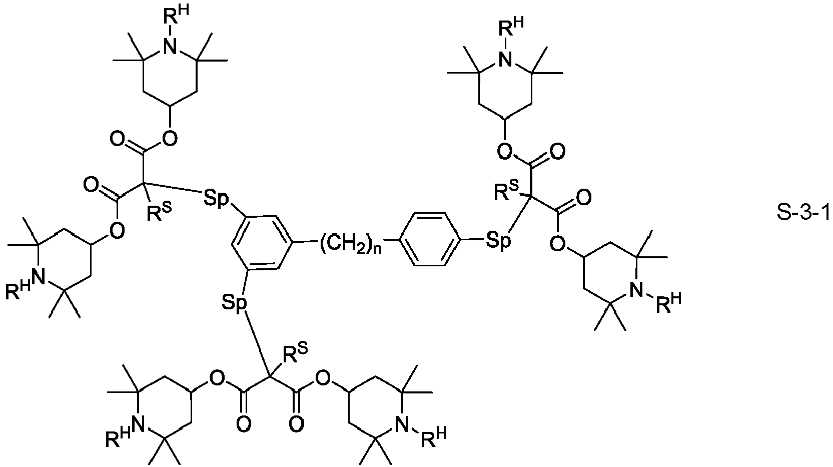 in which R^{H} has the meanings given above and preferably denotes H or O^{▪}, and n is an integer from 0 to 12, preferably 5, 6, 7, 8 or 9, very preferably 7.

Preferably, the medium according to the invention comprises a compound selected from the group of compounds of the formulae ST-1 to ST-18: 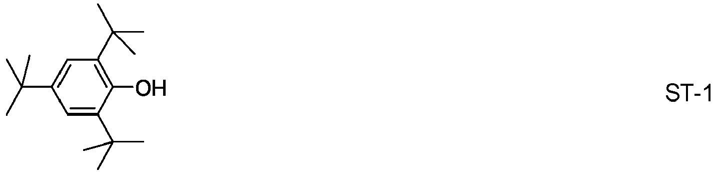 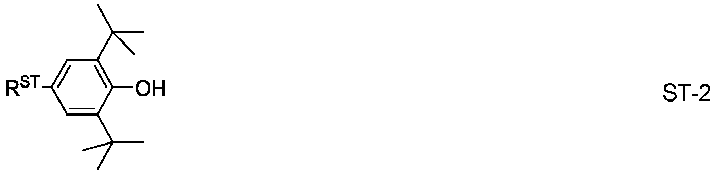 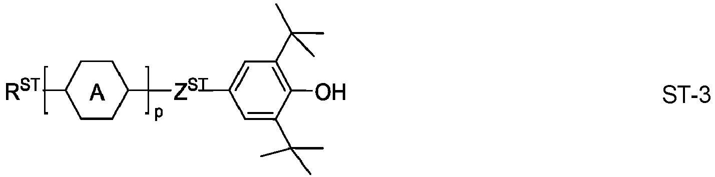 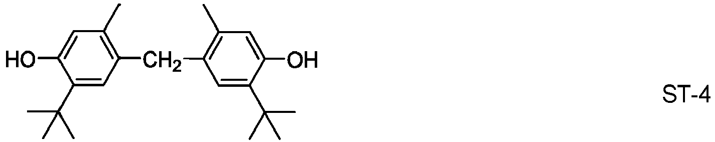 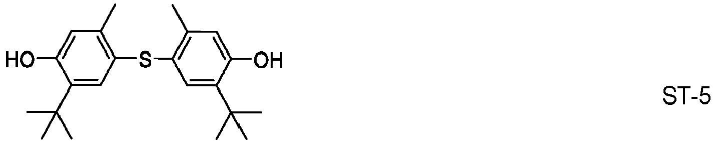 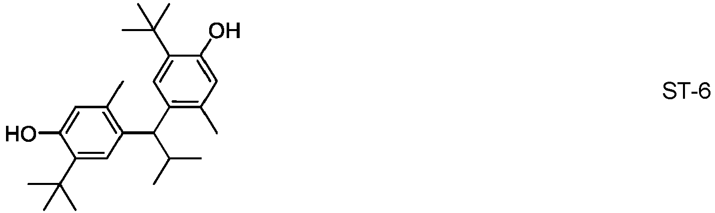 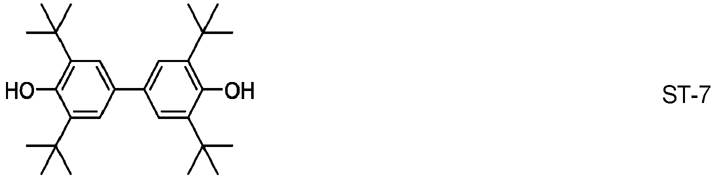 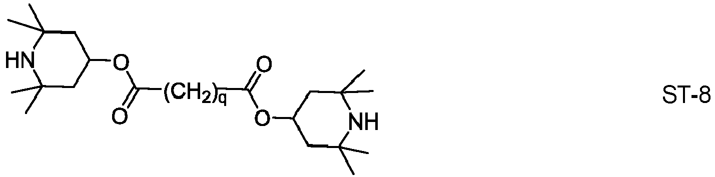 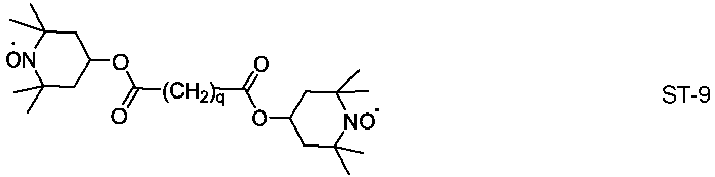 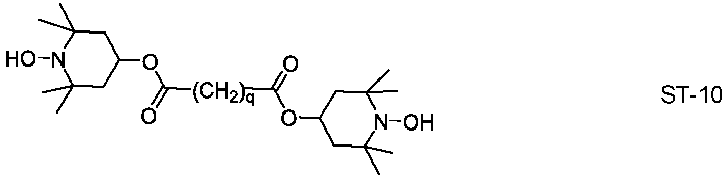 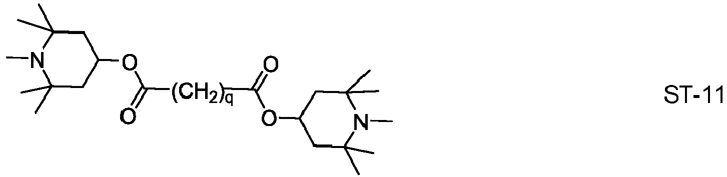 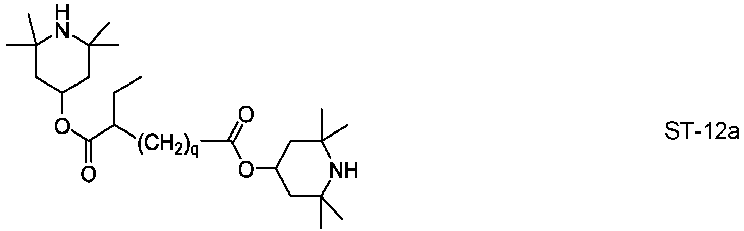 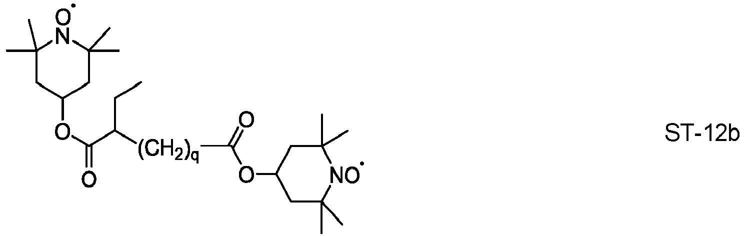 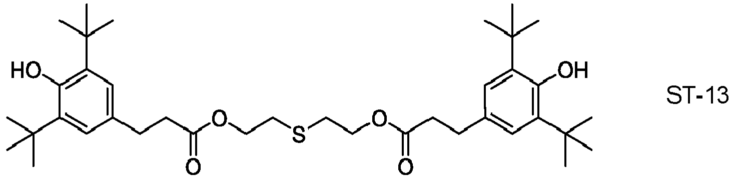 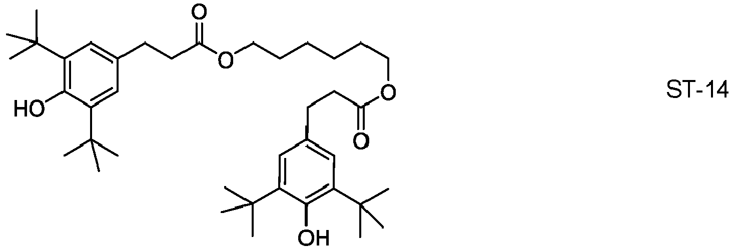 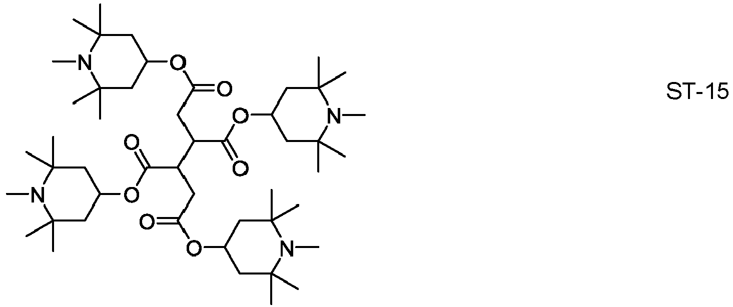 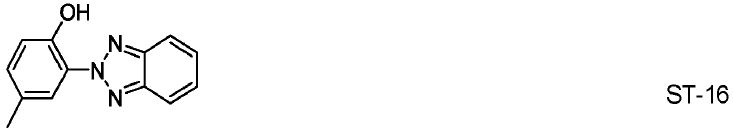 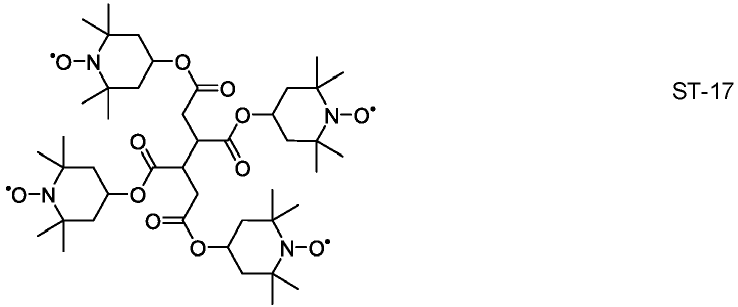 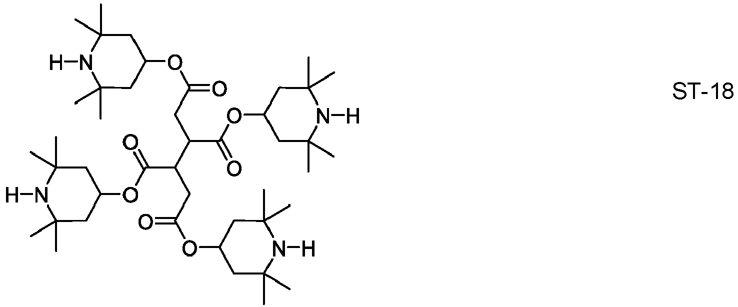 in which
- R^{ST}: denotes H, an alkyl or alkoxy radical having 1 to 15 C atoms, where, in addition, one or more CH₂ groups in these radicals may each be replaced, independently of one another by -C≡C-, -CFzO-, -OCF₂-, -CH=CH-, 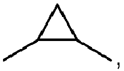 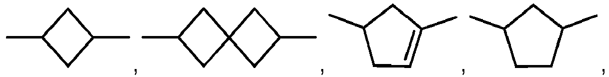 -O-, -CO-O-, -O-CO- in such a way that O atoms are not linked directly to one another, and in which, in addition, one or more H atoms may be replaced by halogen, 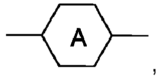 on each occurrence, identically or differently, denotes 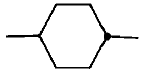 or 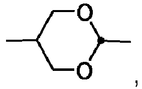
- Z^{ST}: each, independently of one another, denote -CO-O-, -O-CO-, -CF₂O-, -OCF₂-, -CH₂O-, -OCH₂-, -CH₂-, -CH₂CH₂-, -(CH₂)₄-, -CH=CH-, -CH₂O-, -C₂F₄-, -CH₂CF₂-, -CF₂CH₂-, -CF=CF-, -CH=CF-, -CF=CH-, -CH=CH-, -C≡C- or a single bond,
- L¹ and L²: each, independently of one another, denote F, Cl, CH₃, CF₃ or CHF₂,
- p: denotes 0, 1 or 2,
- q: denotes 1, 2, 3, 4, 5, 6, 7, 8, 9 or 10,
- n: is an integer from 0 to 12, preferably 5, 6, 7, 8 or 9, very preferably 7.
- n2: on each occurrence identically or differently, preferably identically, is an
integer from 1 to 12, preferably 2, 3, 4, 5, or 6, very preferably 3, and R^{S} on each occurrence identically or differently, preferably identically, denotes alkyl having 1 to 6 C atoms, preferably n-butyl.

Of the compounds of the formula ST-1 to ST-18, special preference is given to the compounds of the following formulae and sub-formulae: 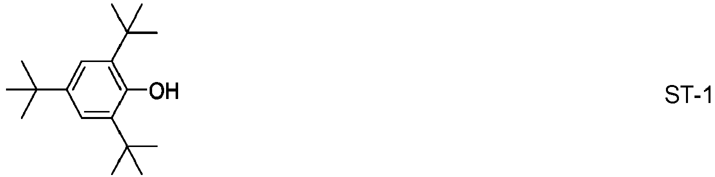 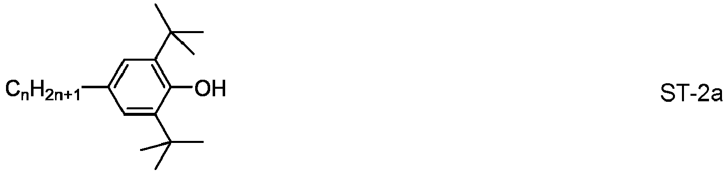 in which n = 1, 2, 3, 4, 5, 6 or 7, preferably n = 1 or 7 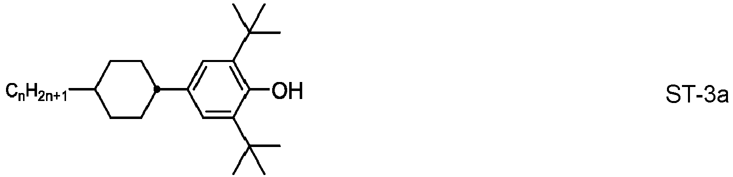 in which n = 1, 2, 3, 4, 5, 6 or 7, preferably n = 3 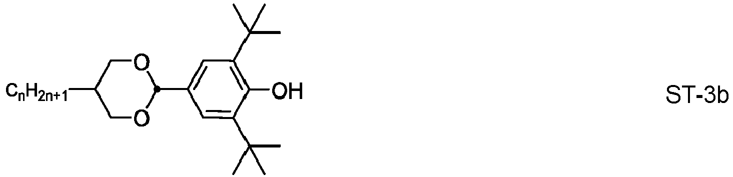 in which n = 1, 2, 3, 4, 5, 6 or 7, preferably n = 3

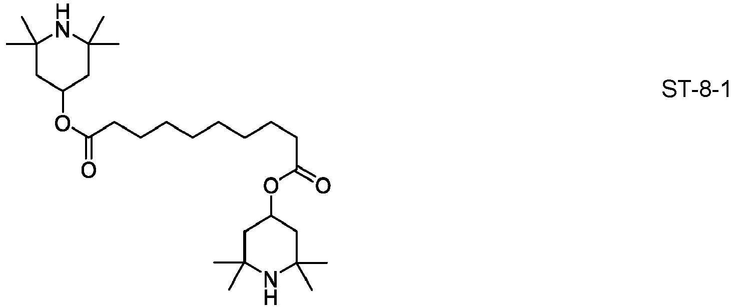

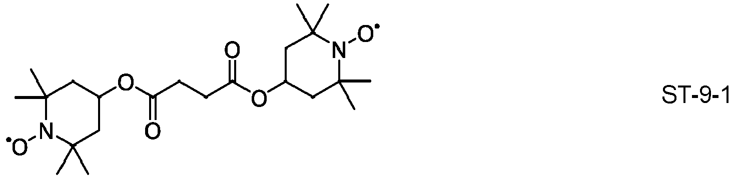

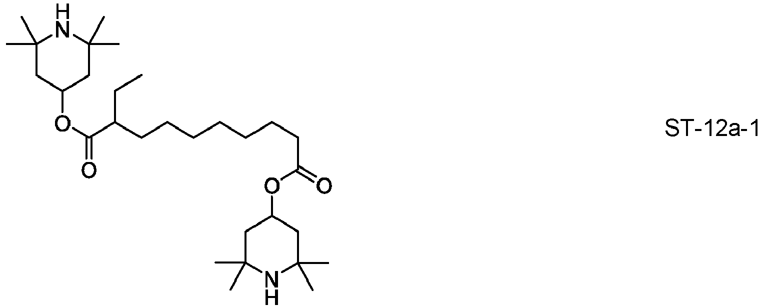

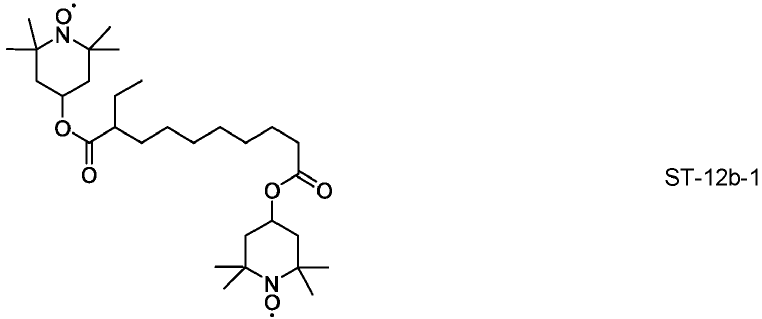

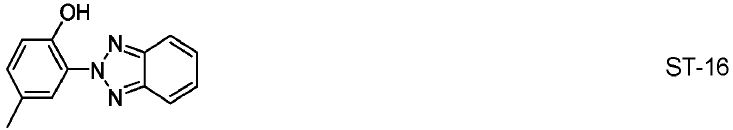

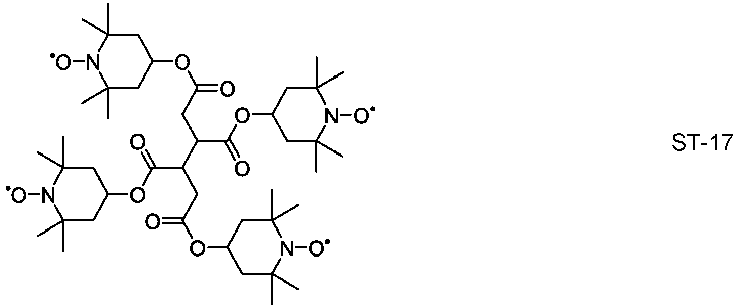

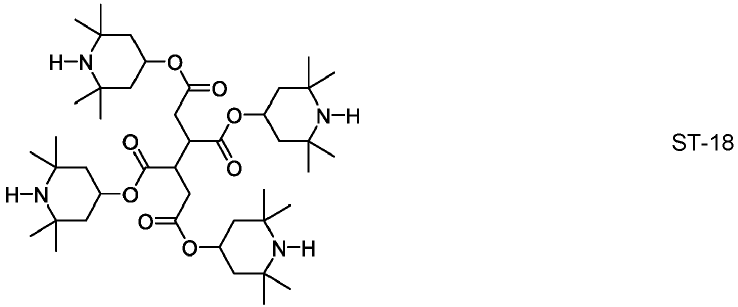

In the compounds of the formulae ST-3a and ST-3b, n preferably denotes 3. In the compounds of the formula ST-2a, n preferably denotes 7.

Very particularly preferred mixtures according to the invention comprise one or more stabilizers from the group of the compounds of the formulae ST-2a-1, ST-3a-1, ST-3b-1, ST-8-1, ST-9-1, ST-12a and ST-12b:

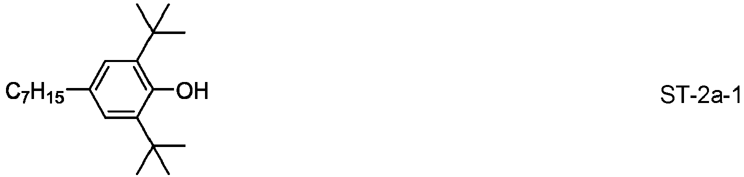

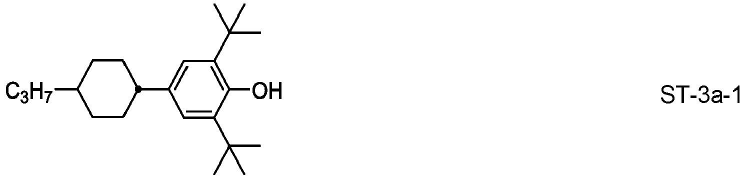

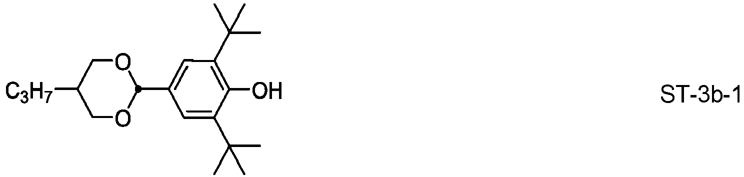

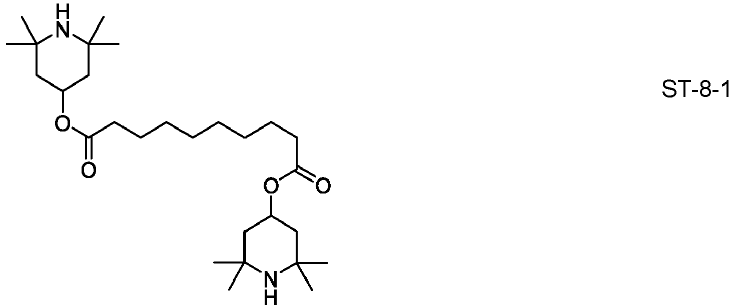

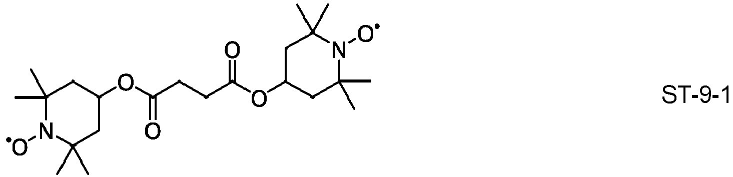

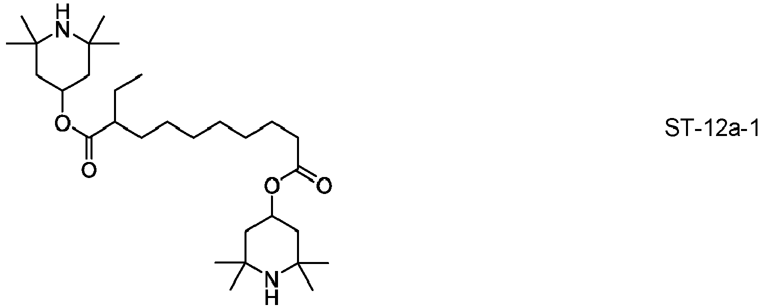

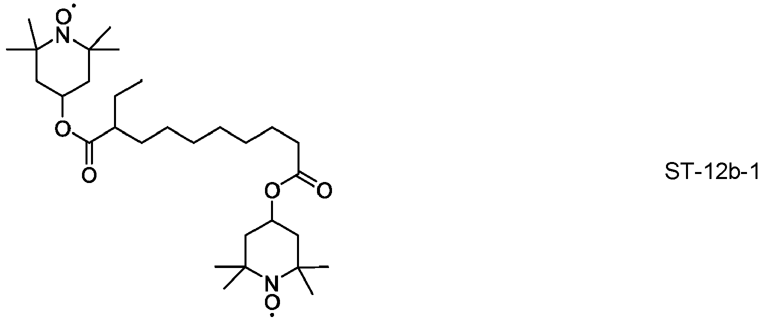

The compounds of the formulae ST-1 to ST-19 are preferably each present in the liquid-crystal mixtures according to the invention in amounts of 0.002 - 0.5%, based on the mixture.

If the mixtures according to the invention comprise two or more compounds from the group of the compounds of the formulae ST-1 to ST-18, the concentration correspondingly increases to 0.05 - 1% in the case of two compounds, based on the mixtures.

However, the total proportion of the compounds of the formulae ST-1 to ST-18, based on the mixture according to the invention, should not exceed 2%.

The term "reliability" as used herein means the quality of the performance of the display during time and with different stress loads, such as light load, temperature, humidity, voltage, and comprises display effects such as image sticking (area and line image sticking), mura, yogore etc. which are known to the skilled person in the field of LC displays. As a standard parameter for categorising the reliability usually the voltage holding ration (VHR) value is used, which is a measure for maintaining a constant electrical voltage in a test display. Among other factors, a high VHR is a prerequisite for a high reliability of the LC medium.

Unless indicated otherwise, the term "PSA" is used hereinafter when referring to displays of the polymer sustained alignment type in general, and the term "PS" is used when referring to specific display modes, like PS-VA, PS-TN and the like.

Also, unless indicated otherwise, the term "RM" is used hereinafter when referring to a polymerisable mesogenic or liquid-crystalline compound.

As used herein, the terms "active layer" and "switchable layer" mean a layer in an electrooptical display, for example an LC display, that comprises one or more molecules having structural and optical anisotropy, like for example LC molecules, which change their orientation upon an external stimulus like an electric or magnetic field, resulting in a change of the transmission of the layer for polarized or unpolarized light.

As used herein, the terms "tilt" and "tilt angle" will be understood to mean a tilted alignment of the LC molecules of an LC medium relative to the surfaces of the cell in an LC display (here preferably a PSA display). The tilt angle here denotes the average angle (< 90°) between the longitudinal molecular axes of the LC molecules (LC director) and the surface of the plane-parallel outer plates which form the LC cell. A low value for the tilt angle (i.e., a large deviation from the 90° angle) corresponds to a large tilt here. A suitable method for measurement of the tilt angle is given in the examples. Unless indicated otherwise, tilt angle values disclosed above and below relate to this measurement method.

As used herein, the terms "reactive mesogen" and "RM" will be understood to mean a compound containing a mesogenic or liquid crystalline skeleton, and one or more functional groups attached thereto which are suitable for polymerisation and are also referred to as "polymerisable group" or "P".

Unless stated otherwise, the term "polymerisable compound" as used herein will be understood to mean a polymerisable monomeric compound.

As used herein, the term "low-molecular-weight compound" will be understood to mean to a compound that is monomeric and/or is not prepared by a polymerisation reaction, as opposed to a "polymeric compound" or a "polymer".

As used herein, the term "unpolymerisable compound" will be understood to mean a compound that does not contain a functional group that is suitable for polymerisation under the conditions usually applied for the polymerisation of the RMs.

The term "mesogenic group" as used herein is known to the person skilled in the art and described in the literature, and means a group which, due to the anisotropy of its attracting and repelling interactions, essentially contributes to causing a liquid-crystal (LC) phase in low-molecular-weight or polymeric substances. Compounds containing mesogenic groups (mesogenic compounds) do not necessarily have to have an LC phase themselves. It is also possible for mesogenic compounds to exhibit LC phase behaviour only after mixing with other compounds and/or after polymerisation. Typical mesogenic groups are, for example, rigid rod- or discshaped units. An overview of the terms and definitions used in connection with mesogenic or LC compounds is given in Pure Appl. Chem. 2001, 73(5), 888 and C. Tschierske, G. Pelzl, S. Diele, Angew. Chem. 2004, 116, 6340-6368.

As used herein, the terms "optically active" and "chiral" are synonyms for materials that are able to induce a helical pitch in a nematic host material, also referred to as "chiral dopants".

The term "spacer group", hereinafter also referred to as "Sp", as used herein is known to the person skilled in the art and is described in the literature, see, for example, Pure Appl. Chem. 2001, 73(5), 888 and C. Tschierske, G. Pelzl, S. Diele, Angew. Chem. 2004, 116, 6340-6368. As used herein, the terms "spacer group" or "spacer" mean a flexible group, for example an alkylene group, which connects the mesogenic group and the polymerisable group(s) in a polymerisable mesogenic compound.

Above and below, 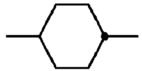 denotes a trans-1,4-cyclohexylene ring.

In a group 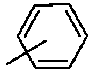 the single bond shown between the two ring atoms can be attached to any free position of the benzene ring.

Above and below "organic group" denotes a carbon or hydrocarbon group.

"Carbon group" denotes a mono- or polyvalent organic group containing at least one carbon atom, where this either contains no further atoms (such as, for example, -C≡C-) or optionally contains one or more further atoms, such as, for example, N, O, S, B, P, Si, Se, As, Te or Ge (for example carbonyl, etc.). The term "hydrocarbon group" denotes a carbon group which additionally contains one or more H atoms and optionally one or more heteroatoms, such as, for example, N, O, S, B, P, Si, Se, As, Te or Ge.

"Halogen" denotes F, Cl, Br or I, preferably F or CI.

-CO-, -C(=O)- and -C(O)- denote a carbonyl group, i.e.,

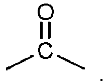

A carbon or hydrocarbon group can be a saturated or unsaturated group. Unsaturated groups are, for example, aryl, alkenyl or alkynyl groups. A carbon or hydrocarbon radical having more than 3 C atoms can be straight chain, branched and/or cyclic and may also contain spiro links or condensed rings.

The terms "alkyl", "aryl", "heteroaryl", etc., also encompass polyvalent groups, for example alkylene, arylene, heteroarylene, etc.

The term "aryl" denotes an aromatic carbon group or a group derived therefrom. The term "heteroaryl" denotes "aryl" as defined above, containing one or more heteroatoms, preferably selected from N, O, S, Se, Te, Si and Ge.

Preferred carbon and hydrocarbon groups are optionally substituted, straight-chain, branched or cyclic, alkyl, alkenyl, alkynyl, alkoxy, alkylcarbonyl, alkoxycarbonyl, alkylcarbonyloxy and alkoxycarbonyloxy having 1 to 40, preferably 1 to 20, very preferably 1 to 12, C atoms, optionally substituted aryl or aryloxy having 5 to 30, preferably 6 to 25, C atoms, or optionally substituted alkylaryl, arylalkyl, alkylaryloxy, arylalkyloxy, arylcarbonyl, aryloxycarbonyl, arylcarbonyloxy and aryloxycarbonyloxy having 5 to 30, preferably 6 to 25, C atoms, wherein one or more C atoms may also be replaced by hetero atoms, preferably selected from N, O, S, Se, Te, Si and Ge.

Further preferred carbon and hydrocarbon groups are C₁-C₂₀ alkyl, C₂-C₂₀ alkenyl, C₂-C₂₀ alkynyl, C₃-C₂₀ allyl, C₄-C₂₀ alkyldienyl, C₄-C₂₀ polyenyl, C₆-C₂₀ cycloalkyl, C₄-C₁₅ cycloalkenyl, C₆-C₃₀ aryl, C₆-C₃₀ alkylaryl, C₆-C₃₀ arylalkyl, C₆-C₃₀ alkylaryloxy, C₆-C₃₀ arylalkyloxy, C₂-C₃₀ heteroaryl, C₂-C₃₀ heteroaryloxy.

Particular preference is given to C₁-C₁₂ alkyl, C₂-C₁₂ alkenyl, C₂-C₁₂ alkynyl, C₆-C₂₅ aryl and C₂-C₂₅ heteroaryl.

Further preferred carbon and hydrocarbon groups are straight-chain, branched or cyclic alkyl having 1 to 20, preferably 1 to 12, C atoms, which are unsubstituted or mono- or polysubstituted by F, Cl, Br, I or CN and in which one or more non-adjacent CH₂ groups may each be replaced, independently of one another, by - C(R^{x})=C(R^{x})-, -C≡-, -N(R^{x})-, -O-, -S-, -CO-, -CO-O-, -O-CO-, -O-CO-O- in such a way that O and/or S atoms are not linked directly to one another.

R^{x} preferably denotes H, F, Cl, CN, a straight-chain, branched or cyclic alkyl chain having 1 to 25 C atoms, in which, in addition, one or more non-adjacent C atoms may be replaced by -O-, -S-, -CO-, -CO-O-, -O-CO-, -O-CO-O- and in which one or more H atoms may be replaced by F or CI, or denotes an optionally substituted aryl or aryloxy group with 6 to 30 C atoms, or an optionally substituted heteroaryl or heteroaryloxy group with 2 to 30 C atoms.

Preferred alkyl groups are, for example, methyl, ethyl, n-propyl, isopropyl, n-butyl, isobutyl, s-butyl, t-butyl, 2-methylbutyl, n-pentyl, s-pentyl, cyclopentyl, n-hexyl, cyclohexyl, 2-ethylhexyl, n-heptyl, cycloheptyl, n-octyl, cyclooctyl, n-nonyl, n-decyl, n-undecyl, n-dodecyl, dodecanyl, trifluoromethyl, perfluoro-n-butyl, 2,2,2-trifluoroethyl, perfluorooctyl, perfluorohexyl, etc.

Preferred alkenyl groups are, for example, ethenyl, propenyl, butenyl, pentenyl, cyclopentenyl, hexenyl, cyclohexenyl, heptenyl, cycloheptenyl, octenyl, cyclooctenyl, etc.

Preferred alkynyl groups are, for example, ethynyl, propynyl, butynyl, pentynyl, hexynyl, octynyl, etc.

Preferred alkoxy groups are, for example, methoxy, ethoxy, 2-methoxyethoxy, n-propoxy, i-propoxy, n-butoxy, i-butoxy, s-butoxy, t-butoxy, 2-methylbutoxy, n-pentoxy, n-hexoxy, n-heptoxy, n-octoxy, n-nonoxy, n-decoxy, n-undecoxy, n-dodecoxy, etc.

Preferred amino groups are, for example, dimethylamino, methylamino, methylphenylamino, phenylamino, etc.

Aryl and heteroaryl groups can be monocyclic or polycyclic, i.e., they can contain one ring (such as, for example, phenyl) or two or more rings, which may also be fused (such as, for example, naphthyl) or covalently bonded (such as, for example, biphenyl), or contain a combination of fused and linked rings. Heteroaryl groups contain one or more heteroatoms, preferably selected from O, N, S and Se.

Particular preference is given to mono-, bi- or tricyclic aryl groups having 6 to 25 C atoms and mono-, bi- or tricyclic heteroaryl groups having 5 to 25 ring atoms, which optionally contain fused rings and are optionally substituted. Preference is furthermore given to 5-, 6- or 7-membered aryl and heteroaryl groups, in which, in addition, one or more CH groups may be replaced by N, S or O in such a way that O atoms and/or S atoms are not linked directly to one another.

Preferred aryl groups are, for example, phenyl, biphenyl, terphenyl, [1,1':3',1"]terphenyl-2'-yl, naphthyl, anthracene, binaphthyl, phenanthrene, 9,10-dihydro-phenanthrene, pyrene, dihydropyrene, chrysene, perylene, tetracene, pentacene, benzopyrene, fluorene, indene, indenofluorene, spirobifluorene, etc.

Preferred heteroaryl groups are, for example, 5-membered rings, such as pyrrole, pyrazole, imidazole, 1,2,3-triazole, 1,2,4-triazole, tetrazole, furan, thiophene, selenophene, oxazole, isoxazole, 1,2-thiazole, 1,3-thiazole, 1,2,3-oxadiazole, 1,2,4-oxadiazole, 1,2,5-oxadiazole, 1,3,4-oxadiazole, 1,2,3-thiadiazole, 1,2,4-thiadiazole, 1,2,5-thiadiazole, 1,3,4-thiadiazole, 6-membered rings, such as pyridine, pyridazine, pyrimidine, pyrazine, 1,3,5-triazine, 1,2,4-triazine, 1,2,3-triazine, 1,2,4,5-tetrazine, 1,2,3,4-tetrazine, 1,2,3,5-tetrazine, or condensed groups, such as indole, isoindole, indolizine, indazole, benzimidazole, benzotriazole, purine, naphthimidazole, phenanthrimidazole, pyridimidazole, pyrazinimidazole, quinoxalinimidazole, benzoxazole, naphthoxazole, anthroxazole, phenanthroxazole, isoxazole, benzothiazole, benzofuran, isobenzofuran, dibenzofuran, quinoline, isoquinoline, pteridine, benzo-5,6-quinoline, benzo-6,7-quinoline, benzo-7,8-quinoline, benzoisoquinoline, acridine, phenothiazine, phenoxazine, benzopyridazine, benzopyrimidine, quinoxaline, phenazine, naphthyridine, azacarbazole, benzocarboline, phenanthridine, phenanthroline, thieno[2,3b]thiophene, thieno[3,2b]thiophene, dithienothiophene, isobenzothiophene, dibenzothiophene, benzothiophene, benzothiadiazothiophene, or combinations of these groups.

The aryl and heteroaryl groups mentioned above and below may also be substituted by alkyl, alkoxy, thioalkyl, fluorine, fluoroalkyl or further aryl or heteroaryl groups.

The (non-aromatic) alicyclic and heterocyclic groups encompass both saturated rings, i.e., those containing exclusively single bonds, and also partially unsaturated rings, i.e., those which may also contain multiple bonds. Heterocyclic rings contain one or more heteroatoms, preferably selected from Si, O, N, S and Se.

The (non-aromatic) alicyclic and heterocyclic groups can be monocyclic, i.e., contain only one ring (such as, for example, cyclohexane), or polycyclic, i.e., contain a plurality of rings (such as, for example, decahydronaphthalene or bicyclooctane). Particular preference is given to saturated groups. Preference is furthermore given to mono-, bi- or tricyclic groups having 5 to 25 ring atoms, which optionally contain fused rings and are optionally substituted. Preference is furthermore given to 5-, 6-, 7- or 8-membered carbocyclic groups, in which, in addition, one or more C atoms may be replaced by Si and/or one or more CH groups may be replaced by N and/or one or more non-adjacent CH₂ groups may be replaced by -O- and/or -S-.

Preferred alicyclic and heterocyclic groups are, for example, 5-membered groups, such as cyclopentane, tetrahydrofuran, tetrahydrothiofuran, pyrrolidine, 6-membered groups, such as cyclohexane, silinane, cyclohexene, tetrahydropyran, tetrahydrothiopyran, 1,3-dioxane, 1,3-dithiane, piperidine, 7-membered groups, such as cycloheptane, and fused groups, such as tetrahydronaphthalene, decahydronaphthalene, indane, bicyclo[1.1.1]pentane-1,3-diyl, bicyclo[2.2.2]octane-1,4-diyl, spiro[3.3]heptane-2,6-diyl, octahydro-4,7-methanoindane-2,5-diyl. Preferred substituents are, for example, solubility-promoting groups, such as alkyl or alkoxy, electron-withdrawing groups, such as fluorine, nitro or nitrile, or substituents for increasing the glass transition temperature (Tg) in the polymer, in particular bulky groups, such as, for example, t-butyl or optionally substituted aryl groups.

Preferred substituents, hereinafter also referred to as "L^{S}", are, for example, F, Cl, Br, I, -CN, -NO₂, -NCO, -NCS, -OCN, -SCN, -C(=O)N(R^{x})₂, -C(=O)Y', -C(=O)R^{x}, -N(R^{x})₂, straight-chain or branched alkyl, alkoxy, alkylcarbonyl, alkoxycarbonyl, alkylcarbonyloxy or alkoxycarbonyloxy each having 1 to 25 C atoms, in which one or more H atoms may optionally be replaced by F or CI, optionally substituted silyl having 1 to 20 Si atoms, or optionally substituted aryl having 6 to 25, preferably 6 to 15, C atoms,
wherein R^{x} denotes H, F, Cl, CN, or straight chain, branched or cyclic alkyl having 1 to 25 C atoms, wherein one or more non-adjacent CH₂-groups are optionally replaced by -O-, -S-, -CO-, -CO-O-, -O-CO-, -O-CO-O- in such a manner that O- and/or S-atoms are not directly connected with each other, and wherein one or more H atoms are each optionally replaced by F, CI, P- or P-Sp-, and
Y¹ denotes halogen.
"Substituted silyl or aryl" preferably means substituted by halogen, -CN, R⁰, -OR⁰, -CO-R⁰, -CO-O-R⁰, -O-CO-R⁰ or -O-CO-O-R⁰, wherein R⁰ denotes H or alkyl with 1 to 20 C atoms.

Particularly preferred substituents L are, for example, F, Cl, CN, NO₂, CH₃, C₂H₅, OCH₃, OC₂H₅, COCH₃, COC₂H₅, COOCH₃, COOC₂H₅, CF₃, OCF₃, OCHF₂, OC₂F₅, furthermore phenyl.

A¹ and A² very preferably denote 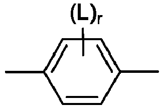 in which L has one of the meanings indicated above and r denotes 0, 1, 2, 3 or 4, in particular 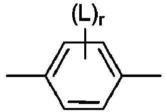 denotes

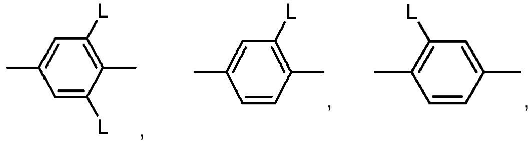

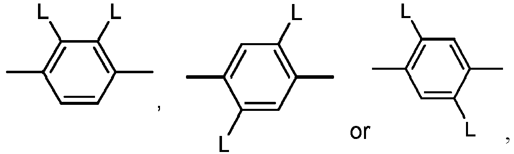

The polymerisable group P is a group which is suitable for a polymerisation reaction, such as, for example, free-radical or ionic chain polymerisation, polyaddition or polycondensation, or for a polymer-analogous reaction, for example addition or condensation onto a main polymer chain. Particular preference is given to groups for chain polymerisation, in particular those containing a C=C double bond or -C≡C-triple bond, and groups which are suitable for polymerisation with ring opening, such as, for example, oxetane or epoxide groups.

Preferred groups P are selected from the group consisting of CH₂=CW¹-CO-O-, CH₂=CW1-CO-, 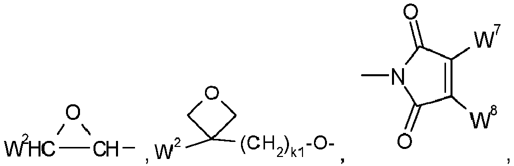 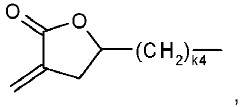 CH₂=CW²-(O)ₖ₃-, CW¹=CH-CO-(O)ₖ₃-, CW¹=CH-CO-NH-, CH₂=CW¹CO-NH-, CH₃-CH=CH-O-, (CH₂=CH)₂CH-OCO-, (CH₂=CH-CH₂)₂CH-OCO-, (CH₂=CH)₂CH-O-, (CH₂=CH-CH₂)₂N-, (CH₂=CH-CH₂)₂N-CO-, HO-CW²W³-, HS-CW²W³-, HW²N-, HO-CW²W³-NH-, CH₂=CW¹-CO-NH-, CH₂=CH-(COO)ₖ₁-Phe-(O)ₖ₂-, CH₂=CH-(CO)ₖ₁-Phe-(O)ₖ₂-, Phe-CH=CH-, HOOC-, OCN- and W⁴W⁵W⁶Si-, in which W¹ denotes H, F, Cl, CN, CF₃, phenyl or alkyl having 1 to 5 C atoms, in particular H, F, Cl or CH₃, W² and W³ each, independently of one another, denote H or alkyl having 1 to 5 C atoms, in particular H, methyl, ethyl or n-propyl, W⁴, W⁵ and W⁶ each, independently of one another, denote CI, oxaalkyl or oxacarbonylalkyl having 1 to 5 C atoms, W⁷ and W⁸ each, independently of one another, denote H, Cl or alkyl having 1 to 5 C atoms, Phe denotes 1,4-phenylene, which is optionally substituted by one or more radicals L as defined above which are other than P-Sp-, k₁, k₂ and k₃ each, independently of one another, denote 0 or 1, k₃ preferably denotes 1, and k₄ denotes an integer from 1 to 10.

Very preferred groups P are selected from the group consisting of CH₂=CW¹-CO-O-, CH₂=CW¹-CO-, 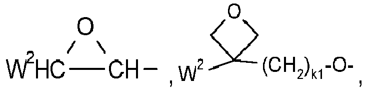 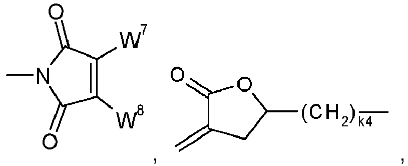 CH₂=CW²-O-, CH₂=CW²-, CW¹=CH-CO-(O)ₖ₃-, CW¹=CH-CO-NH-, CH₂=CW¹-CO-NH-, (CH₂=CH)₂CH-OCO-, (CH₂=CH-CH₂)₂CH-OCO-, (CH₂=CH)₂CH-O-, (CH₂=CH-CH₂)₂N-, (CH₂=CH-CH₂)₂N-CO-, CH₂=CW¹-CO-NH-, CH₂=CH-(COO)ₖ₁-Phe-(O)ₖ₂-, CH₂=CH-(CO)ₖ₁-Phe-(O)ₖ₂-, Phe-CH=CH- and W⁴W⁵W⁶Si-, in which W¹ denotes H, F, Cl, CN, CF₃, phenyl or alkyl having 1 to 5 C atoms, in particular H, F, Cl or CH₃, W² and W³ each, independently of one another, denote H or alkyl having 1 to 5 C atoms, in particular H, methyl, ethyl or n-propyl, W⁴, W⁵ and W⁶ each, independently of one another, denote CI, oxaalkyl or oxacarbonylalkyl having 1 to 5 C atoms, W⁷ and W⁸ each, independently of one another, denote H, Cl or alkyl having 1 to 5 C atoms, Phe denotes 1,4-phenylene, k₁, k₂ and k₃ each, independently of one another, denote 0 or 1, k₃ preferably denotes 1, and k₄ denotes an integer from 1 to 10.

Very particularly preferred groups P are selected from the group consisting of CH₂=CW¹-CO-O-, in particular CH₂=CH-CO-O-, CH₂=C(CH₃)-CO-O- and CH₂=CF-CO-O-, furthermore CH₂=CH-O-, (CHz=CH)zCH-O-CO-, (CH₂=CH)₂CH-O-,

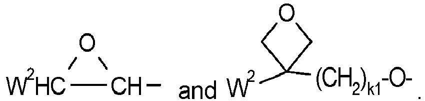

Further preferred polymerisable groups P are selected from the group consisting of vinyloxy, acrylate, methacrylate, fluoroacrylate, chloroacrylate, oxetane and epoxide, most preferably from acrylate and methacrylate.

If the spacer group Sp is different from a single bond, it is preferably of the formula Sp"-X", so that the respective radical P-Sp- conforms to the formula R-Sp"-X"-, wherein
Sp" denotes linear or branched alkylene having 1 to 20, preferably 1 to 12, C atoms, which is optionally mono- or polysubstituted by F, Cl, Br, I or CN and in which, in addition, one or more non-adjacent CH₂ groups may each be replaced, independently of one another, by -O-, -S-,
   -NH-, -N(R⁰)-, -Si(R⁰R⁰⁰)-, -CO-, -CO-O-, -O-CO-, -O-CO-O-, -S-CO-, -CO-S-, -N(R⁰⁰)-CO-O-, -O-CO-N(R⁰)-, -N(R⁰)-CO-N(R⁰⁰)-, -CH=CH- or -C≡C- in such a way that O and/or S atoms are not linked directly to one another,
X" denotes -O-, -S-, -CO-, -CO-O-, -O-CO-, -O-CO-O-, -CO-N(R⁰)-, -N(R⁰)-CO-, -N(R⁰)-CO-N(R⁰⁰)-, -OCH₂-, -CH₂O-, -SCH₂-, -CH₂S-, -CF₂O-, -OCF₂-, -CF₂S-, -SCF₂-, -CF₂CH₂-, -CH₂CF₂-, -CF₂CF₂-, -CH=N-, -N=CH-, -N=N-, -CH=CR⁰-, -CY²=CY³-, -C≡C-, -CH=CH-CO-O-, -O-CO-CH=CH- or a single bond,
R⁰ and R⁰⁰ each, independently of one another, denote H or alkyl having 1 to 20 C atoms, and
Y² and Y³ each, independently of one another, denote H, F, Cl or CN.
X" is preferably -O-, -S-, -CO-, -COO-, -OCO-, -O-COO-, -CO-NR⁰-, -NR⁰-CO-, -NR⁰-CO-NR⁰⁰- or a single bond.

Typical spacer groups Sp and -Sp"-X"- are, for example, -(CH₂)ₚ₁-, -(CH₂)ₚ₁-O-, - (CH₂)ₚ₁-O-CO-, -(CH₂)ₚ₁-CO-O-, -(CH₂)ₚ₁-O-CO-O-, -(CH₂CH₂O)_{q1}-CH₂CH₂-, - CH₂CH₂-S-CH₂CH₂-, -CH₂CH₂-NH-CH₂CH₂- or-(SiR⁰R⁰⁰-O)ₚ₁-, in which p1 is an integer from 1 to 12, q1 is an integer from 1 to 3, and R⁰ and R⁰⁰ have the meanings indicated above.

Particularly preferred groups Sp and -Sp"-X"- are -(CH₂)ₚ₁-, -(CH₂)ₚ₁-O-, -(CH₂)ₚ₁-O-CO-, -(CH₂)ₚ₁-CO-O-, -(CH₂)ₚ₁-O-CO-O-, in which p1 and q1 have the meanings indicated above.

Particularly preferred groups Sp" are, in each case straight-chain, ethylene, propylene, butylene, pentylene, hexylene, heptylene, octylene, nonylene, decylene, undecylene, dodecylene, octadecylene, ethyleneoxyethylene, methyleneoxybutylene, ethylenethioethylene, ethylene-N-methyliminoethylene, 1-methylalkylene, ethenylene, propenylene and butenylene.

In a preferred embodiment of the invention the compounds of formula R and its subformulae contain a spacer group Sp that is substituted by one or more polymerisable groups P, so that the group Sp-P corresponds to Sp(P)ₛ, with s being ≥2 (branched polymerisable groups).

Preferred compounds of formula R according to this preferred embodiment are those wherein s is 2, i.e., compounds which contain a group Sp(P)₂. Very preferred compounds of formula R according to this preferred embodiment contain a group selected from the following formulae:

| | |
|---|---|
| -X-alkyl-CHPP | S1 |
| -X-alkyl-CH((CH₂)ₐₐP)((CH₂)_{bb}P) | S2 |
| -X-N((CH₂)ₐₐP)((CH₂)_{bb}P) | S3 |
| -X-alkyl-CHP-CH₂-CH₂P | S4 |
| -X-alkyl-C(CH₂P)(CH₂P)-CₐₐH₂ₐₐ₊₁ | S5 |
| -X-alkyl-CHP-CH₂P | S6 |
| -X-alkyl-CPP-CₐₐH₂ₐₐ₊₁ | S7 |
| -X-alkyl-CHPCHP-CₐₐH₂ₐₐ₊₁ | S8 |

in which P is as defined in formula R,
alkyl denotes a single bond or straight-chain or branched alkylene having 1 to 12 C atoms which is unsubstituted or mono- or polysubstituted by F, Cl or CN and in which one or more non-adjacent CH₂ groups may each, independently of one another, be replaced by -C(R⁰)=C(R⁰)-, -C≡C-, -N(R⁰)-, -O-, -S-, -CO-, -CO-O-, -O-CO-, -O-CO-O- in such a way that O and/or S atoms are not linked directly to one another, where R⁰ has the meaning indicated above,
aa and bb each, independently of one another, denote 0, 1, 2, 3, 4, 5 or 6,
X has one of the meanings indicated for X", and is preferably O, CO, SO₂, O-CO-, CO-O or a single bond.

Preferred spacer groups Sp(P)₂ are selected from formulae S1, S2 and S3.

Very preferred spacer groups Sp(P)₂ are selected from the following subformulae:

| | |
|---|---|
| -CHPP | S1a |
| -O-CHPP | S1b |
| -CH₂-CHPP | S1c |
| -OCH₂-CHPP | S1d |
| -CH(CH₂-P)(CH₂-P) | S2a |
| -OCH(CH₂-P)(CH₂-P) | S2b |
| -CH₂-CH(CH₂-P)(CH₂-P) | S2c |
| -OCH₂-CH(CH₂-P)(CH₂-P) | S2d |
| -CO-NH((CH₂)₂P)((CH₂)₂P) | S3a |

In the compounds of formula R and its subformulae as described above and below, P is preferably selected from the group consisting of vinyloxy, acrylate, methacrylate, fluoroacrylate, chloroacrylate, oxetane and epoxide, most preferably from acrylate and methacrylate.

Further preferred are compounds of formula R and its subformulae as described above and below, wherein all polymerisable groups P that are present in the compound have the same meaning, and very preferably denote acrylate or methacrylate, most preferably methacrylate.

In the compounds of formula R and its subformulae as described above and below, R preferably denotes P-Sp-.

Further preferred are compounds of formula R and its subformulae as described above and below, wherein Sp denotes a single bond or -(CH₂)ₚ₁-, -O-(CH₂)ₚ₁-, -O-CO-(CH₂)ₚ₁, or -CO-O-(CH₂)ₚ₁, wherein p1 is 2, 3, 4, 5 or 6, and, if Sp is -O-(CH₂)ₚ₁-, -O-CO-(CH₂)ₚ₁ or -CO-O-(CH₂)ₚ₁ the O-atom or CO-group, respectively, is linked to the benzene ring.

Further preferred are compounds of formula R and its subformulae as described above and below, wherein at least one group Sp is a single bond.

Further preferred are compounds of formula R and its subformulae as described above and below, wherein at least one group Sp is different from a single bond, and is preferably selected from -(CH₂)ₚ₁-, -O-(CH₂)ₚ₁-, -O-CO-(CH₂)ₚ₁, or-CO-O-(CH₂)ₚ₁, wherein p1 is 2, 3, 4, 5 or 6, and, if Sp is -O-(CH₂)ₚ₁-, -O-CO-(CH₂)ₚ₁ or -CO-O-(CH₂)ₚ₁ the O-atom or CO-group, respectively, is linked to the benzene ring.

Very preferred groups -A¹-(Z-A²)_{z}- in formula R are selected from the following formulae 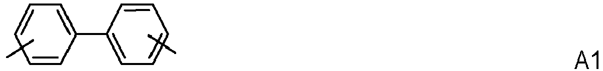 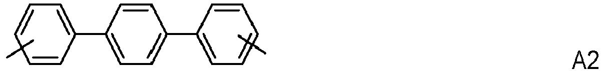 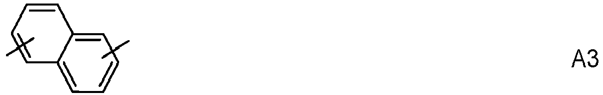 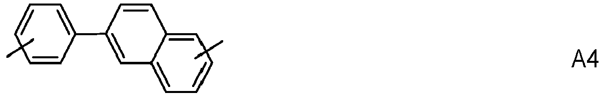 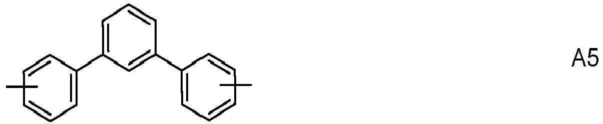 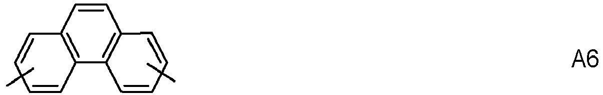 wherein at least one benzene ring is substituted by at last one group L and the benzene rings are optionally further substituted by one or more groups L or P-Sp-.

Preferred compounds of formula R and their subformulae are selected from the following preferred embodiments, including any combination thereof:
- All groups P in the compound have the same meaning,
- -A¹-(Z-A²)_{z}- is selected from formulae A1, A2 and A5,
- the compounds contain exactly two polymerizable groups (represented by the groups P),
- the compounds contain exactly three polymerizable groups (represented by the groups P),
- P is selected from the group consisting of acrylate, methacrylate and oxetane, very preferably acrylate or methacrylate,
- P is methacrylate,
- all groups Sp are a single bond,
- at least one of the groups Sp is a single bond and at least one of the groups Sp is different from a single bond,
- Sp, when being different from a single bond, is -(CH₂)ₚ₂-, -(CH₂)ₚ₂-O-,
   -(CH₂)ₚ₂-CO-O-, -(CH₂)ₚ₂-O-CO-, wherein p2 is 2, 3, 4, 5 or 6, and the O-atom or the CO-group, respectively, is connected to the benzene ring,
- Sp is a single bond or denotes -(CH₂)ₚ₂-, -(CH₂)ₚ₂-O-, -(CH₂)ₚ₂-CO-O-, -(CH₂)ₚ₂-O-CO-, wherein p2 is 2, 3, 4, 5 or 6, and the O-atom or the CO-group, respectively, is connected to the benzene ring,
- R denotes P-Sp-,
- R does not denote or contain a polymerizable group,
- R does not denote or contain a polymerizable group and denotes straight chain, branched or cyclic alkyl having 1 to 25 C atoms, wherein one or more non-adjacent CH₂-groups are optionally replaced by -O-,
   -S-, -CO-, -CO-O-, -O-CO-, -O-CO-O- in such a manner that O- and/or S-atoms are not directly connected with each other, and wherein one or more H atoms are each optionally replaced by F, Cl or L^{a},
- L or L' denote F, Cl or CN,
- LisF.

Suitable and preferred compounds of formula R are selected from the following formulae: 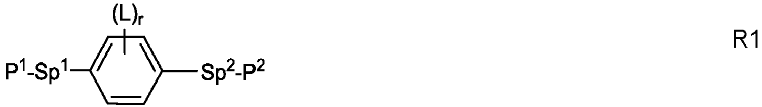 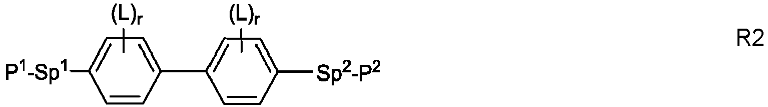 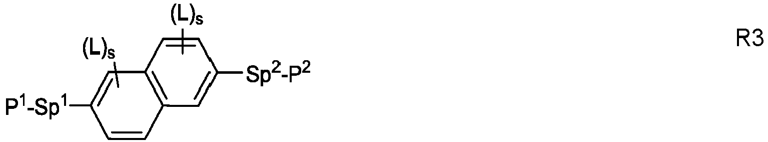 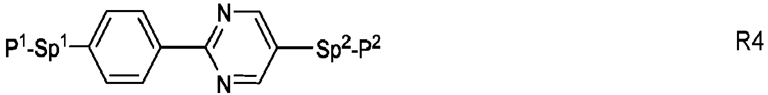 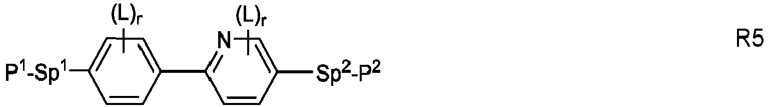 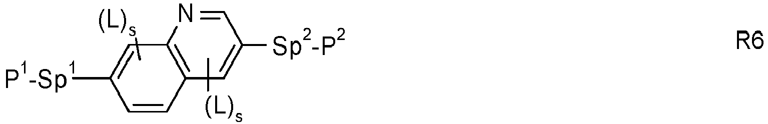 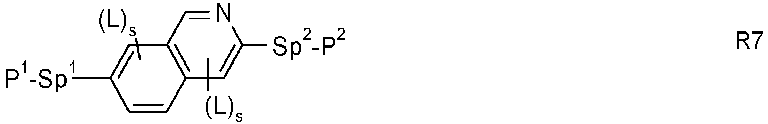 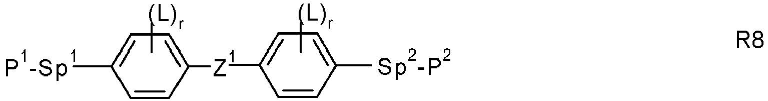 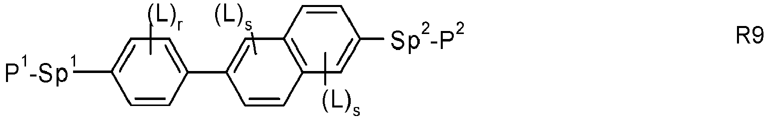 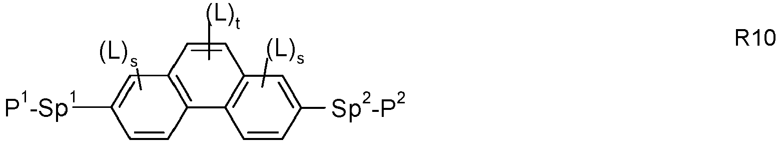 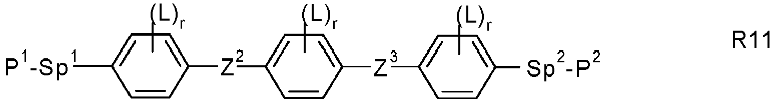 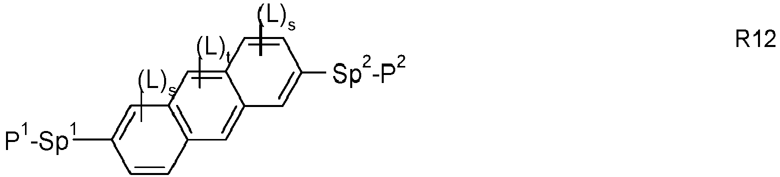 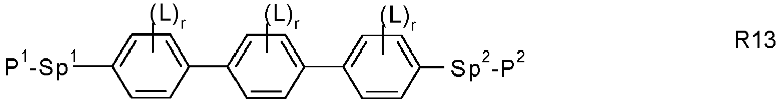 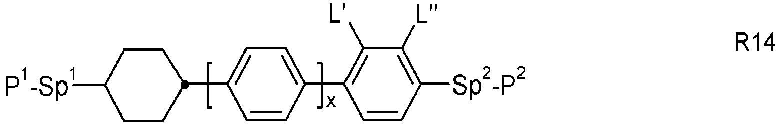 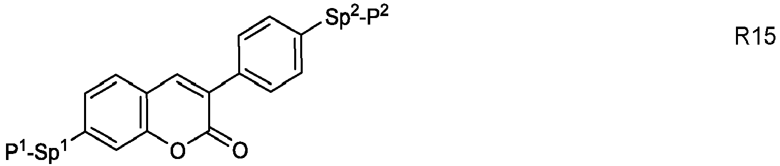 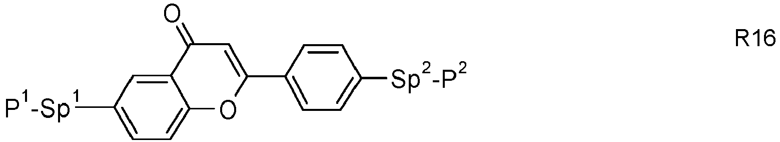 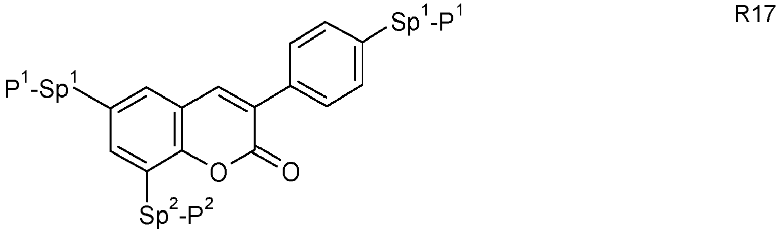 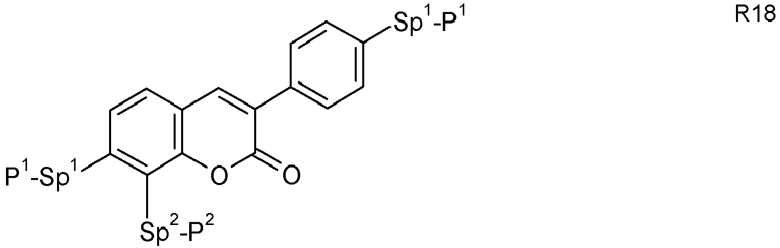 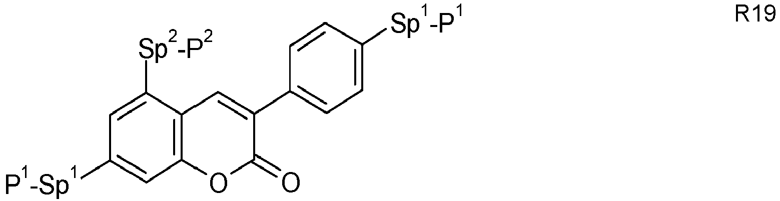 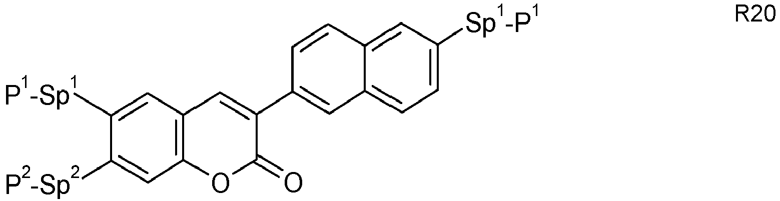 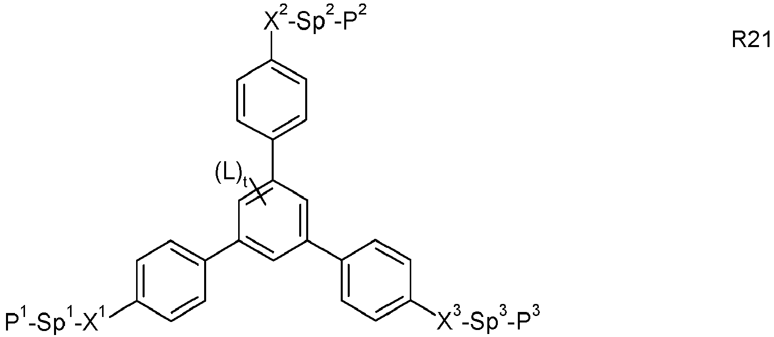 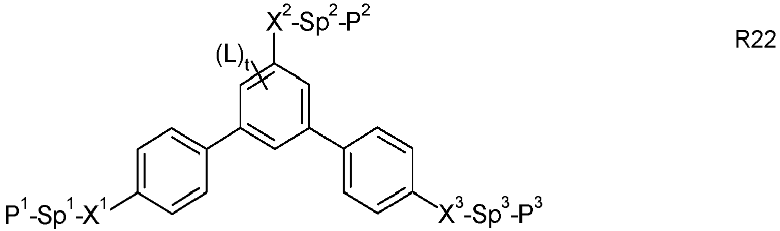 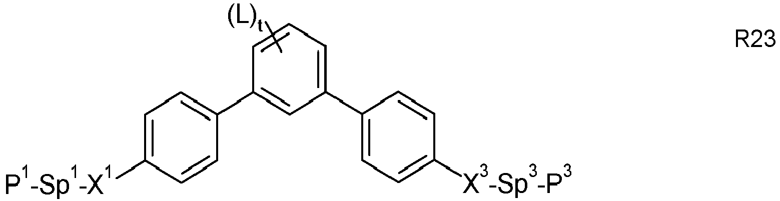 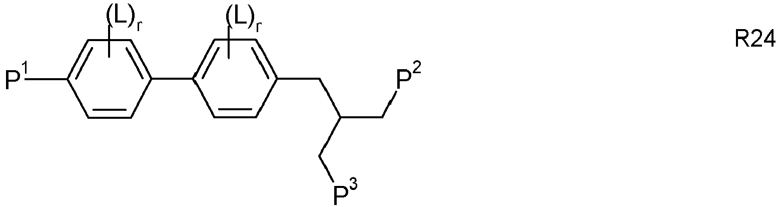 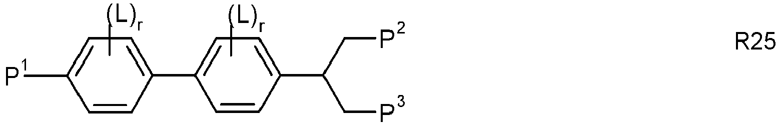 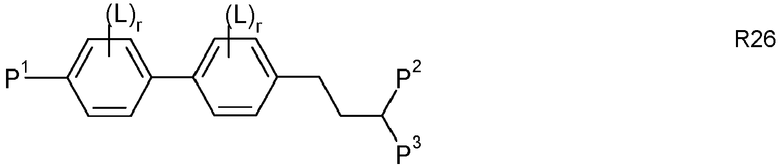 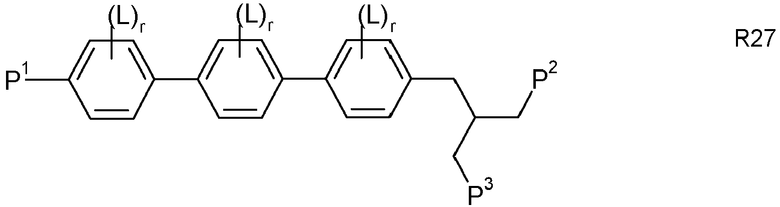 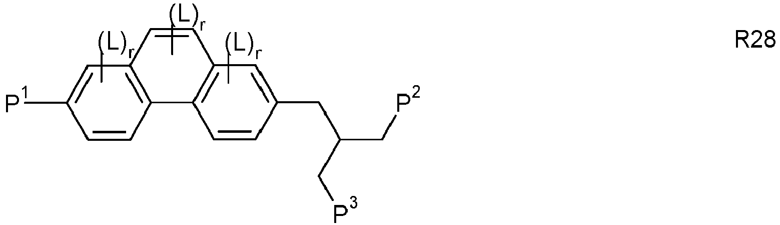 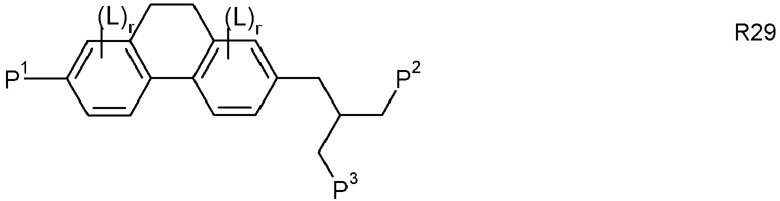 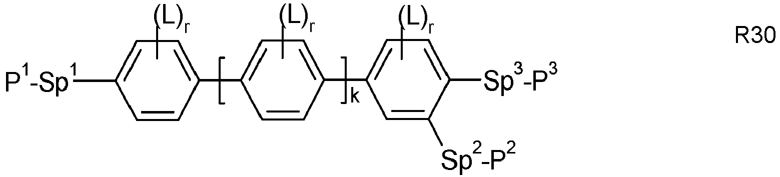 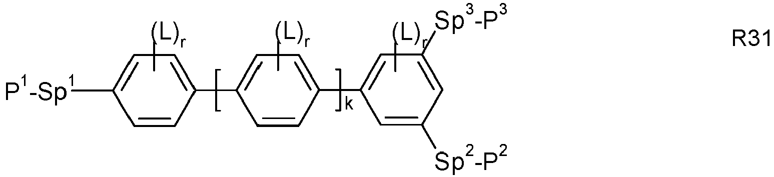 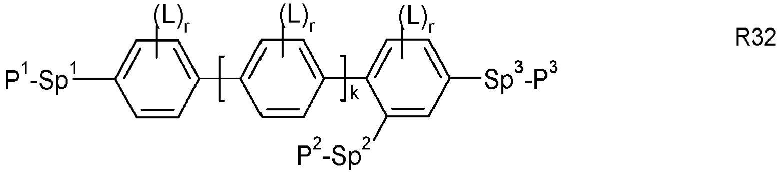 in which the individual radicals have the following meanings:
- P¹, P² and P³: each, independently of one another, denote an acrylate or methacrylate group,
- Sp¹, Sp² and Sp³: each, independently of one another, denote a single bond or a spacer group having one of the meanings indicated above and below for Sp, and particularly preferably denote -(CH₂)ₚ₁-, -(CH₂)ₚ₁-O-, -(CH₂)ₚ₁-CO-O-, -(CH₂)ₚ₁-O-CO- or -(CH₂)ₚ₁-O-CO-O-, in which p1 is an integer from 1 to 12, where, in addition, one or more of the radicals P¹-Sp¹-, P²-Sp²- and P³-Sp³-may denote R^{aa}, with the proviso that at least one of the radicals P¹-Sp¹-, P²-Sp²- and P³-Sp³- present is different from R^{aa},
- R^{aa}: denotes H, F, Cl, CN or straight-chain or branched alkyl having 1 to 25 C atoms, in which, in addition, one or more non-adjacent CH₂ groups may each be replaced, independently of one another, by -C(R⁰)=C(R⁰⁰)-, -C≡C-, -N(R⁰)-, -O-, -S-, -CO-, -CO-O-, -O-CO-, -O-CO-O- in such a way that O and/or S atoms are not linked directly to one another, and in which, in addition, one or more H atoms may be replaced by F, CI, CN or P¹-Sp¹-, particularly preferably straight-chain or branched, optionally mono- or polyfluorinated alkyl, alkoxy, alkenyl, alkynyl, alkylcarbonyl, alkoxycarbonyl, alkylcarbonyloxy or alkoxycarbonyloxy having 1 to 12 C atoms (where the alkenyl and alkynyl radicals have at least two C atoms and the branched radicals have at least three C atoms),
- R⁰, R⁰⁰: each, independently of one another and identically or differently on each occurrence, denote H or alkyl having 1 to 12 C atoms,
- R^{y} and R^{z}: each, independently of one another, denote H, F, CH₃ or CF₃,
- X¹, X² and X³: each, independently of one another, denote -CO-O-, -O-CO- or a single bond,
- Z¹: denotes -O-, -CO-, -C(R^{y}R^{z})- or -CF₂CF₂-,
- Z² and Z³: each, independently of one another, denote -CO-O-, -O-CO-, -CH₂O-,-OCH₂-, -CF₂O-, -OCF₂- or -(CH₂)ₙ-, where n is 2, 3 or 4,
- L: on each occurrence, identically or differently, denotes F, Cl, CN or straight-chain or branched, optionally mono- or polyfluorinated alkyl, alkoxy, alkenyl, alkynyl, alkylcarbonyl, alkoxycarbonyl, alkylcarbonyloxy or alkoxycarbonyloxy having 1 to 12 C atoms, preferably F,
- L' and L": each, independently of one another, denote H, F or CI,
- k: denotes 0 or 1,
- r: denotes 0, 1, 2, 3 or 4,
- s: denotes 0, 1, 2 or 3,
- t: denotes 0, 1 or 2,
- x: denotes 0 or 1.

Especially preferred are compounds of formulae R2, R13, R17, R22, R23, R24, R30, R31 and R32.

Further preferred are trireactive compounds R15 to R30, in particular R17, R18, R19, R22, R23, R24, R25, R26, R30, R31 and R32.

In the compounds of formulae R1 to R32 the group 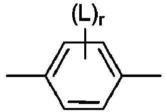 is preferably 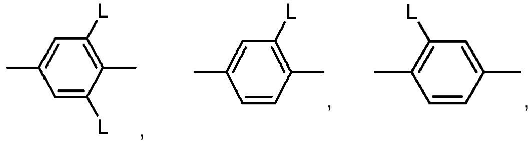 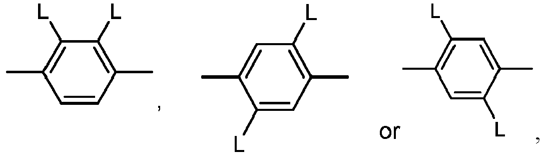 wherein L on each occurrence, identically or differently, has one of the meanings given above or below, and is preferably F, CI, CN, NO₂, CH₃, C₂H₅, C(CH₃)₃, CH(CH₃)₂, CH₂CH(CH₃)C₂H₅, OCH₃, OC₂H₅, COCH₃, COC₂H₅, COOCH₃, COOC₂H₅, CF₃, OCF₃, OCHF₂, OC₂F₅ or P-Sp-, very preferably F, CI, CN, CH₃, C₂H₅, OCH₃, COCH₃, OCF₃ or P-Sp-, more preferably F, Cl, CH₃, OCH₃, COCH₃ oder OCF₃, especially F or CH₃.

For the production of PSA displays, the polymerisable compounds contained in the LC medium are polymerised or crosslinked (if one compound contains two or more polymerisable groups) by in-situ polymerisation in the LC medium between the substrates of the LC display, optionally while a voltage is applied to the electrodes.

The structure of the PSA displays according to the invention corresponds to the usual geometry for PSA displays, as described in the prior art cited at the outset. Geometries without protrusions are preferred, in particular those in which, in addition, the electrode on the colour filter side is unstructured and only the electrode on the TFT side has slots. Particularly suitable and preferred electrode structures for PS-VA displays are described, for example, in US 2006/0066793 A1.

A preferred PSA type LC display of the present invention comprises:
- a first substrate including a pixel electrode defining pixel areas, the pixel electrode being connected to a switching element disposed in each pixel area and optionally including a micro-slit pattern, and optionally a first alignment layer disposed on the pixel electrode,
- a second substrate including a common electrode layer, which may be disposed on the entire portion of the second substrate facing the first substrate, and optionally a second alignment layer,
- an LC layer disposed between the first and second substrates and including an LC medium comprising a polymerisable component comprising one or more compounds of formula R and a chiral nematic liquid crystal host including as described above and below, wherein the polymerisable component may also be polymerised.

The first and/or second alignment layer controls the alignment direction of the LC molecules of the LC layer. For example, in PS-VA displays the alignment layer is selected such that it imparts to the LC molecules homeotropic (or vertical) alignment (i.e., perpendicular to the surface) or tilted alignment. Such an alignment layer may for example comprise a polyimide, which may also be rubbed, or may be prepared by a photoalignment method.

The LC layer with the LC medium can be deposited between the substrates of the display by methods that are conventionally used by display manufacturers, for example the so-called one-drop-filling (ODF) method. The polymerisable component of the LC medium is then polymerised for example by UV photopolymerisation. The polymerisation can be carried out in one step or in two or more steps.

The PSA display may comprise further elements, like a colour filter, a black matrix, a passivation layer, optical retardation layers, transistor elements for addressing the individual pixels, etc., all of which are well known to the person skilled in the art and can be employed without inventive skill.

The electrode structure can be designed by the skilled person depending on the individual display type. For example, for PS-VA displays a multi-domain orientation of the LC molecules can be induced by providing electrodes having slits and/or bumps or protrusions in order to create two, four or more different tilt alignment directions.

Upon polymerisation the polymerisable compounds form a crosslinked polymer, which causes a certain pretilt of the LC molecules in the LC medium. Without wishing to be bound to a specific theory, it is believed that at least a part of the crosslinked polymer, which is formed by the polymerisable compounds, will phaseseparate or precipitate from the LC medium and form a polymer layer on the substrates or electrodes, or the alignment layer provided thereon. Microscopic measurement data (like SEM and AFM) have confirmed that at least a part of the formed polymer accumulates at the LC/substrate interface.

The polymerisation can be carried out in one step. It is also possible firstly to carry out the polymerisation, optionally while applying a voltage, in a first step in order to produce a pretilt angle, and subsequently, in a second polymerisation step without an applied voltage, to polymerise or crosslink the compounds which have not reacted in the first step ("end curing").

Suitable and preferred polymerisation methods are, for example, thermal or photopolymerisation, preferably photopolymerisation, in particular UV induced photopolymerisation, which can be achieved by exposure of the polymerisable compounds to UV radiation.

Optionally one or more polymerisation initiators are added to the LC medium. Suitable conditions for the polymerisation and suitable types and amounts of initiators are known to the person skilled in the art and are described in the literature. Suitable for free-radical polymerisation are, for example, the commercially available photoinitiators Irgacure651^{®}, Irgacure184^{®}, Irgacure907^{®}, Irgacure369^{®} or Darocure11730 (Ciba AG). If a polymerisation initiator is employed, its proportion is preferably 0.001 to 5% by weight, particularly preferably 0.001 to 1% by weight.

The polymerisable compounds according to the invention are also suitable for polymerisation without an initiator, which is accompanied by considerable advantages, such, for example, lower material costs and in particular less contamination of the LC medium by possible residual amounts of the initiator or degradation products thereof. The polymerisation can thus also be carried out without the addition of an initiator. In a preferred embodiment, the LC medium thus does not contain a polymerisation initiator.

The LC medium may also comprise one or more stabilisers in order to prevent undesired spontaneous polymerisation of the RMs, for example during storage or transport. Suitable types and amounts of stabilisers are known to the person skilled in the art and are described in the literature. Particularly suitable are, for example, the commercially available stabilisers from the Irganox^{®} series (Ciba AG), such as, for example, Irganox^{®} 1076. If stabilisers are employed, their proportion, based on the total amount of RMs or the polymerisable component (component P), is preferably 10-500,000 ppm, particularly preferably 50-50,000 ppm.

The polymerisable compounds of formula R do in particular show good UV absorption in, and are therefore especially suitable for, a process of preparing a PSA display including one or more of the following features:
- the polymerisable medium is exposed to UV light in the display in a 2-step process, including a first UV exposure step ("UV-1 step") to generate the tilt angle, and a second UV exposure step ("UV-2 step") to finish polymerization,
- the polymerisable medium is exposed to UV light in the display generated by an energy-saving UV lamp (also known as "green UV lamps"). These lamps are characterized by a relative low intensity (1/100-1/10 of a conventional UV1 lamp) in their absorption spectra from 300-380nm, and are preferably used in the UV2 step, but are optionally also used in the UV1 step when avoiding high intensity is necessary for the process.
- the polymerisable medium is exposed to UV light in the display generated by a UV lamp with a radiation spectrum that is shifted to longer wavelengths, preferably 340nm or more, to avoid short UV light exposure in the PS-VA process.

Both using lower intensity and a UV shift to longer wavelengths protect the organic layer against damage that may be caused by the UV light.

A preferred embodiment of the present invention relates to a process for preparing a PSA display as described above and below, comprising one or more of the following features:
- the polymerisable LC medium is exposed to UV light in a 2-step process, including a first UV exposure step ("UV-1 step") to generate the tilt angle, and a second UV exposure step ("UV-2 step") to finish polymerization,
- the polymerisable LC medium is exposed to UV light generated by a UV lamp having an intensity of from 0.5 mW/cm² to 10 mW/cm² in the wavelength range from 300-380nm, preferably used in the UV2 step, and optionally also in the UV1 step,
- the polymerisable LC medium is exposed to UV light having a wavelength of 340 nm or more, and preferably 400 nm or less.

This preferred process can be carried out for example by using the desired UV lamps or by using a band pass filter and/or a cut-off filter, which are substantially transmissive for UV light with the respective desired wavelength(s) and are substantially blocking light with the respective undesired wavelengths. For example, when irradiation with UV light of wavelengths λ of 300-400nm is desired, UV exposure can be carried out using a wide band pass filter being substantially transmissive for wavelengths 300nm < λ < 400nm. When irradiation with UV light of wavelength λ of more than 340 nm is desired, UV exposure can be carried out using a cut-off filter being substantially transmissive for wavelengths λ > 340 nm.

"Substantially transmissive" means that the filter transmits a substantial part, preferably at least 50% of the intensity, of incident light of the desired wavelength(s). "Substantially blocking" means that the filter does not transmit a substantial part, preferably at least 50% of the intensity, of incident light of the undesired wavelengths. "Desired (undesired) wavelength" e.g., in case of a band pass filter means the wavelengths inside (outside) the given range of λ, and in case of a cut-off filter means the wavelengths above (below) the given value of λ.

This preferred process enables the manufacture of displays by using longer UV wavelengths, thereby reducing or even avoiding the hazardous and damaging effects of short UV light components.

UV radiation energy is in general from 6 to 100 J, depending on the production process conditions.

Preferably the LC medium according to the present invention essentially consist of a polymerisable component P) comprising or one or more polymerisable compounds of formula R, and an LC host mixture, and an optically active component comprising one or more chiral dopants, as described above and below. However, the LC medium may additionally comprise one or more further components or additives, preferably selected from the list including but not limited to co-monomers, polymerisation initiators, inhibitors, stabilizers, surfactants, wetting agents, lubricating agents, dispersing agents, hydrophobing agents, adhesive agents, flow improvers, defoaming agents, deaerators, diluents, reactive diluents, auxiliaries, colourants, dyes, pigments and nanoparticles.

The LC media according to the invention comprise one, two or three chiral dopants, very preferably one chiral dopant.

Particular preference is given to LC media comprising one, two or three polymerisable compounds of formula R.

Preference is furthermore given to LC media that have a chiral nematic LC phase.

Preferably the proportion of compounds of formula R in the LC medium is from >0 to < 5%, very preferably from >0 to < 1%, most preferably from 0.01 to 0.5%.

In preferred embodiments, taken alone or in combination with one another the medium according to the invention comprises
- one or more compounds of the formula I in a total concentration in the range of from 1% to 12%, more preferably from 1.5% to 11% and very preferably from 2% to 10%;
- one or more compounds of the formula IIBa in a total concentration in the range of from 1% to 20%, more preferably from 3% to 18% and very preferably from 4% to 16%;
- one or more compounds of the formula IIB and one or more compounds of the formula IIBa in a total concentration in the range of from 8% to 35%, more preferably from 10% to 30% and very preferably from 12% to 28%;
- one or more compounds of the formula I and one or more compounds of the formula IIBa in a total concentration in the range of from 5% to 25%, more preferably from 7% to 22% and very preferably from 8% to 18%;
- one or more compounds of the formula IIDa in a total concentration in the range of from 1% to 20%, more preferably from 3% to 15% and very preferably from 5% to 13%;
- one or more compounds of the formula IIB and one or more compounds of the formula IIBa and one or more compounds of the formula IIDa in a total concentration in the range of from 15% to 45%, more preferably from 18% to 40% and very preferably from 20% to 35%;
- one or more compounds of the formula III in a total concentration in the range of from 5% to 30%, more preferably from 7% to 27% and very preferably from 8% to 25%;
- one or more compounds of the formula III-1, very preferably of the formula III-1-6, in a total concentration in the range of from 1% to 20%, more preferably from 2% to 17% and very preferably from 3% to 15%;
- one or more compounds of the formula III-2, in a total concentration in the range of from 1% to 15%, more preferably from 2% to 12% and very preferably from 3% to 10%;
- one or more compounds of the formulae III-1 and III-2, in a total concentration in the range of from 10% to 30%, more preferably from 12% to 28% and very preferably from 15% to 25%;
- one or more compounds of the formula IIA-2 in a total concentration in the range of from 1% to 25%, more preferably from 2% to 24% and very preferably from 3% to 23%;
- one or more compounds of the formula IIA-10 in a total concentration in the range of from 1% to 30%, more preferably from 2% to 28% and very preferably from 3% to 25%;
- one or more compounds of the formula IID-10 in a total concentration in the range of from 2% to 25%, more preferably from 4% to 20% and very preferably from 10% to 18%;
- one or more compounds of the formula IV and optionally one or more compounds of the formula IVa in a total concentration in the range of from 20% to 60%, more preferably from 30% to 50% and very preferably from 33% to 45%;
- one or more compounds of the formula IVb in a total concentration in the range of from 1% to 10%;
- one or more compounds of the formula IV-1 in a total concentration in the range of from 10% to 55%, more preferably from 20% to 50%, and very preferably from 25% to 45%;
- one or more compounds of the formula IV-2 in a total concentration in the range of from 1% to 12%, more preferably from 2% to 11%, and very preferably from 3% to 10%;
- one or more compounds of the formula IV-3, preferably IV-3-1 and/or IV-3-2, and IV-3-4, in a total concentration in the range of from 10% to 60%, more preferably from 15% to 55%, still more preferably from 20% to 50% and very preferably from 25% to 45%;
- the compound of the formula IV-3-1 in a total concentration in the range of from 10% to 50%, more preferably from 15% to 45%, and very preferably from 20% to 40%;
- the compound of the formula IV-3-4 in a total concentration in the range of from 3% to 25%, more preferably from 4% to 20% and very preferably from 5% to 17%;
- one or more compounds of the formula V in a total concentration in the range of from 1% to 25%, more preferably from 3% to 20%, still more preferably from 4% to 17% and very preferably from 5% to 15%.

It is advantageous for the liquid-crystalline medium according to the invention to preferably have a nematic phase from ≤ -20°C to ≥ 100°C, particularly preferably from ≤ -30°C to ≥ 110°C, very particularly preferably from ≤ -40°C to ≥ 120°C.

The medium according to the invention has a clearing temperature of 70°C or more, preferably of 72°C or more, more preferably of 75°C or more and in particular of 90°C or more.

The expression "have a nematic phase" here means on the one hand that no smectic phase and no crystallisation are observed at low temperatures at the corresponding temperature and on the other hand that clearing (phase transition to the isotropic phase) still does not occur on heating from the nematic phase. The investigation at low temperatures is carried out in a flow viscometer at the corresponding temperature and checked by storage in test cells having a layer thickness corresponding to the electro-optical use for at least 100 hours. If the storage stability at a temperature of -20°C in a corresponding test cell is 1000 h or more, the medium is referred to as stable at this temperature. At temperatures of -30°C and -40°C, the corresponding times are 500 h and 250 h respectively. At high temperatures, the clearing point is measured by conventional methods in capillaries. The liquid-crystal mixture preferably has a nematic phase range of at least 60 K and a flow viscosity v₂₀ of at most 30 mm² · s⁻¹ at 20°C.

The mixture is nematic at a temperature of -20°C or less, preferably at -30°C or less, very preferably at -40°C or less.

In a preferred embodiment of the present invention, the medium has a birefringence in the range of from 0.085 to 0.125, preferably from 0.090 to 0.123, in particular from 0.095 to 0.122.

In a more preferred embodiment, the medium according to the invention has a birefringence in the range of from 0.100 to 0.110, very preferably from 0.105 to 0.108.

In a more preferred embodiment, the medium according to the invention has a birefringence in the range of from 0.115 to 0.122, very preferably from 0.118 to 0.121.

In a more preferred embodiment, the medium according to the invention has a birefringence in the range of from 0.089 to 0.100, very preferably from 0.092 to 0.096.

The liquid-crystal mixture according to the invention has a dielectric anisotropy Δε of -1.5 to -9.0.

In a preferred embodiment, the medium according to the invention has a dielectric anisotropy Δε of - 1.7 to -2.5, preferably of -1.9 to -2.2.

In a preferred embodiment, the medium according to the invention has a dielectric anisotropy Δε of -2.5 to - 3.8, preferably of -2.8 to -3.4.

In a preferred embodiment, the medium according to the invention has a dielectric anisotropy Δε of -3.7 to -5.0, preferably of -3.9 to -4.8.

In a preferred embodiment, the medium according to the invention has a dielectric anisotropy Δε of -6.0 to -8.8, preferably of -6.2 to -8.5.

The rotational viscosity γ₁ at 20°C is preferably in the range of from 50 to 250 mPas, more preferably from 55 to 150 mPa s.

The liquid-crystal media according to the invention have relatively low values for the threshold voltage (V₀). They are preferably in the range from 1.7 V to 3.0 V, particularly preferably ≤ 2.9 V and very particularly preferably ≤ 2.8 V.

For the present invention, the term "threshold voltage" relates to the capacitive threshold (V₀), also called the Freedericks threshold, unless explicitly indicated otherwise.

In addition, the liquid-crystal media according to the invention have high values for the voltage holding ratio in liquid-crystal cells.

In general, liquid-crystal media having a low addressing voltage or threshold voltage exhibit a lower voltage holding ratio than those having a higher addressing voltage or threshold voltage and vice versa.

For the present invention, the term "dielectrically positive compounds" denotes compounds having a Δε > 1.5, the term "dielectrically neutral compounds" denotes those having -1.5 ≤ Δε ≤ 1.5 and the term "dielectrically negative compounds" denotes those having Δε < -1.5. The dielectric anisotropy of the compounds is determined here by dissolving 10 % of the compounds in a liquid-crystalline host and determining the capacitance of the resultant mixture in at least one test cell in each case having a layer thickness of 20 µm with homeotropic and with homogeneous surface alignment at 1 kHz. The measurement voltage is typically 0.5 V to 1.0 V but is always lower than the capacitive threshold of the respective liquid-crystal mixture investigated.

All temperature values indicated for the present invention are in °C.

The mixtures according to the invention preferably have negative dielectric anisotropy (Δε) and are suitable for all VA-TFT applications, such as, for example, VAN, MVA, (S)-PVA, ASV, PSA (polymer sustained VA) and PS-VA (polymer stabilized VA). They are furthermore suitable for IPS (in-plane switching) and FFS (fringe field switching) applications having negative Δε.

It goes without saying for the person skilled in the art that the VA, IPS or FFS mixture according to the invention may also comprise compounds in which, for example, H, N, O, CI and F have been replaced by the corresponding isotopes.

The compounds according to the present invention can be synthesized by or in analogy to known methods described in the literature (for example in the standard works such as Houben-Weyl, Methoden der Organischen Chemie [Methods of Organic Chemistry], Georg-Thieme-Verlag, Stuttgart), under reaction conditions which are known and suitable for said reactions. Use may also be made here of variants which are known per se but are not mentioned here. In particular, they can be prepared as described in or in analogy to the following reaction schemes. Further methods for preparing the inventive compounds can be taken from the examples.

Other mesogenic compounds which are not explicitly mentioned above can optionally and advantageously also be used in the media in accordance with the present invention. Such compounds are known to the person skilled in the art.

For the present invention and in the following examples, the structures of the liquid-crystal compounds are indicated by means of acronyms, with the transformation into chemical formulae taking place in accordance with Tables A to C below. All radicals CₘH_{2m+1,} CₙH₂ₙ₊₁, and CₗH₂ₗ₊₁ or CₘH₂ₘ₋₁, CₙH₂ₙ₋₁ and CₗH₂ₗ₋₁ are straight-chain alkyl radicals or alkylene radicals, in each case having n, m and I C atoms respectively. Preferably n, m and I are independently of each other 1, 2, 3, 4, 5, 6, or 7. Table A shows the codes for the ring elements of the nuclei of the compound, Table B lists the bridging units, and Table C lists the meanings of the symbols for the left- and right-hand end groups of the molecules. The acronyms are composed of the codes for the ring elements with optional linking groups, followed by a first hyphen and the codes for the left-hand end group, and a second hyphen and the codes for the right-hand end group. Table D shows illustrative structures of compounds together with their respective abbreviations.

**Table A: Ring elements**

| | | | |
|---|---|---|---|
| **C** | 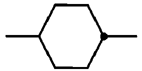 | | |
| **D** | 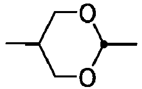 | **DI** | 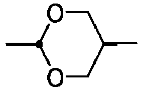 |
| **A** | 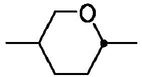 | **AI** | 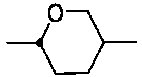 |
| **P** | 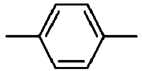 | | |
| **G** | 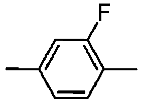 | **GI** | 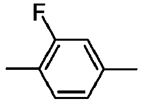 |
| **U** | 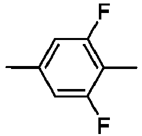 | **UI** | 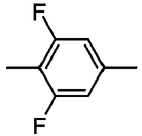 |
| **Y** | 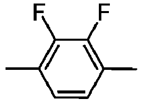 | **P(CI,F)Y** | 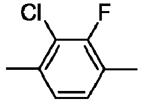 |
| **P(F, CI)Y** | 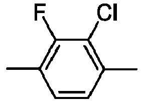 | | |
| **np** | 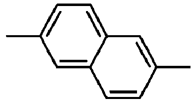 | | |
| **n3f** | 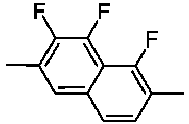 | **nN3fl** | 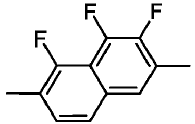 |
| **th** | 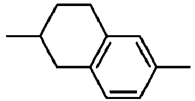 | **thl** | 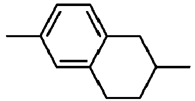 |
| **tH2f** | 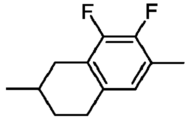 | **tH2fl** | 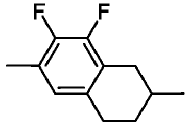 |
| **o2f** | 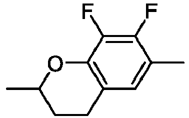 | **o2fl** | 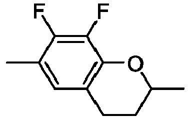 |
| **dh** | 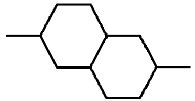 | | |
| **B** | 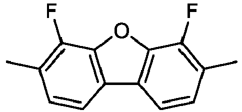 | **B(S)** | 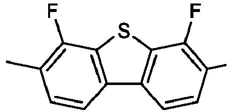 |
| **O** | 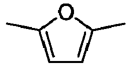 | **S** | 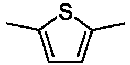 |
| **K** | 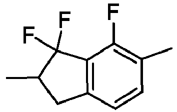 | **KI** | 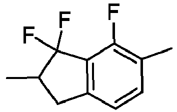 |
| **L** | 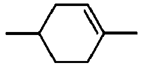 | **LI** | 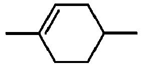 |
| **F** | 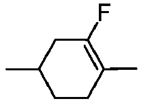 | **FI** | 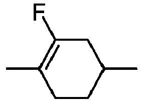 |
| **Bh** | 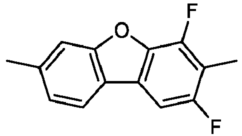 | **Bh(S)** | 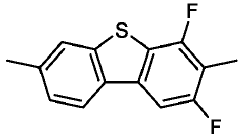 |
| **Bf** | 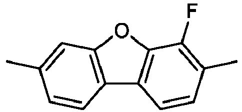 | **Bf(S)** | 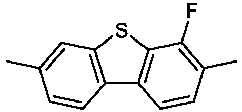 |
| **Bfi** | 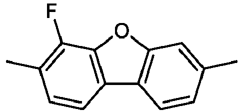 | **Bfi(S)** | 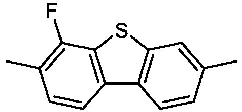 |

**Table B: Bridging units**

| | | | |
|---|---|---|---|
| **E** | -CH₂-CH₂- | | |
| **V** | -CH=CH- | | |
| **T** | -C≡C- | | |
| **W** | -CF₂-CF₂- | | |
| **B** | -CF=CF- | | |
| **Z** | -CO-O- | **ZI** | -O-CO- |
| **X** | -CF=CH- | **XI** | -CH=CF- |
| **O** | -CH₂-O- | **OI** | -O-CH₂- |
| **Q** | -CF₂-O- | **QI** | -O-CF₂- |

**Table C: End groups**

| **On the left individually or in combination** | | **On the right individually or in combination** | |
|---|---|---|---|
| **-n-** | CₙH₂ₙ₊₁- | **-n** | -CₙH₂ₙ₊₁ |
| **-nO-** | CₙH₂ₙ₊₁-O- | **-On** | -O-CₙH₂ₙ₊₁ |
| **-V-** | CH₂=CH- | **-V** | -CH=CH₂ |
| **-nV-** | CₙH₂ₙ₊₁-CH=CH- | **-nV** | -CₙH₂ₙ-CH=CH₂ |
| **-Vn-** | CH₂=CH- CₙH₂ₙ- | **-Vn** | -CH=CH-CₙH₂ₙ₊ᵢ |
| **-nVm-** | CₙH₂ₙ₊₁-CH=CH-CₘH₂ₘ- | **-nVm** | - CₙH₂ₙ-CH=CH-CₘH₂ₘ₊₁ |
| **-N-** | N≡C- | **-N** | -C≡N |
| **-S-** | S=C=N- | **-S** | -N=C=S |
| **-F-** | F- | **-F** | -F |
| **-CL-** | Cl- | **-CL** | -Cl |
| **-M-** | CFH₂- | **-M** | -CFH₂ |
| **-D-** | CF₂H- | **-D** | -CF₂H |
| -T- | CF₃- | **-T** | -CF₃ |
| **-MO-** | CFH₂O - | **-OM** | -OCFH₂ |
| **-DO-** | CF₂HO - | **-OD** | -OCF₂H |
| **-TO-** | CF₃O - | **-OT** | -OCF₃ |
| **-A-** | H-C≡C- | **-A** | -C≡C-H |
| **-nA-** | CₙH₂ₙ₊₁-C≡C- | **-An** | -C≡C-CₙH₂ₙ₊₁ |
| **-NA-** | N≡C-C≡C- | **-AN** | -C≡C-C≡N |
| **-(cn)-** | 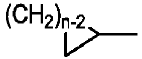 | **-(cn)** | 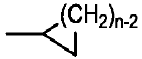 |
| **-(cn)m-** | 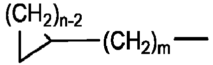 | **-m(cn)** | 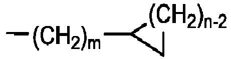 |
| | | | |

| **On the left only in combination** | | **On the right only in combination** | |
|---|---|---|---|
| **...n...** | -CₙH₂ₙ- | **-...n...** | -CₙH₂ₙ- |
| **-...M...-** | -CFH- | **-...M...** | -CFH- |
| **-...D...-** | -CF₂- | **-...D...** | -CF₂- |
| **-...V...-** | -CH=CH- | **-...V...** | -CH=CH- |
| **-...Z...-** | -CO-O- | **-...Z...** | -CO-O- |
| **-...ZI...-** | -O-CO- | **-...ZI...** | -O-CO- |
| **-...K...** | -CO- | **-...K...** | -CO- |
| **-...W...-** | -CF=CF- | **-...W...** | -CF=CF- |

in which n and m are each integers, and the three dots "..." are placeholders for other abbreviations from this table.

Apart from the compounds of formula I, IIA, IIB, IIC and/or IID, IVa, IVb and V, the mixtures according to the invention optionally comprise one or more compounds of the compounds mentioned below.

The following abbreviations are used:
(n, m, k and I are, independently of one another, each an integer, preferably 1 to 9 preferably 1 to 7, k and I possibly may be also 0 and preferably are 0 to 4, more preferably 0 or 2 and most preferably 2, n preferably is 1, 2, 3, 4 or 5, in the combination "-nO-" it preferably is 1, 2, 3 or 4, preferably 2 or 4, m preferably is 1, 2, 3, 4 or 5, in the combination "-Om" it preferably is 1, 2, 3 or 4, more preferably 2 or 4. The combination "-IVm" preferably is "2V1".)

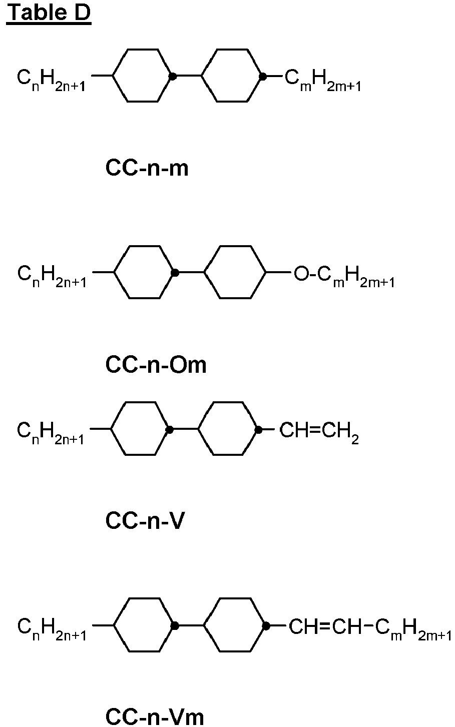

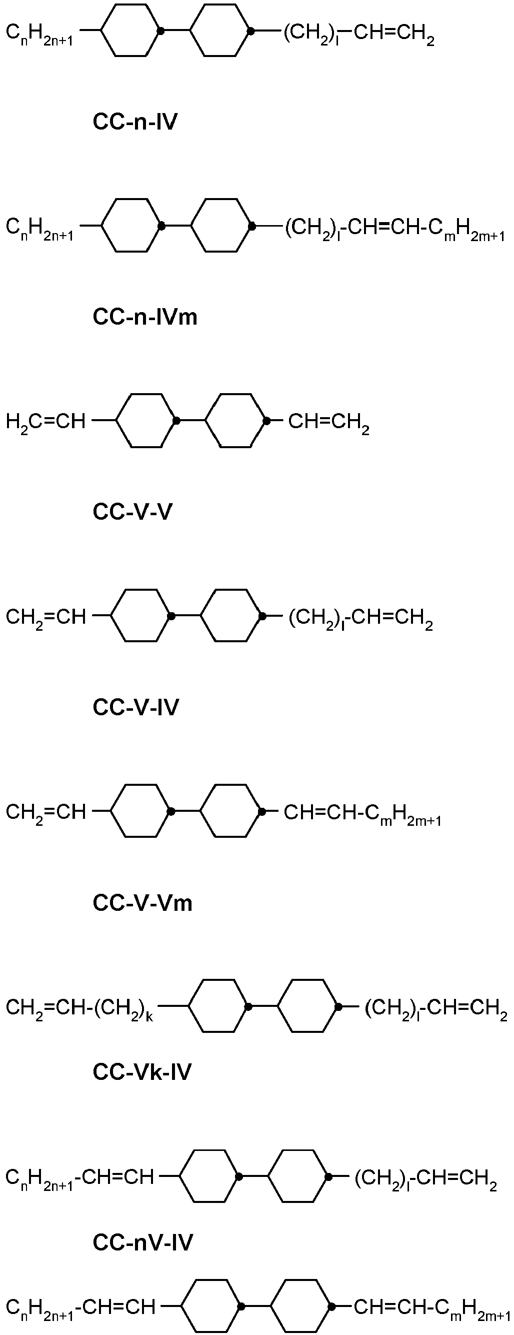

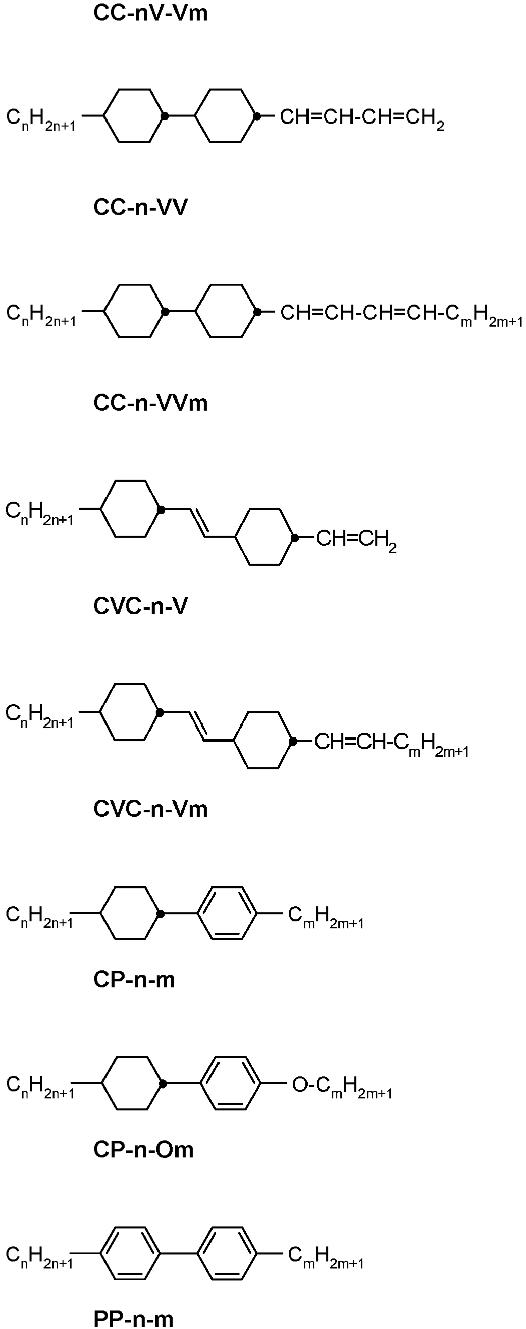

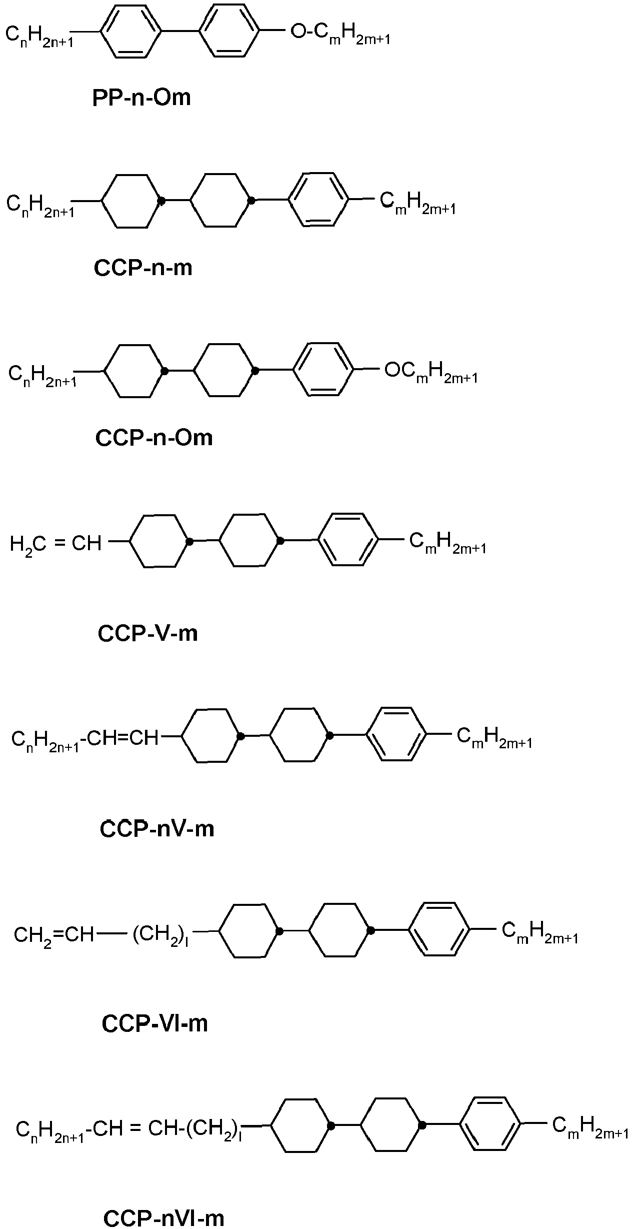

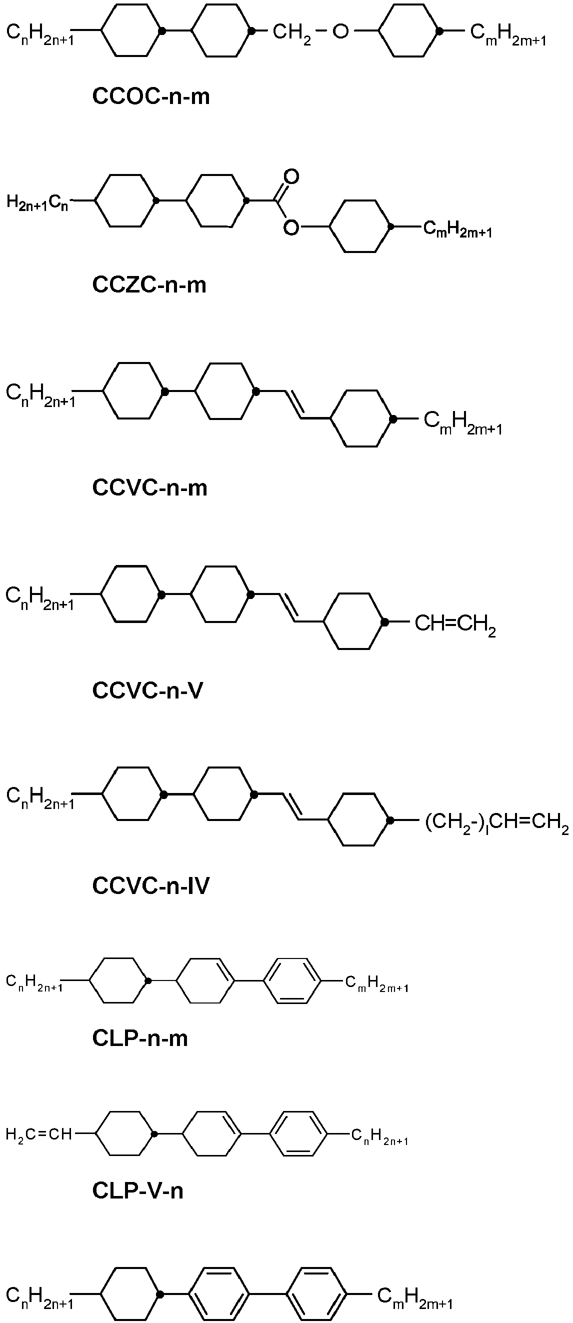

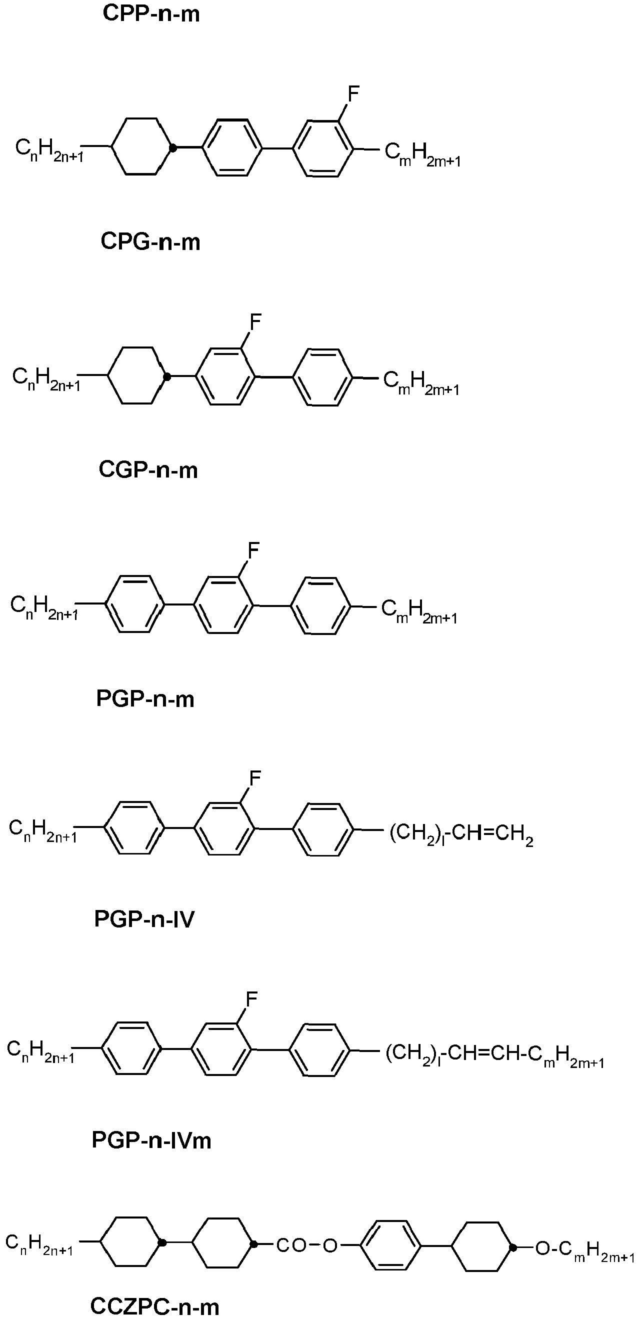

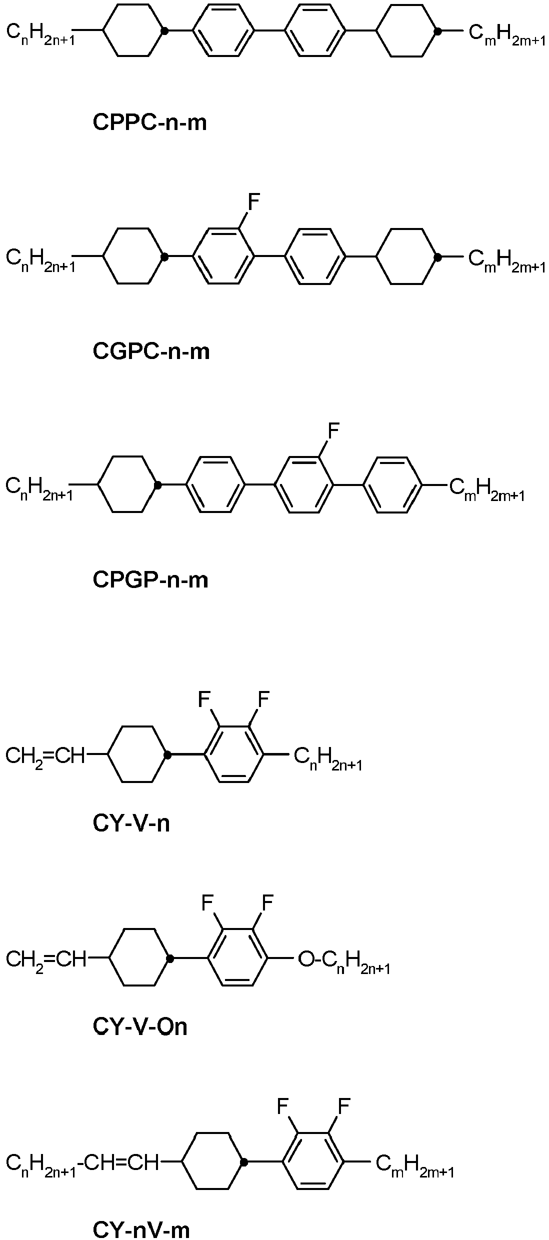

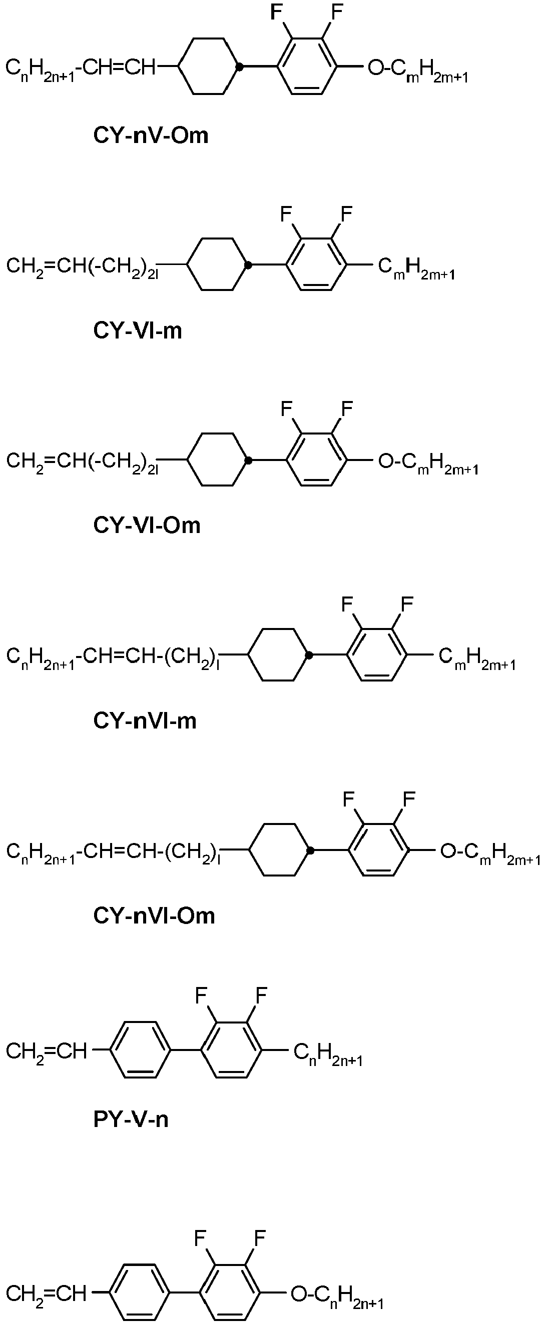

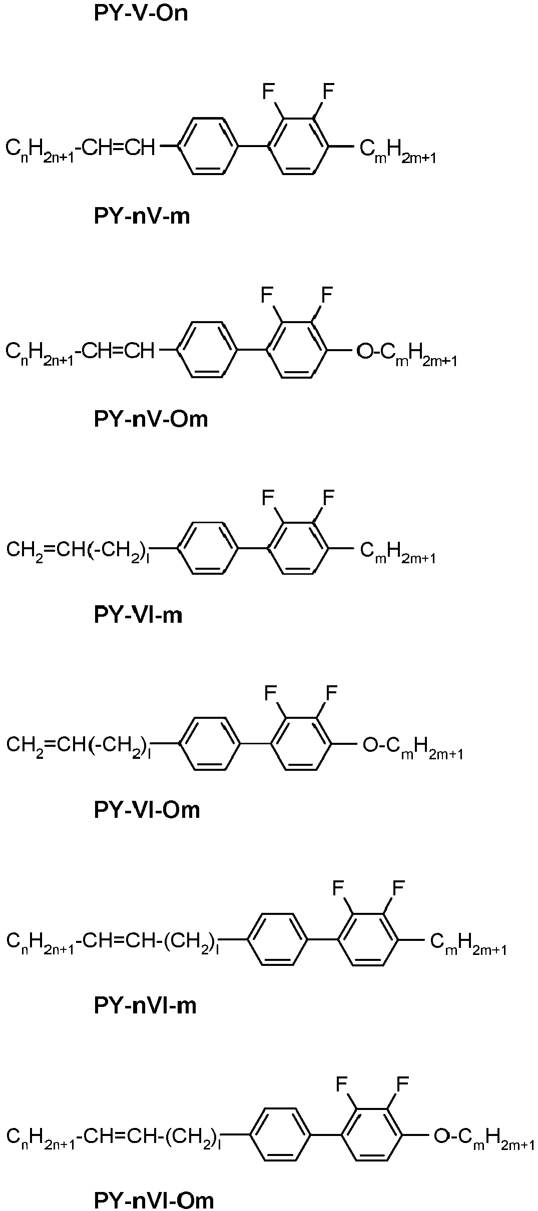

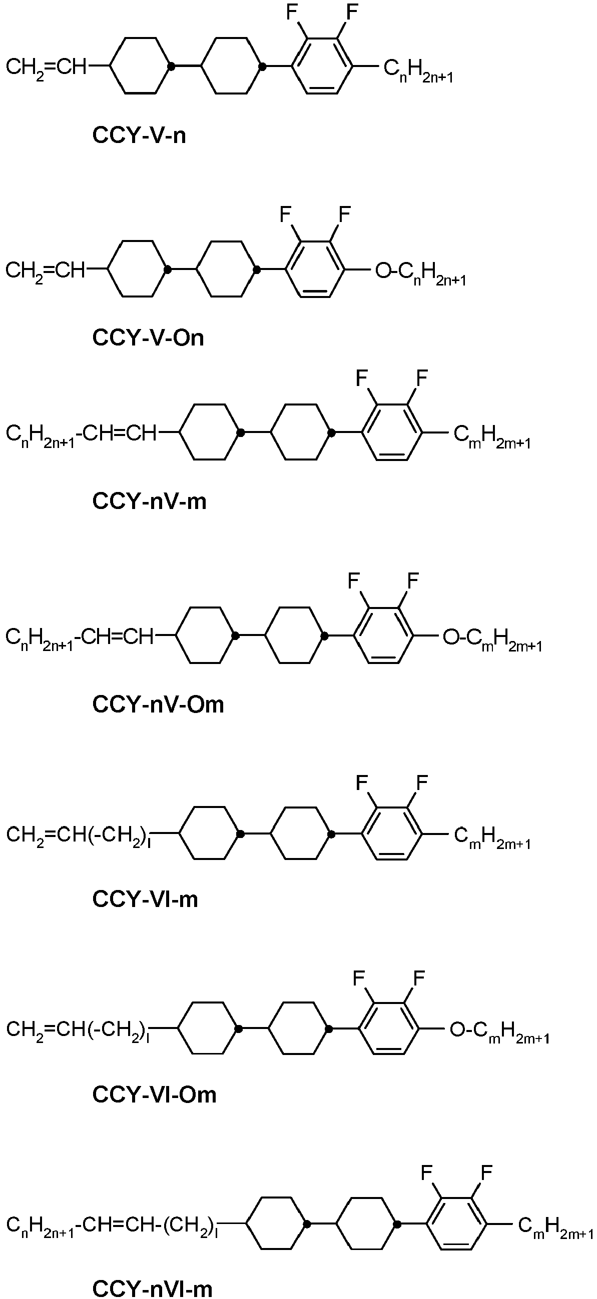

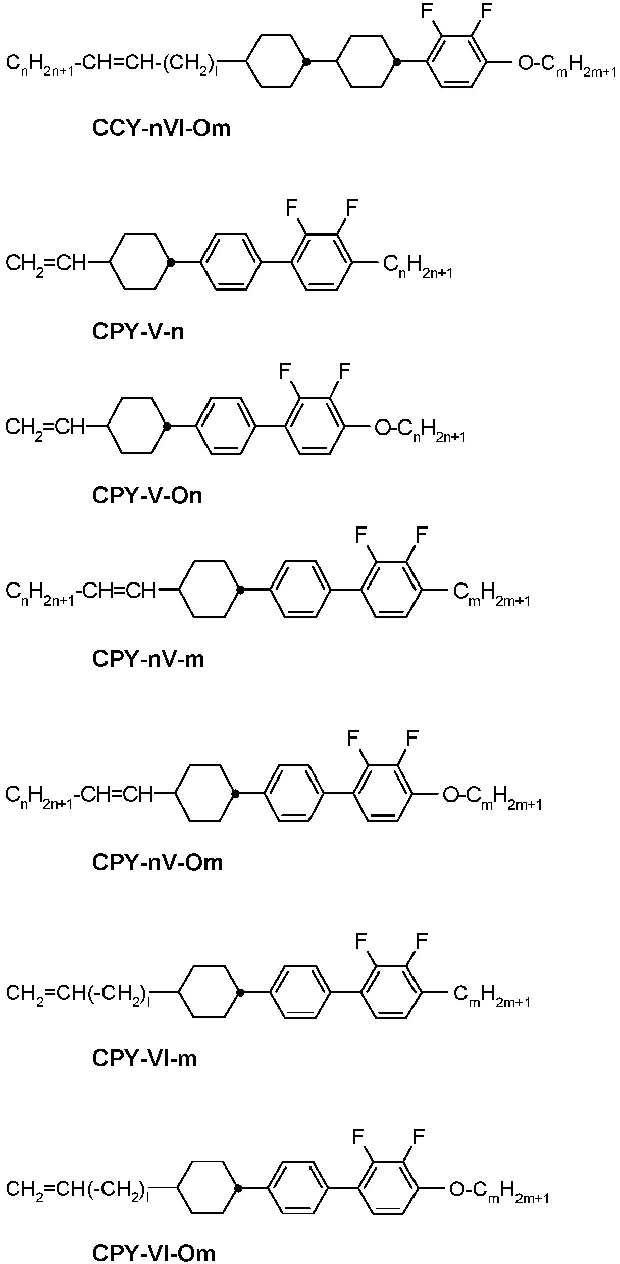

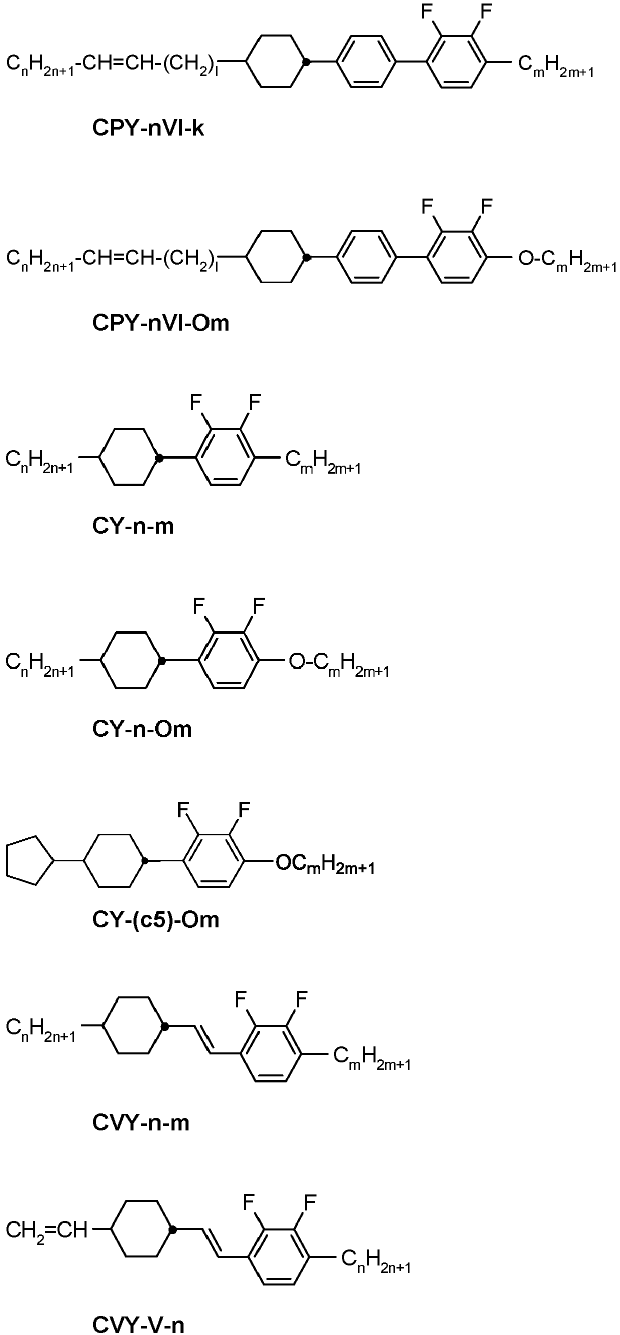

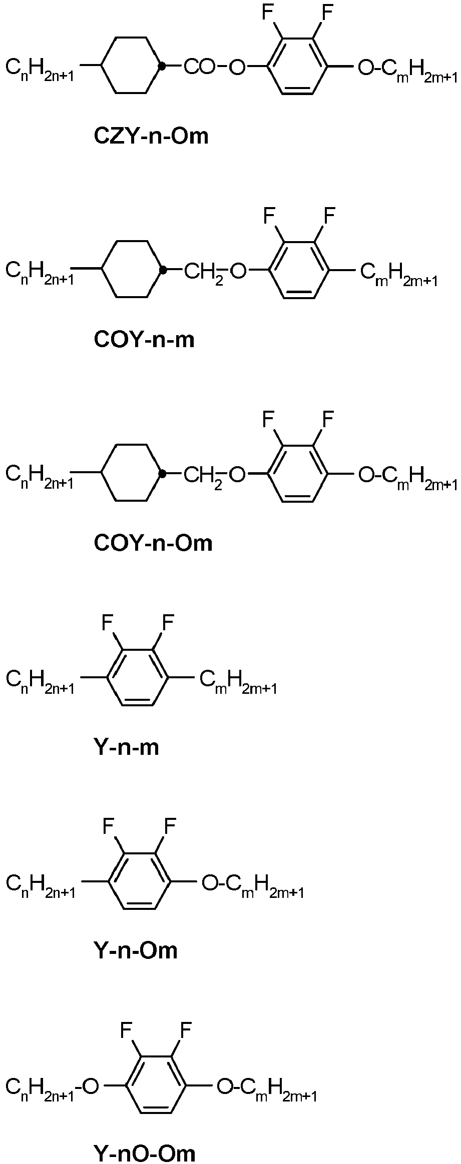

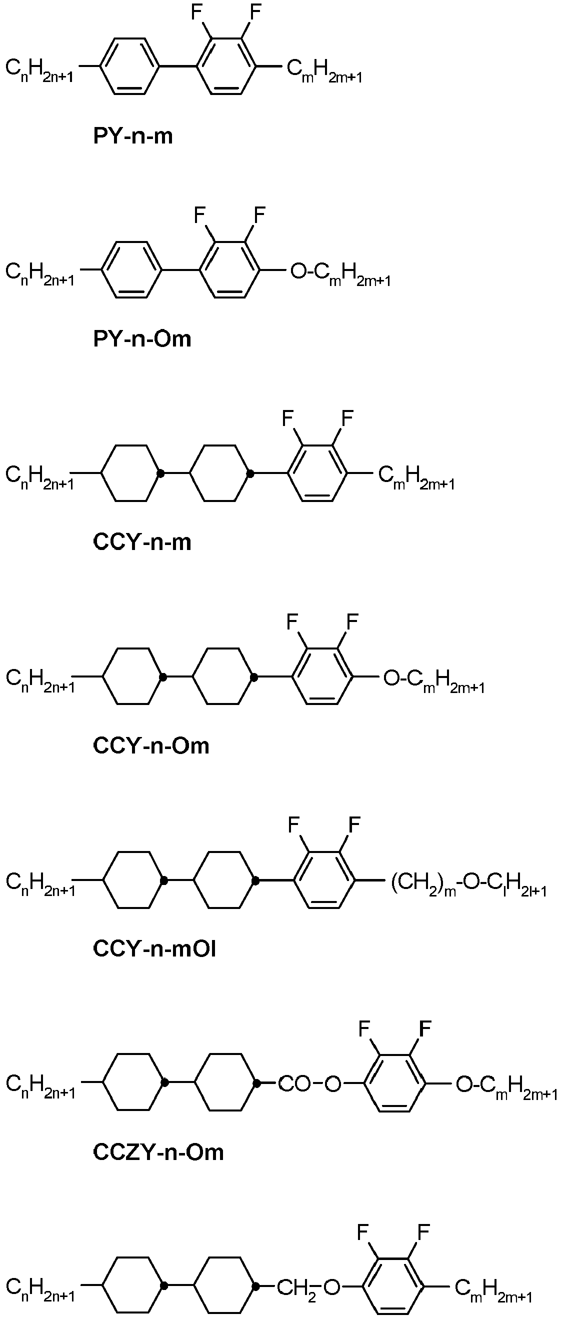

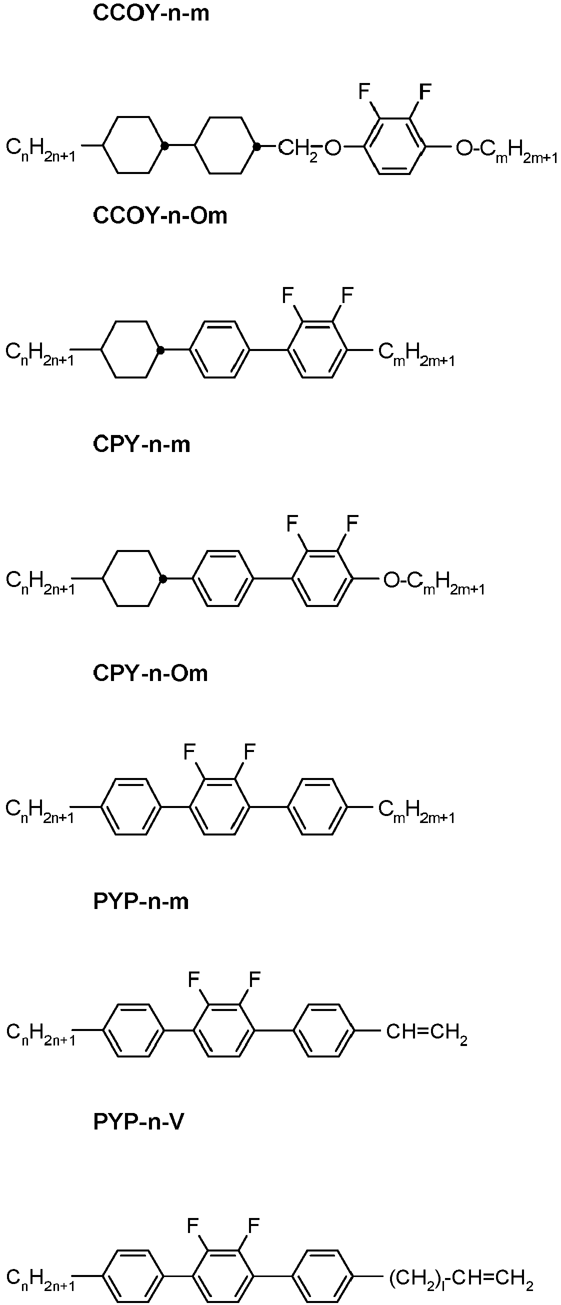

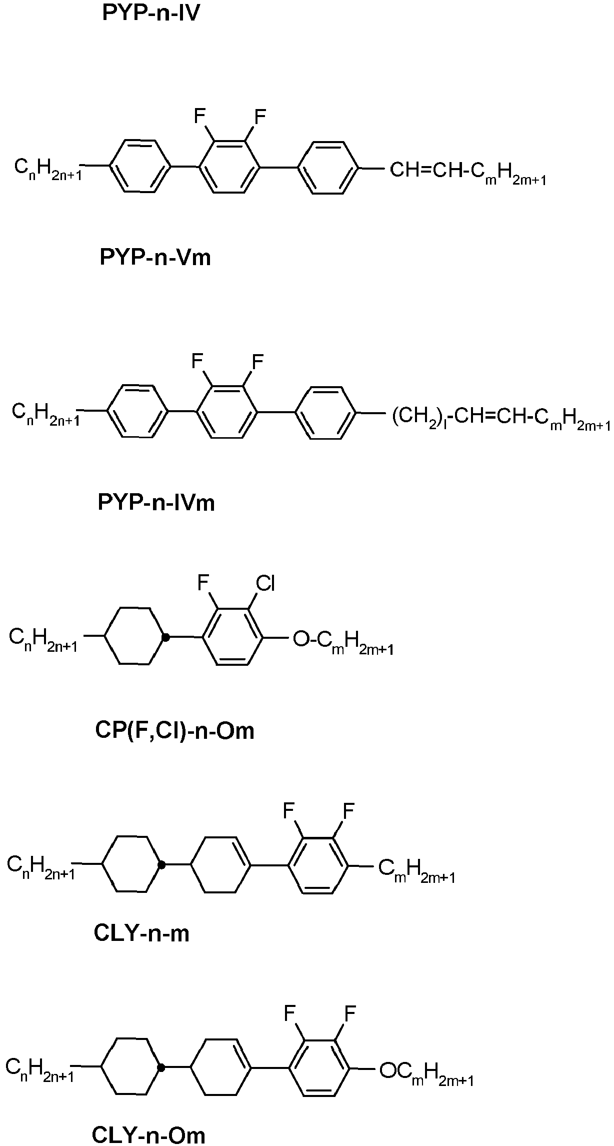

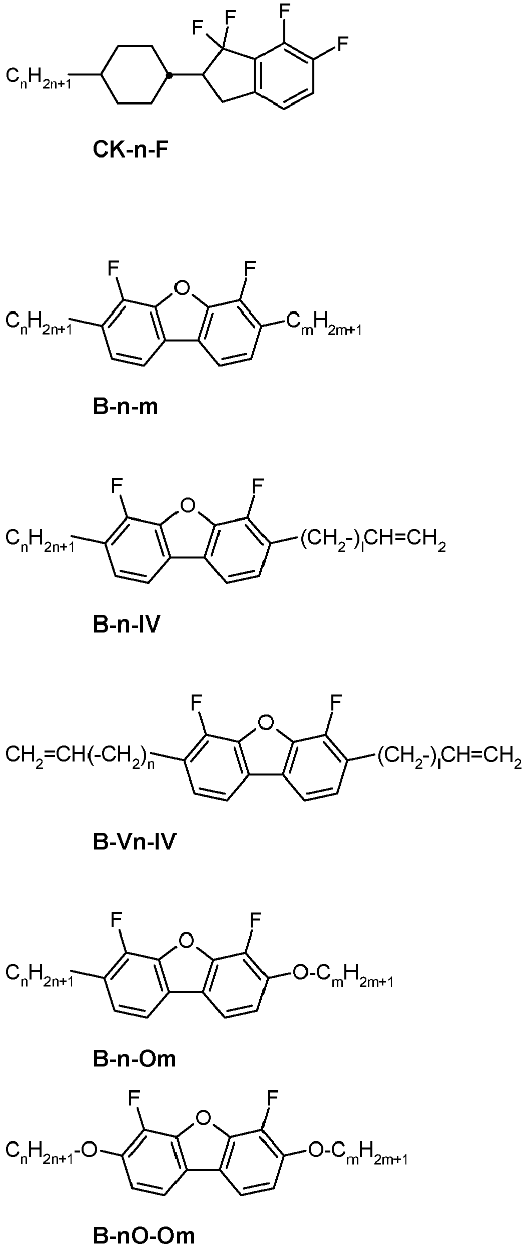

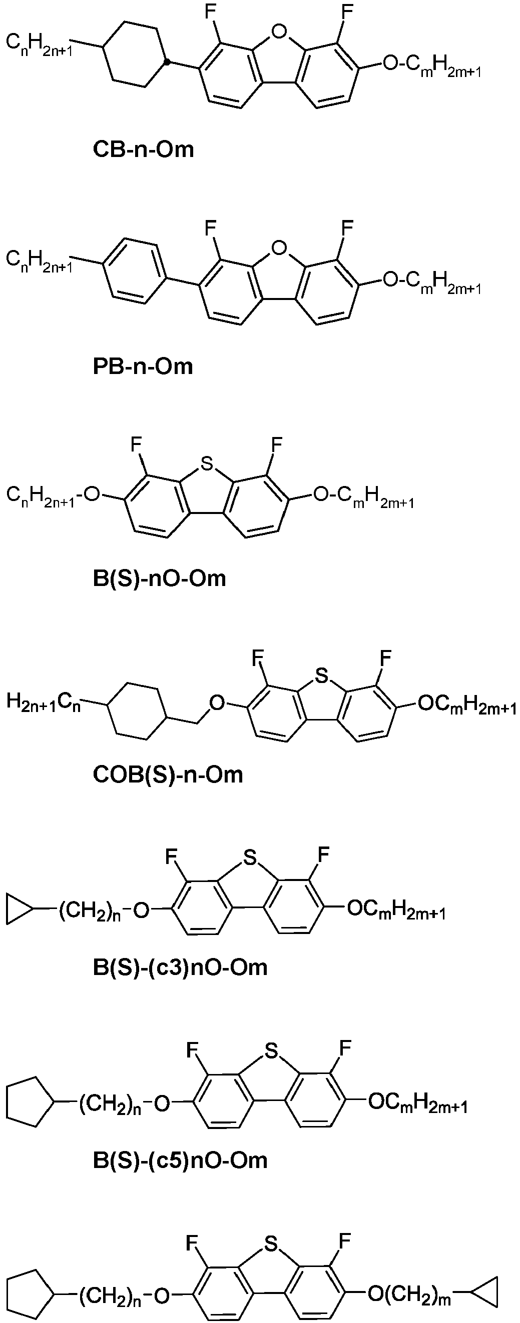

### B(S)-(c5)nO-Om(c3)

### Examples

The present invention is illustrated in detail by the following non-restrictive working examples.

The following abbreviations and symbols are used:
- V₀: threshold voltage, capacitive [V] at 20°C,
- nₑ: extraordinary refractive index at 20°C and 589 nm,
- nₒ: ordinary refractive index at 20°C and 589 nm,
- Δn: optical anisotropy at 20°C and 589 nm,
- ε_{⊥}: dielectric permittivity perpendicular to the director at 20°C and 1 kHz,
- ε∥: dielectric permittivity parallel to the director at 20°C and 1 kHz,
- Δε: dielectric anisotropy at 20°C and 1 kHz,
- cl.p., T(N,I): clearing point [°C],
- γ₁: rotational viscosity at 20°C [mPa·s],
- K₁: elastic constant, "splay" deformation at 20°C [pN],
- K₂: elastic constant, "twist" deformation at 20°C [pN],
- K₃: elastic constant, "bend" deformation at 20°C [pN].

Unless explicitly noted otherwise, all concentrations in the present application are quoted in per cent by weight and relate to the corresponding mixture as a whole, comprising all solid or liquid-crystalline components, without solvents.

Unless explicitly noted otherwise, all temperature values indicated in the present application, such as, for example, for the melting point T(C,N), the transition from the smectic (S) to the nematic (N) phase T(S,N) and the clearing point T(N,I), are quoted in degrees Celsius (°C). M.p. denotes melting point, cl.p. = clearing point. Furthermore, C = crystalline state, N = nematic phase, S = smectic phase and I = isotropic phase. The data between these symbols represent the transition temperatures.

All physical properties are and have been determined in accordance with "Merck Liquid Crystals, Physical Properties of Liquid Crystals", Status Nov. 1997, Merck KGaA, Germany, and apply for a temperature of 20°C, and Δn is determined at 589 nm and Δε at 1 kHz, unless explicitly indicated otherwise in each case.

The term "threshold voltage" for the present invention relates to the capacitive threshold (V₀), also known as the Freedericks threshold, unless explicitly indicated otherwise. In the examples, the optical threshold may also, as generally usual, be quoted for 10% relative contrast (V₁₀).

Unless stated otherwise, the process of polymerising the polymerisable compounds in the PSA displays as described above and below is carried out at a temperature where the LC medium exhibits a liquid crystal phase, preferably a nematic phase, and most preferably is carried out at room temperature.

Unless stated otherwise, methods of preparing test cells and measuring their electrooptical and other properties are carried out by the methods as described hereinafter or in analogy thereto.

The display used for measurement of the capacitive threshold voltage consists of two plane-parallel glass outer plates with a distance of 25 µm, each of which has on the inside an electrode layer and an unrubbed polyimide alignment layer on top, which effect homeotropic alignment of the liquid-crystal molecules.

The display or test cell used for measurement of the tilt angles consists of two plane-parallel glass outer plates at a separation of 4 µm, each of which has on the inside an electrode layer and a polyimide alignment layer on top, where the two polyimide layers are rubbed antiparallel to one another and effect a homeotropic edge alignment of the liquid-crystal molecules.

The polymerisable compounds are polymerised in the display or test cell by irradiation with UV light of defined intensity for a prespecified time, with a voltage simultaneously being applied to the display (usually 10 V to 30 V alternating current, 1 kHz). In the examples, unless indicated otherwise, a fluorescent lamp and an intensity of 10 to 20 mW/cm² is used for polymerisation. The intensity is measured using a standard meter (Ushio Accumulate UV meter with central wavelength of 313nm).

### Mixture Examples

The nematic LC host mixtures M1 to M73 have the compositions and properties given in the following tables.

### Mixture M1

| | | | |
|---|---|---|---|
| CPP-3-2 | 12.00 | Clp. [°C]: | 74.5 |
| CC-2-3 | 14.50 | Δn [589 nm, 20°C]: | 0.1071 |
| CC-3-4 | 6.00 | ε_{∥} [1 kHz, 20°C]: | 3.4 |
| CC-3-5 | 6.00 | ε_{⊥} [1 kHz, 20°C]: | 5.4 |
| CCP-3-1 | 12.75 | Δε [1 kHz, 20°C]: | -2.0 |
| CLY-3-O2 | 8.00 | K₁ [pN, 20°C]: | 14.5 |
| CPY-3-O2 | 9.50 | K₃ [pN, 20°C]: | 14.1 |
| CP-3-O2 | 10.00 | V₀ [V, 20°C]: | 2.79 |
| PY-1-O4 | 5.75 | γ₁ [mPa s, 20°C]: | 88 |
| PYP-2-3 | 5.75 | LTS bulk [h, -25°C]: | 600 |
| Y-4O-O4 | 9.75 | LTS bulk [h, -30°C]: | 600 |
| ∑ | 100.0 | | |

### Mixture M2

| | | | |
|---|---|---|---|
| CPP-3-2 | 12.00 | Clp. [°C]: | 73 |
| CC-2-3 | 14.50 | Δn [589 nm, 20°C]: | 0.1072 |
| CC-3-4 | 6.00 | ε_{∥} [1 kHz, 20°C]: | 3.3 |
| CC-3-5 | 6.00 | ε_{⊥} [1 kHz, 20°C]: | 5.4 |
| CCP-3-1 | 12.75 | Δε [1 kHz, 20°C]: | -1.9 |
| CLY-3-O2 | 8.00 | K₁ [pN, 20°C]: | 13.8 |
| CPY-3-O2 | 9.50 | K₃ [pN, 20°C]: | 13.8 |
| CP-3-O2 | 10.00 | V₀ [V, 20°C]: | 2.77 |
| PY-1-O4 | 5.75 | γ₁ [mPa s, 20°C]: | 81 |
| PYP-2-3 | 5.75 | | |
| Y-2O-O1V | 5.00 | | |
| Y-3O-O1V | 4.75 | | |
| ∑ | 100.0 | | |

The mixture M2 additionally contains 200 ppm of the compound I-1-1a

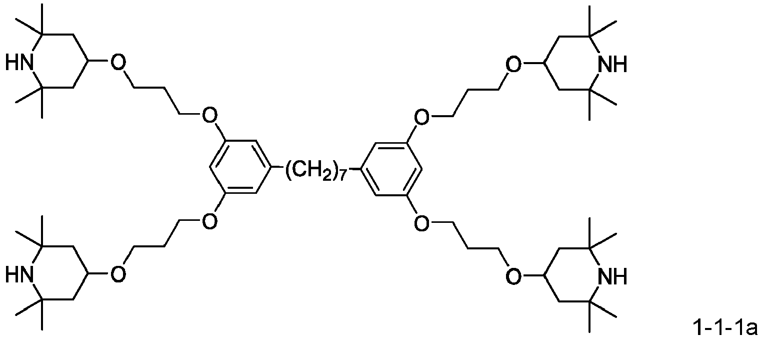

### Mixture M3

| | | | |
|---|---|---|---|
| CCY-3-O2 | 11.0 | Clp. [°C]: | 81 |
| CPY-3-O2 | 12.5 | Δn [589 nm, 20°C]: | 0.1033 |
| CLY-3-O2 | 10.0 | ε_{∥} [1 kHz, 20°C]: | 3.7 |
| PY-3-O2 | 8.5 | ε_{⊥} [1 kHz, 20°C]: | 7.5 |
| Y-4O-O4 | 6.5 | Δε [1 kHz, 20°C]: | -3.8 |
| CCY-3-O1 | 7.5 | K₁ [pN, 20°C]: | 14.6 |
| CC-3-V | 32.5 | K₃ [pN, 20°C]: | 16.5 |
| CC-3-V1 | 6.5 | V₀ [V, 20°C]: | 2.20 |
| PGIY-2-O4 | 5.0 | γ₁ [mPa s, 20°C]: | 100 |
| ∑ | 100.0 | | |

### Mixture M4

| | | | |
|---|---|---|---|
| CCY-3-O2 | 11.0 | Clp. [°C]: | 79.5 |
| CPY-3-O2 | 12.5 | Δn [589 nm, 20°C]: | 0.1032 |
| CLY-3-O2 | 10.0 | ε_{∥} [1 kHz, 20°C]: | 3.6 |
| PY-3-O2 | 8.5 | ε_{⊥} [1 kHz, 20°C]: | 7.5 |
| Y-2O-O1V | 6.5 | Δε [1 kHz, 20°C]: | -3.7 |
| CCY-3-O1 | 7.5 | K₁ [pN, 20°C]: | 14.1 |
| CC-3-V | 32.5 | K₃ [pN, 20°C]: | 16.3 |
| CC-3-V1 | 6.5 | V₀ [V, 20°C]: | 2.19 |
| PGIY-2-O4 | 5.0 | γ₁ [mPa s, 20°C]: | 94 |
| ∑ | 100.0 | | |

The mixture M4 additionally contains 50 ppm of the compound I-2-1a

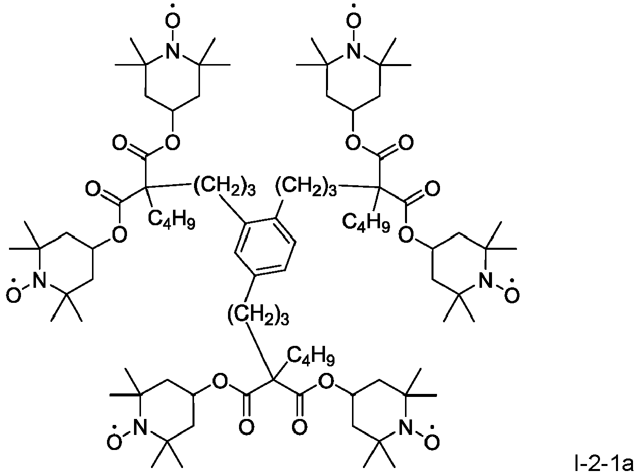

### Mixture M5

| | | | |
|---|---|---|---|
| CLY-3-O2 | 8.0 | Clp. [°C]: | 75.5 |
| CPY-3-O2 | 9.5 | Δn [589 nm, 20°C]: | 0.1197 |
| CPY-3-O2 | 11.5 | ε_{∥} [1 kHz, 20°C]: | 3.4 |
| PY-3-O2 | 5.5 | ε_{⊥} [1 kHz, 20°C]: | 5.8 |
| Y-4O-O4 | 5.0 | Δε [1 kHz, 20°C]: | -2.4 |
| CC-3-V | 31.5 | K₁ [pN, 20°C]: | 14.5 |
| CC-3-V1 | 8.0 | K₃ [pN, 20°C]: | 15.1 |
| CPP-3-2 | 8.0 | V₀ [V, 20°C]: | 2.66 |
| PP-1-2V1 | 7.5 | γ₁ [mPa s, 20°C]: | 80 |
| PGIY-2-O4 | 5.5 | | |
| ∑ | 100.0 | | |

### Mixture M6

| | | | |
|---|---|---|---|
| CLY-3-O2 | 8.0 | Clp. [°C]: | 74.5 |
| CPY-3-O2 | 9.5 | Δn [589 nm, 20°C]: | 0.1194 |
| CPY-3-O2 | 11.5 | ε_{∥} [1 kHz, 20°C]: | 3.3 |
| PY-3-O2 | 5.5 | ε_{⊥} [1 kHz, 20°C]: | 5.8 |
| Y-2O-O1V | 5.0 | Δε [1 kHz, 20°C]: | -2.3 |
| CC-3-V | 31.5 | K₁ [pN, 20°C]: | 14.1 |
| CC-3-V1 | 8.0 | K₃ [pN, 20°C]: | 15.0 |
| CPP-3-2 | 8.0 | V₀ [V, 20°C]: | 2.64 |
| PP-1-2V1 | 7.5 | γ₁ [mPa s, 20°C]: | 75 |
| PGIY-2-O4 | 5.5 | | |
| ∑ | 100.0 | | |

Mixture M6 additionally contains 80ppm of the compound ST-12b-1

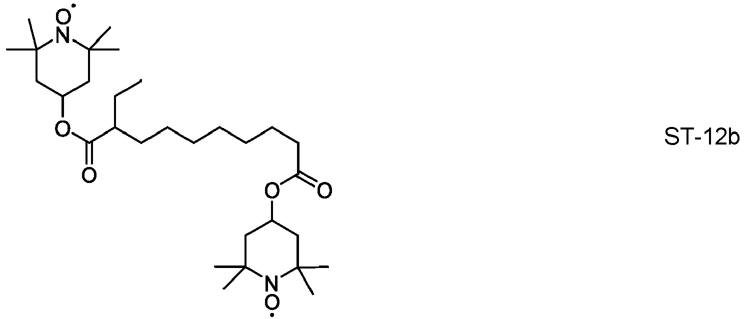

### Mixture M7

| | | | |
|---|---|---|---|
| CC-3-V | 34.0 | Clp. [°C]: | 74.5 |
| CC-3-V1 | 8.0 | Δn [589 nm, 20°C]: | 0.1084 |
| CCY-3-O1 | 6.5 | ε_{∥} [1 kHz, 20°C]: | 3.6 |
| CCY-3-O2 | 9.0 | ε_{⊥} [1 kHz, 20°C]: | 6.8 |
| CLY-3-O2 | 5.0 | Δε [1 kHz, 20°C]: | -3.2 |
| CPY-3-O2 | 11.5 | K₁ [pN, 20°C]: | 14.0 |
| PGIY-2-O4 | 5.0 | K₃ [pN, 20°C]: | 15.4 |
| PP-1-2V1 | 1.0 | V₀ [V, 20°C]: | 2.32 |
| PY-3-O2 | 10.0 | γ₁ [mPa s, 20°C]: | 86 |
| PY-4-O2 | 4.0 | LTS bulk [h, -25°C]: | 216 |
| PYP-2-3 | 3.0 | LTS bulk [h, -30°C]: | 72 |
| Y-4O-O4 | 3.0 | | |
| ∑ | 100.0 | | |

### Mixture M8

| | | | |
|---|---|---|---|
| CC-3-V | 34.0 | Clp. [°C]: | 74 |
| CC-3-V1 | 8.0 | Δn [589 nm, 20°C]: | 0.1083 |
| CCY-3-O1 | 6.5 | ε_{∥} [1 kHz, 20°C]: | 3.6 |
| CCY-3-O2 | 9.0 | ε_{⊥} [1 kHz, 20°C]: | 6.8 |
| CLY-3-O2 | 5.0 | Δε [1 kHz, 20°C]: | -3.2 |
| CPY-3-O2 | 11.5 | K₁ [pN, 20°C]: | 13.8 |
| PGIY-2-O4 | 5.0 | K₃ [pN, 20°C]: | 15.4 |
| PP-1-2V1 | 1.0 | V₀ [V, 20°C]: | 2.31 |
| PY-3-O2 | 10.0 | γ₁ [mPa s, 20°C]: | 83 |
| PY-4-O2 | 4.0 | | |
| PYP-2-3 | 3.0 | | |
| Y-2O-O1V | 3.0 | | |
| ∑ | 100.0 | | |

### Mixture M9

| | | | |
|---|---|---|---|
| Y-4O-O4 | 4.0 | Clp. [°C]: | 69.7 |
| CY-3-O2 | 14.0 | Δn [589 nm, 20°C]: | 0.1104 |
| PY-3-O2 | 12.0 | ε_{∥} [1 kHz, 20°C]: | 4.5 |
| CCY-3-O1 | 4.0 | ε_{⊥} [1 kHz, 20°C]: | 10.5 |
| CCY-3-O2 | 7.0 | Δε [1 kHz, 20°C]: | -6.0 |
| CCY-3-O3 | 4.0 | K₁ [pN, 20°C]: | 12.9 |
| CCY-4-O2 | 4.0 | K₃ [pN, 20°C]: | 13.8 |
| CLY-3-O2 | 6.0 | V₀ [V, 20°C]: | 1.59 |
| CLY-3-O3 | 6.0 | γ₁ [mPa s, 20°C]: | 125 |
| B(S)-2O-O4 | 4.0 | | |
| B(S)-2O-O5 | 4.0 | | |
| PGIY-2-O4 | 5.0 | | |
| CC-3-V | 21.5 | | |
| CCP-V-1 | 4.5 | | |
| ∑ | 100.0 | | |

### Mixture M10

| | | | |
|---|---|---|---|
| B(S)-2O-O5 | 3.0 | Clp. [°C]: | 80.6 |
| CC-3-V | 35.0 | Δn [589 nm, 20°C]: | 0.0932 |
| CC-3-V1 | 8.0 | ε_{∥} [1 kHz, 20°C]: | 3.5 |
| CC-3-5 | 3.0 | ε_{⊥} [1 kHz, 20°C]: | 6.7 |
| CCP-3-1 | 3.0 | Δε [1 kHz, 20°C]: | -3.2 |
| CCY-3-O1 | 5.0 | K₁ [pN, 20°C]: | 15.8 |
| CCY-3-O2 | 9.0 | K₃ [pN, 20°C]: | 17.2 |
| CLY-3-O2 | 9.0 | V₀ [V, 20°C]: | 2.46 |
| CLY-4-O2 | 5.0 | γ₁ [mPa s, 20°C]: | 89 |
| CLY-5-O2 | 5.0 | LTS bulk [h, -20°C]: | 1000 |
| PY-1-O2 | 10.0 | | |
| PY-3-O2 | 2.0 | | |
| Y-4O-O4 | 3.0 | | |
| ∑ | 100.0 | | |

### Mixture M11

| | | | |
|---|---|---|---|
| B(S)-2O-O4 | 3.0 | Clp. [°C]: | 77.2 |
| B(S)-2O-O5 | 4.0 | Δn [589 nm, 20°C]: | 0.1296 |
| B(S)-2O-O6 | 3.0 | ε_{∥} [1 kHz, 20°C]: | 4.3 |
| CC-3-V | 30.0 | ε_{⊥} [1 kHz, 20°C]: | 10.6 |
| CLY-3-O2 | 7.0 | Δε [1 kHz, 20°C]: | -6.2 |
| CLY-3-O3 | 5.0 | K₁ [pN, 20°C]: | 14.6 |
| CLY-4-O2 | 3.5 | K₃ [pN, 20°C]: | 14.6 |
| COB(S)-2-O4 | 8.5 | V₀ [V, 20°C]: | 1.61 |
| CPY-2-O2 | 8.0 | γ₁ [mPa s, 20°C]: | 133 |
| CPY-3-O2 | 9.0 | LTS bulk [h, -20°C]: | 1000 |
| PY-1-O2 | 9.5 | | |
| PY-2-O2 | 8.0 | | |
| Y-4O-O4 | 1.5 | | |
| Σ | 100.0 | | |

### Mixture M12

| | | | |
|---|---|---|---|
| B(S)-2O-O4 | 3.0 | Clp. [°C]: | 76.9 |
| B(S)-2O-O5 | 4.0 | Δn [589 nm, 20°C]: | 0.1288 |
| B(S)-2O-O6 | 3.0 | ε_{∥} [1 kHz, 20°C]: | 4.7 |
| CC-3-V | 25.0 | ε_{⊥} [1 kHz, 20°C]: | 11.8 |
| CLY-3-O2 | 7.0 | Δε [1 kHz, 20°C]: | -7.2 |
| CLY-3-O3 | 5.0 | K₁ [pN, 20°C]: | 14.7 |
| CLY-4-O2 | 4.0 | K₃ [pN, 20°C]: | 14.2 |
| COB(S)-2-O4 | 10.0 | V₀ [V, 20°C]: | 1.49 |
| CPY-2-O2 | 10.0 | γ₁ [mPa s, 20°C]: | 147 |
| CPY-3-O2 | 10.5 | LTS bulk [h, -20°C]: | 1000 |
| PY-1-O2 | 9.0 | | |
| PY-2-O2 | 2.5 | | |
| Y-4O-O4 | 7.0 | | |
| Σ | 100.0 | | |

### Mixture M13

| | | | |
|---|---|---|---|
| B(S)-2O-O4 | 3.0 | Clp. [°C]: | 77.1 |
| B(S)-2O-O5 | 4.0 | Δn [589 nm, 20°C]: | 0.1299 |
| B(S)-2O-O6 | 3.0 | ε_{∥} [1 kHz, 20°C]: | 4.5 |
| CC-3-V | 27.5 | ε_{⊥} [1 kHz, 20°C]: | 11.4 |
| CLY-3-O2 | 7.0 | Δε [1 kHz, 20°C]: | -6.8 |
| CLY-3-O3 | 5.0 | K₁ [pN, 20°C]: | 14.4 |
| CLY-4-O2 | 2.5 | K₃ [pN, 20°C]: | 14.4 |
| COB(S)-2-O4 | 10.0 | V₀ [V, 20°C]: | 1.54 |
| CPY-2-O2 | 10.0 | γ₁ [mPa s, 20°C]: | 147 |
| CPY-3-O2 | 10.0 | LTS bulk [h, -20°C]: | 1000 |
| PY-1-O2 | 9.0 | | |
| PY-2-O2 | 4.0 | | |
| Y-4O-O4 | 5.0 | | |
| Σ | 100.0 | | |

### Mixture M14

| | | | |
|---|---|---|---|
| B(S)-2O-O4 | 4.0 | Clp. [°C]: | 77.1 |
| B(S)-2O-O5 | 5.0 | Δn [589 nm, 20°C]: | 0.1317 |
| B(S)-2O-O6 | 4.0 | ε_{∥} [1 kHz, 20°C]: | 4.9 |
| CC-3-V | 22.0 | ε_{⊥} [1 kHz, 20°C]: | 13.1 |
| CLY-3-O2 | 7.0 | Δε [1 kHz, 20°C]: | -8.1 |
| CLY-3-O3 | 5.0 | K₁ [pN, 20°C]: | 14.8 |
| CLY-4-O2 | 5.0 | K₃ [pN, 20°C]: | 14.3 |
| COB(S)-2-O4 | 10.0 | V₀ [V, 20°C]: | 1.40 |
| CPY-2-O2 | 9.0 | γ₁ [mPa s, 20°C]: | 167 |
| CPY-3-O2 | 12.0 | LTS bulk [h, -20°C]: | 1000 |
| PY-1-O2 | 7.0 | | |
| Y-4O-O4 | 10.0 | | |
| Σ | 100.0 | | |

### Mixture M15

| | | | |
|---|---|---|---|
| B(S)-2O-O4 | 4.0 | Clp. [°C]: | 78.7 |
| CC-3-V | 35.0 | Δn [589 nm, 20°C]: | 0.0935 |
| CCP-V-1 | 15.0 | ε_{∥} [1 kHz, 20°C]: | 3.6 |
| CCY-3-O1 | 6.0 | ε_{⊥} [1 kHz, 20°C]: | 6.9 |
| CCY-3-O2 | 7.0 | Δε [1 kHz, 20°C]: | -3.3 |
| CCY-5-O2 | 7.0 | K₁ [pN, 20°C]: | 14.1 |
| CLY-3-O2 | 6.0 | K₃ [pN, 20°C]: | 16.0 |
| CLY-5-O2 | 2.0 | γ₁ [mPa s, 20°C]: | 90 |
| CY-3-O2 | 3.0 | | |
| PY-1-O2 | 6.0 | | |
| PY-3-O2 | 4.0 | | |
| Y-4O-O4 | 5.0 | | |
| Σ | 100.0 | | |

### Mixture M16

| | | | |
|---|---|---|---|
| B(S)-2O-O4 | 4.0 | Clp. [°C]: | 75.9 |
| CC-3-V | 28.5 | Δn [589 nm, 20°C]: | 0.0936 |
| CC-3-V1 | 8.0 | ε_{∥} [1 kHz, 20°C]: | 3.7 |
| CCP-V-1 | 13.5 | ε_{⊥} [1 kHz, 20°C]: | 7.0 |
| CCY-3-O1 | 8.0 | Δε [1 kHz, 20°C]: | -3.3 |
| CCY-3-O2 | 10.0 | K₁ [pN, 20°C]: | 13.9 |
| CLY-3-O2 | 6.0 | K₃ [pN, 20°C]: | 16.2 |
| CLY-5-O2 | 2.0 | γ₁ [mPa s, 20°C]: | 86 |
| CY-3-O2 | 5.0 | | |
| PY-1-O2 | 6.0 | | |
| PY-3-O2 | 4.0 | | |
| Y-4O-O4 | 5.0 | | |
| Σ | 100.0 | | |

### Mixture M17

| | | | |
|---|---|---|---|
| B(S)-2O-O4 | 4.0 | Clp. [°C]: | 74.6 |
| B(S)-2O-O5 | 5.0 | Δn [589 nm, 20°C]: | 0.1157 |
| CC-3-V | 22.0 | ε_{∥} [1 kHz, 20°C]: | 4.5 |
| CLY-2-O4 | 5.0 | ε_{⊥} [1 kHz, 20°C]: | 11.1 |
| CLY-3-O2 | 9.0 | Δε [1 kHz, 20°C]: | -6.6 |
| CLY-3-O3 | 6.0 | K₁ [pN, 20°C]: | 13.3 |
| CLY-4-O2 | 5.0 | K₃ [pN, 20°C]: | 14.7 |
| CLY-5-O2 | 5.0 | V₀ [V, 20°C]: | 1.57 |
| COB(S)-2-O4 | 1.0 | γ₁ [mPa s, 20°C]: | 142 |
| CPY-3-O2 | 10.0 | LTS bulk [h, -20°C]: | 1000 |
| CY-3-O2 | 15.0 | | |
| PY-2-O2 | 10.0 | | |
| Y-4O-O4 | 3.0 | | |
| Σ | 100.0 | | |

### Mixture M18

| | | | |
|---|---|---|---|
| B(S)-2O-O5 | 5.0 | Clp. [°C]: | 74.3 |
| CC-3-V | 24.5 | Δn [589 nm, 20°C]: | 0.1117 |
| CLY-2-O4 | 5.0 | ε_{∥} [1 kHz, 20°C]: | 4.4 |
| CLY-3-O2 | 9.0 | ε_{⊥} [1 kHz, 20°C]: | 10.5 |
| CLY-3-O3 | 6.0 | Δε [1 kHz, 20°C]: | -6.1 |
| CLY-4-O2 | 5.0 | K₁ [pN, 20°C]: | 13.8 |
| CLY-5-O2 | 3.5 | K₃ [pN, 20°C]: | 14.1 |
| CPY-3-O2 | 10.0 | V₀ [V, 20°C]: | 1.60 |
| CY-3-O2 | 15.0 | γ₁ [mPa s, 20°C]: | 131 |
| Y-4O-O4 | 3.0 | | |
| PY-2-O2 | 10.0 | | |
| COB(S)-2-O4 | 4.0 | | |
| Σ | 100.0 | | |

### Mixture M19

| | | | |
|---|---|---|---|
| B(S)-2O-O4 | 2.0 | Clp. [°C]: | 75 |
| B(S)-2O-O5 | 3.0 | Δn [589 nm, 20°C]: | 0.1035 |
| B(S)-2O-O6 | 2.0 | ε_{∥} [1 kHz, 20°C]: | 3.5 |
| B-2O-O5 | 2.0 | ε_{⊥} [1 kHz, 20°C]: | 6.6 |
| CPP-3-2 | 4.0 | Δε [1 kHz, 20°C]: | -3.1 |
| CC-3-V | 51.0 | K₁ [pN, 20°C]: | 14.4 |
| CC-3-V1 | 1.0 | K₃ [pN, 20°C]: | 14.6 |
| CLY-3-O2 | 9.0 | V₀ [V, 20°C]: | 2.29 |
| COB(S)-2-O4 | 5.5 | γ₁ [mPa s, 20°C]: | 71 |
| CPY-3-O2 | 12.0 | LTS bulk [h, -20°C]: | 384 |
| PY-1-O2 | 7.5 | | |
| Y-4O-O4 | 1.0 | | |
| Σ | 100.0 | | |

### Mixture M20

| | | | |
|---|---|---|---|
| CC-3-V | 50.0 | Clp. [°C]: | 75 |
| CC-5-V | 6.31 | Δn [589 nm, 20°C]: | 0.0940 |
| CLY-3-O2 | 7.0 | ε_{∥} [1 kHz, 20°C]: | 3.5 |
| CLY-3-O3 | 6.0 | ε_{⊥} [1 kHz, 20°C]: | 6.6 |
| CLY-4-O2 | 5.0 | Δε [1 kHz, 20°C]: | -3.2 |
| CPY-3-O2 | 1.64 | K₁ [pN, 20°C]: | 14.5 |
| B(S)-2O-O4 | 3.0 | K₃ [pN, 20°C]: | 13.8 |
| B(S)-2O-O5 | 4.0 | V₀ [V, 20°C]: | 2.21 |
| B(S)-2O-O6 | 2.0 | γ₁ [mPa s, 20°C]: | 70 |
| COB(S)-2-O4 | 8.0 | LTS bulk [h, -20°C]: | 1000 |
| PY-1-O2 | 5.97 | | |
| Y-4O-O4 | 1.08 | | |
| Σ | 100.0 | | |

### Mixture M21

| | | | |
|---|---|---|---|
| CC-3-V | 48.26 | Clp. [°C]: | 76.6 |
| CLY-3-O2 | 7.0 | Δn [589 nm, 20°C]: | 0.0945 |
| CLY-3-O3 | 6.0 | ε_{∥} [1 kHz, 20°C]: | 3.5 |
| CLY-2-O4 | 5.0 | ε_{⊥} [1 kHz, 20°C]: | 6.5 |
| CLY-4-O2 | 5.0 | Δε [1 kHz, 20°C]: | -3.0 |
| CLY-5-O2 | 3.22 | K₁ [pN, 20°C]: | 14.0 |
| CPY-3-O2 | 12.0 | K₃ [pN, 20°C]: | 14.9 |
| B(S)-2O-O4 | 2.04 | V₀ [V, 20°C]: | 2.34 |
| PY-1-O2 | 7.65 | γ₁ [mPa s, 20°C]: | 77 |
| Y-4O-O4 | 3.83 | | |
| Σ | 100.0 | | |

### Mixture M22

| | | | |
|---|---|---|---|
| B(S)-2O-O4 | 3.0 | Clp. [°C]: | 73.9 |
| B(S)-2O-O5 | 4.0 | Δn [589 nm, 20°C]: | 0.1097 |
| B(S)-2O-O6 | 3.0 | ε_{∥} [1 kHz, 20°C]: | 4.9 |
| B-2O-O5 | 2.0 | ε_{⊥} [1 kHz, 20°C]: | 12.7 |
| CC-3-V | 24.0 | Δε [1 kHz, 20°C]: | -7.8 |
| CCY-3-O1 | 4.0 | K₁ [pN, 20°C]: | 14.2 |
| CCY-3-O2 | 4.0 | K₃ [pN, 20°C]: | 12.8 |
| CCY-3-O3 | 3.0 | V₀ [V, 20°C]: | 1.36 |
| CCY-4-O2 | 5.0 | γ₁ [mPa s, 20°C]: | 138 |
| CLY-2-O4 | 4.0 | LTS bulk [h, -20°C]: | 1000 |
| CLY-3-O2 | 7.0 | | |
| CLY-3-O3 | 5.0 | | |
| CLY-4-O2 | 5.0 | | |
| COB(S)-2-O4 | 8.5 | | |
| CY-3-O2 | 1.5 | | |
| PY-2-O2 | 7.0 | | |
| Y-4O-O4 | 10.0 | | |
| Σ | 100.0 | | |

### Mixture M23

| | | | |
|---|---|---|---|
| CC-3-V | 50.5 | Clp. [°C]: | 75 |
| CLY-3-O2 | 7.0 | Δn [589 nm, 20°C]: | 0.0929 |
| CLY-3-O3 | 5.0 | ε_{∥} [1 kHz, 20°C]: | 3.5 |
| CLY-2-O4 | 5.0 | ε_{⊥} [1 kHz, 20°C]: | 6.4 |
| CLY-4-O2 | 5.0 | Δε [1 kHz, 20°C]: | -2.9 |
| CLY-5-O2 | 1.5 | K₁ [pN, 20°C]: | 13.8 |
| CPY-3-O2 | 10.5 | K₃ [pN, 20°C]: | 14.4 |
| PY-1-O2 | 7.5 | V₀ [V, 20°C]: | 2.34 |
| Y-4O-O4 | 4.0 | γ₁ [mPa s, 20°C]: | 74 |
| COB(S)-2-O4 | 4.0 | LTS bulk [h, -20°C]: | 336 |
| Σ | 100.0 | | |

### Mixture M24

| | | | |
|---|---|---|---|
| B(S)-2O-O5 | 3.0 | Clp. [°C]: | 94.4 |
| B(S)-2O-O6 | 2.0 | Δn [589 nm, 20°C]: | 0.0899 |
| CC-3-V | 30.0 | ε_{∥} [1 kHz, 20°C]: | 3.3 |
| CC-3-V1 | 8.0 | ε_{⊥} [1 kHz, 20°C]: | 7.2 |
| CC-3-5 | 8.0 | Δε [1 kHz, 20°C]: | -3.9 |
| CCY-3-O2 | 9.0 | K₁ [pN, 20°C]: | 19.9 |
| CLOY-3-O2 | 15.0 | K₃ [pN, 20°C]: | 21.2 |
| CLY-3-O2 | 9.0 | V₀ [V, 20°C]: | 2.47 |
| CLY-3-O3 | 3.0 | γ₁ [mPa s, 20°C]: | 141 |
| CLY-4-O2 | 5.0 | LTS bulk [h, -20°C]: | 672 |
| CLY-5-O2 | 5.0 | | |
| PY-1-O2 | 1.5 | | |
| Y-4O-O4 | 1.5 | | |
| Σ | 100.0 | | |

### Mixture M25

| | | | |
|---|---|---|---|
| B(S)-2O-O4 | 7.0 | Clp. [°C]: | 52.4 |
| CC-3-V | 43.0 | Δn [589 nm, 20°C]: | 0.1033 |
| CLY-3-O2 | 8.0 | ε_{∥} [1 kHz, 20°C]: | 4.2 |
| CPY-3-O2 | 8.0 | ε_{⊥} [1 kHz, 20°C]: | 7.9 |
| CY-3-O2 | 8.0 | Δε [1 kHz, 20°C]: | -3.7 |
| PGIY-2-O4 | 8.0 | K₁ [pN, 20°C]: | 10.0 |
| PY-3-O2 | 6.0 | K₃ [pN, 20°C]: | 10.4 |
| PYP-2-3 | 5.0 | V₀ [V, 20°C]: | 1.78 |
| Y-4O-O4 | 7.0 | γ₁ [mPa s, 20°C]: | 61 |
| Σ | 100.0 | | |

### Mixture M26

| | | | |
|---|---|---|---|
| B(S)-2O-O4 | 7.0 | Clp. [°C]: | 55.9 |
| CC-3-V | 42.5 | Δn [589 nm, 20°C]: | 0.1038 |
| CCY-3-O2 | 8.0 | ε_{∥} [1 kHz, 20°C]: | 4.1 |
| CLY-3-O2 | 8.0 | ε_{⊥} [1 kHz, 20°C]: | 7.7 |
| CY-3-O2 | 5.5 | Δε [1 kHz, 20°C]: | -3.6 |
| PGIY-2-O4 | 8.0 | K₁ [pN, 20°C]: | 10.7 |
| PY-3-O2 | 6.0 | K₃ [pN, 20°C]: | 11.0 |
| PYP-2-3 | 8.0 | V₀ [V, 20°C]: | 1.83 |
| Y-4O-O4 | 7.0 | γ₁ [mPa s, 20°C]: | 63 |
| Σ | 100.0 | | |

### Mixture M27

| | | | |
|---|---|---|---|
| B(S)-2O-O4 | 7.0 | Clp. [°C]: | 60.2 |
| CC-3-V | 44.5 | Δn [589 nm, 20°C]: | 0.1044 |
| CCY-3-O2 | 7.5 | ε_{∥} [1 kHz, 20°C]: | 4.0 |
| CLY-3-O2 | 7.0 | ε_{⊥} [1 kHz, 20°C]: | 7.6 |
| CPY-3-O2 | 7.0 | Δε [1 kHz, 20°C]: | -3.6 |
| PGIY-2-O4 | 7.0 | K₁ [pN, 20°C]: | 11.6 |
| PY-3-O2 | 7.0 | K₃ [pN, 20°C]: | 11.8 |
| PYP-2-3 | 5.0 | V₀ [V, 20°C]: | 1.91 |
| Y-4O-O4 | 8.0 | γ₁ [mPa s, 20°C]: | 66 |
| Σ | 100.0 | | |

### Mixture M28

| | | | |
|---|---|---|---|
| B(S)-2O-O4 | 7.0 | Clp. [°C]: | 55.1 |
| CC-3-V | 42.0 | Δn [589 nm, 20°C]: | 0.1030 |
| CCY-3-O2 | 6.0 | ε_{∥} [1 kHz, 20°C]: | 4.1 |
| CLY-3-O2 | 6.5 | ε_{⊥} [1 kHz, 20°C]: | 7.6 |
| CPY-3-O2 | 8.0 | Δε [1 kHz, 20°C]: | -3.5 |
| CY-3-O2 | 6.0 | K₁ [pN, 20°C]: | 10.7 |
| PY-3-O2 | 7.5 | K₃ [pN, 20°C]: | 11.3 |
| PYP-2-3 | 10.0 | V₀ [V, 20°C]: | 1.87 |
| Y-4O-O4 | 7.0 | γ₁ [mPa s, 20°C]: | 63 |
| Σ | 100.0 | | |

### Mixture M29

| | | | |
|---|---|---|---|
| B(S)-2O-O4 | 7.0 | Clp. [°C]: | 57.7 |
| CC-3-V | 44.0 | Δn [589 nm, 20°C]: | 0.1039 |
| CCY-3-O2 | 6.0 | ε_{∥} [1 kHz, 20°C]: | 4.0 |
| CLY-3-O2 | 6.0 | ε_{⊥} [1 kHz, 20°C]: | 7.6 |
| CPY-3-O2 | 6.0 | Δε [1 kHz, 20°C]: | -3.5 |
| CY-3-O2 | 6.0 | K₁ [pN, 20°C]: | 11.0 |
| PGIY-2-O4 | 7.0 | K₃ [pN, 20°C]: | 11.5 |
| PY-3-O2 | 6.0 | V₀ [V, 20°C]: | 1.89 |
| PYP-2-3 | 6.0 | γ₁ [mPa s, 20°C]: | 64 |
| Y-4O-O4 | 6.0 | | |
| Σ | 100.0 | | |

### Mixture M30

| | | | |
|---|---|---|---|
| B-2O-O5 | 4.0 | Clp. [°C]: | 73.5 |
| CC-3-V | 32.0 | Δn [589 nm, 20°C]: | 0.1020 |
| CCP-3-1 | 4.0 | ε_{∥} [1 kHz, 20°C]: | 4.1 |
| CCY-3-O1 | 6.0 | ε_{⊥} [1 kHz, 20°C]: | 9.2 |
| CCY-3-O2 | 9.0 | Δε [1 kHz, 20°C]: | -5.1 |
| CLY-3-O2 | 6.5 | K₁ [pN, 20°C]: | 13.7 |
| CLY-3-O3 | 5.0 | K₃ [pN, 20°C]: | 14.9 |
| Y-4O-O4 | 3.0 | V₀ [V, 20°C]: | 1.81 |
| CY-3-O2 | 15.5 | γ₁ [mPa s, 20°C]: | 102 |
| B(S)-2O-O5 | 4.0 | LTS bulk [h, -20°C]: | 504 |
| B(S)-2O-O4 | 3.0 | LTS bulk [h, -30°C]: | 144 |
| CPYP-3-2 | 4.0 | | |
| PY-3-O2 | 4.0 | | |
| Σ | 100.0 | | |

### Mixture M31

| | | | |
|---|---|---|---|
| CC-3-V | 32.5 | Clp. [°C]: | 74.5 |
| CCP-3-1 | 5.0 | Δn [589 nm, 20°C]: | 0.1012 |
| CCY-3-O1 | 7.0 | ε_{∥} [1 kHz, 20°C]: | 4.1 |
| CCY-3-O2 | 7.0 | ε_{⊥} [1 kHz, 20°C]: | 9.0 |
| CLY-3-O2 | 6.5 | Δε [1 kHz, 20°C]: | -4.9 |
| CLY-3-O3 | 4.0 | K₁ [pN, 20°C]: | 13.7 |
| Y-4O-O4 | 4.5 | K₃ [pN, 20°C]: | 14.8 |
| CY-3-O2 | 14.0 | V₀ [V, 20°C]: | 1.83 |
| B(S)-2O-O5 | 4.0 | γ₁ [mPa s, 20°C]: | 96 |
| B(S)-2O-O4 | 4.0 | LTS bulk [h, -20°C]: | 240 |
| B(S)-2O-O6 | 4.0 | | |
| CPYP-3-2 | 4.0 | | |
| PY-3-O2 | 3.5 | | |
| Σ | 100.0 | | |

### Mixture M32

| | | | |
|---|---|---|---|
| CY-3-O2 | 8.5 | Clp. [°C]: | 75 |
| CLY-3-O2 | 8.0 | Δn [589 nm, 20°C]: | 0.1023 |
| CLY-3-O3 | 5.5 | ε_{∥} [1 kHz, 20°C]: | 3.9 |
| CLY-5-O2 | 5.0 | ε_{⊥} [1 kHz, 20°C]: | 8.7 |
| CLY-4-O2 | 5.0 | Δε [1 kHz, 20°C]: | -4.8 |
| CLY-2-O4 | 5.0 | K₁ [pN, 20°C]: | 14.4 |
| CPY-3-O2 | 4.0 | K₃ [pN, 20°C]: | 14.3 |
| CC-3-V | 40.0 | V₀ [V, 20°C]: | 1.83 |
| B(S)-2O-O5 | 3.0 | γ₁ [mPa s, 20°C]: | 92 |
| B(S)-2O-O4 | 3.0 | | |
| B(S)-2O-O6 | 3.0 | | |
| B-2O-O5 | 4.0 | | |
| Y-4O-O4 | 1.5 | | |
| PY-3-O2 | 4.5 | | |
| Σ | 100.0 | | |

### Mixture M33

| | | | |
|---|---|---|---|
| CY-3-O2 | 5.0 | Clp. [°C]: | 75 |
| CLY-3-O2 | 8.0 | Δn [589 nm, 20°C]: | 0.1024 |
| CLY-3-O3 | 5.0 | ε_{∥} [1 kHz, 20°C]: | 3.9 |
| CLY-5-O2 | 5.0 | ε_{⊥} [1 kHz, 20°C]: | 8.7 |
| CLY-4-O2 | 5.0 | Δε [1 kHz, 20°C]: | -4.8 |
| CLY-2-O4 | 4.5 | K₁ [pN, 20°C]: | 15.1 |
| CC-3-V | 44.0 | K₃ [pN, 20°C]: | 14.1 |
| B(S)-2O-O5 | 5.0 | V₀ [V, 20°C]: | 1.80 |
| B(S)-2O-O4 | 5.0 | γ₁ [mPa s, 20°C]: | 85 |
| B(S)-2O-O6 | 5.0 | | |
| B-2O-O5 | 4.0 | | |
| Y-4O-O4 | 1.0 | | |
| PY-3-O2 | 3.5 | | |
| Σ | 100.0 | | |

### Mixture M34

| | | | |
|---|---|---|---|
| CY-3-O2 | 11.5 | Clp. [°C]: | 75 |
| CLY-3-O2 | 8.0 | Δn [589 nm, 20°C]: | 0.1023 |
| CLY-3-O3 | 5.0 | ε_{∥} [1 kHz, 20°C]: | 3.9 |
| CLY-5-O2 | 5.0 | ε_{⊥} [1 kHz, 20°C]: | 8.9 |
| CLY-4-O2 | 5.0 | Δε [1 kHz, 20°C]: | -4.9 |
| CLY-2-O4 | 5.0 | K₁ [pN, 20°C]: | 14.2 |
| CPY-3-O2 | 4.5 | K₃ [pN, 20°C]: | 14.4 |
| CC-3-V | 37.5 | V₀ [V, 20°C]: | 1.81 |
| B(S)-2O-O5 | 5.0 | γ₁ [mPa s, 20°C]: | 94 |
| B(S)-2O-O4 | 4.0 | LTS bulk [h, -20°C]: | 1000 |
| B(S)-2O-O6 | 3.0 | LTS bulk [h, -30°C]: | 120 |
| Y-4O-O4 | 2.0 | | |
| PY-3-O2 | 4.5 | | |
| Σ | 100.0 | | |

### Mixture M35

| | | | |
|---|---|---|---|
| CY-3-O2 | 11.5 | Clp. [°C]: | 74.5 |
| CLY-3-O2 | 8.0 | Δn [589 nm, 20°C]: | 0.1026 |
| CLY-3-O3 | 5.0 | ε_{∥} [1 kHz, 20°C]: | 4.0 |
| CLY-5-O2 | 5.0 | ε_{⊥} [1 kHz, 20°C]: | 8.9 |
| CLY-4-O2 | 5.0 | Δε [1 kHz, 20°C]: | -5.0 |
| CLY-2-O4 | 5.0 | K₁ [pN, 20°C]: | 14.6 |
| CCP-3-1 | 3.5 | K₃ [pN, 20°C]: | 14.4 |
| CC-3-V | 36.0 | V₀ [V, 20°C]: | 1.80 |
| B(S)-2O-O5 | 6.0 | γ₁ [mPa s, 20°C]: | 93 |
| B(S)-2O-O4 | 5.0 | LTS bulk [h, -20°C]: | 1000 |
| B(S)-2O-O6 | 3.0 | | |
| Y-4O-O4 | 2.0 | | |
| PY-3-O2 | 5.0 | | |
| Σ | 100.0 | | |

### Mixture M36

| | | | |
|---|---|---|---|
| CCP-V-1 | 6.0 | Clp. [°C]: | 75 |
| CLY-3-O2 | 6.5 | Δn [589 nm, 20°C]: | 0.1030 |
| CLY-4-O2 | 2.0 | ε_{∥} [1 kHz, 20°C]: | 3.4 |
| CPY-3-O2 | 9.0 | ε_{⊥} [1 kHz, 20°C]: | 6.1 |
| PGIY-2-O4 | 6.0 | Δε [1 kHz, 20°C]: | -2.6 |
| PYP-2-3 | 1.5 | K₁ [pN, 20°C]: | 14.0 |
| B(S)-2O-O4 | 4.0 | K₃ [pN, 20°C]: | 14.2 |
| B(S)-2O-O5 | 5.0 | V₀ [V, 20°C]: | 2.45 |
| B(S)-2O-O6 | 3.0 | γ₁ [mPa s, 20°C]: | 65 |
| CC-3-V | 53.0 | LTS bulk [h, -20°C]: | 216 |
| Y-4O-O4 | 2.0 | | |
| PY-3-O2 | 2.0 | | |
| Σ | 100.0 | | |

### Mixture M37

| | | | |
|---|---|---|---|
| CLY-3-O2 | 7.5 | Clp. [°C]: | 75.5 |
| CLY-4-O2 | 5.0 | Δn [589 nm, 20°C]: | 0.1032 |
| CLY-5-O2 | 2.0 | ε_{∥} [1 kHz, 20°C]: | 3.4 |
| CPY-3-O2 | 9.0 | ε_{⊥} [1 kHz, 20°C]: | 6.1 |
| PGIY-2-O4 | 6.0 | Δε [1 kHz, 20°C]: | -2.7 |
| PYP-2-3 | 4.0 | K₁ [pN, 20°C]: | 14.0 |
| B(S)-2O-O4 | 4.0 | K₃ [pN, 20°C]: | 14.2 |
| B(S)-2O-O5 | 4.0 | V₀ [V, 20°C]: | 2.42 |
| CC-3-V | 54.0 | γ₁ [mPa s, 20°C]: | 69 |
| Y-4O-O4 | 2.5 | LTS bulk [h, -20°C]: | 192 |
| PY-3-O2 | 2.0 | | |
| Σ | 100.0 | | |

### Mixture M38

| | | | |
|---|---|---|---|
| CY-3-O2 | 13.0 | Clp. [°C]: | 80 |
| CLY-3-O2 | 8.0 | Δn [589 nm, 20°C]: | 0.1069 |
| CLY-3-O3 | 6.0 | ε_{∥} [1 kHz, 20°C]: | 4.2 |
| CLY-5-O2 | 6.0 | ε_{⊥} [1 kHz, 20°C]: | 10.3 |
| CLY-4-O2 | 6.0 | Δε [1 kHz, 20°C]: | -6.1 |
| CLY-2-O4 | 6.0 | K₁ [pN, 20°C]: | 15.2 |
| CPY-3-O2 | 8.5 | K₃ [pN, 20°C]: | 15.0 |
| CC-3-V | 29.0 | V₀ [V, 20°C]: | 1.66 |
| B(S)-2O-O5 | 5.0 | γ₁ [mPa s, 20°C]: | 124 |
| B(S)-2O-O4 | 4.0 | LTS bulk [h, -20°C]: | 192 |
| B(S)-2O-O6 | 3.0 | LTS bulk [h, -30°C]: | 96 |
| Y-4O-O4 | 5.0 | | |
| PY-3-O2 | 0.5 | | |
| Σ | 100.0 | | |

### Mixture M39

| | | | |
|---|---|---|---|
| CY-3-O2 | 8.0 | Clp. [°C]: | 79.5 |
| CLY-3-O2 | 8.0 | Δn [589 nm, 20°C]: | 0.1055 |
| CLY-3-O3 | 5.0 | ε_{∥} [1 kHz, 20°C]: | 4.0 |
| CLY-5-O2 | 5.0 | ε_{⊥} [1 kHz, 20°C]: | 9.3 |
| CLY-4-O2 | 6.0 | Δε [1 kHz, 20°C]: | -5.3 |
| CLY-2-O4 | 6.0 | K₁ [pN, 20°C]: | 15.0 |
| CPY-3-O2 | 8.0 | K₃ [pN, 20°C]: | 15.0 |
| CC-3-V | 35.0 | V₀ [V, 20°C]: | 1.78 |
| B(S)-2O-O5 | 5.0 | γ₁ [mPa s, 20°C]: | 108 |
| B(S)-2O-O4 | 4.0 | LTS bulk [h, -20°C]: | 1000 |
| B(S)-2O-O6 | 3.0 | LTS bulk [h, -30°C]: | 312 |
| Y-4O-O4 | 4.0 | | |
| PY-3-O2 | 3.0 | | |
| Σ | 100.0 | | |

### Mixture M40

| | | | |
|---|---|---|---|
| CC-3-V | 44.5 | Clp. [°C]: | 81 |
| CPY-3-O2 | 11.0 | Δn [589 nm, 20°C]: | 0.1078 |
| CLY-2-O4 | 4.0 | ε_{∥} [1 kHz, 20°C]: | 3.5 |
| CLY-3-O2 | 6.0 | ε_{⊥} [1 kHz, 20°C]: | 7.2 |
| CLY-3-O3 | 4.5 | Δε [1 kHz, 20°C]: | -3.7 |
| CLY-4-O2 | 4.0 | K₁ [pN, 20°C]: | 14.9 |
| CLY-5-O2 | 4.0 | K₃ [pN, 20°C]: | 14.7 |
| PYP-2-3 | 4.0 | V₀ [V, 20°C]: | 2.11 |
| PY-3-O2 | 4.0 | γ₁ [mPa s, 20°C]: | 88 |
| B(S)-2O-O5 | 4.0 | | |
| B(S)-2O-O4 | 4.0 | | |
| B(S)-2O-O6 | 3.0 | | |
| Y-4O-O4 | 3.0 | | |
| ∑ | 100.0 | | |

### Mixture M41

| | | | |
|---|---|---|---|
| CC-3-V | 41.5 | Clp. [°C]: | 81 |
| CPY-3-O2 | 11.0 | Δn [589 nm, 20°C]: | 0.1078 |
| CLY-2-O4 | 4.0 | ε_{∥} [1 kHz, 20°C]: | 3.7 |
| CLY-3-O2 | 6.0 | ε_{⊥} [1 kHz, 20°C]: | 7.5 |
| CLY-3-O3 | 5.0 | Δε [1 kHz, 20°C]: | -3.8 |
| CLY-4-O2 | 4.0 | K₁ [pN, 20°C]: | 15.4 |
| CLY-5-O2 | 4.0 | K₃ [pN, 20°C]: | 15.3 |
| CCP-3-1 | 2.5 | V₀ [V, 20°C]: | 2.12 |
| PYP-2-3 | 2.5 | γ₁ [mPa s, 20°C]: | 92 |
| PY-3-O2 | 7.5 | LTS bulk [h, -20°C]: | 1000 |
| B(S)-2O-O5 | 4.0 | | |
| B(S)-2O-O4 | 3.0 | | |
| B(S)-2O-O6 | 2.0 | | |
| Y-4O-O4 | 3.0 | | |
| ∑ | 100.0 | | |

### Mixture M42

| | | | |
|---|---|---|---|
| CCP-3-1 | 2.0 | Clp. [°C]: | 93 |
| CCP-V-1 | 6.0 | Δn [589 nm, 20°C]: | 0.1020 |
| CCY-3-O2 | 0.5 | ε_{∥} [1 kHz, 20°C]: | 3.5 |
| CCY-3-O3 | 3.5 | ε_{⊥} [1 kHz, 20°C]: | 7.6 |
| CCY-5-O2 | 1.0 | Δε [1 kHz, 20°C]: | -4.1 |
| CLY-3-O2 | 14.0 | K₁ [pN, 20°C]: | 21.5 |
| CLY-3-O3 | 4.5 | K₃ [pN, 20°C]: | 17.9 |
| CLY-4-O2 | 5.0 | V₀ [V, 20°C]: | 2.20 |
| PGIY-2-O4 | 3.5 | γ₁ [mPa s, 20°C]: | 121 |
| B(S)-2O-O4 | 3.5 | | |
| B(S)-2O-O5 | 4.5 | | |
| B(S)-2O-O6 | 3.0 | | |
| CC-3-V1 | 13.0 | | |
| CC-2-3 | 9.0 | | |
| CC-3-4 | 8.0 | | |
| CC-3-5 | 11.0 | | |
| PY-1-O2 | 2.0 | | |
| Y-4O-O4 | 6.0 | | |
| ∑ | 100.0 | | |

### Mixture M43

| | | | |
|---|---|---|---|
| B(S)-2O-O5 | 0.25 | Clp. [°C]: | 72.5 |
| CCP-3-1 | 16.0 | Δn [589 nm, 20°C]: | 0.1036 |
| CC-3-V | 5.0 | ε_{∥} [1 kHz, 20°C]: | 3.8 |
| CC-3-V1 | 7.0 | ε_{⊥} [1 kHz, 20°C]: | 6.9 |
| CC-4-V1 | 9.0 | Δε [1 kHz, 20°C]: | -3.1 |
| CCY-3-O1 | 4.0 | K₁ [pN, 20°C]: | 13.5 |
| CCY-3-O2 | 6.0 | K₃ [pN, 20°C]: | 15.1 |
| CLY-3-O2 | 4.5 | V₀ [V, 20°C]: | 2.33 |
| CPY-3-O2 | 5.0 | γ₁ [mPa s, 20°C]: | 96 |
| CPY-2-O2 | 2.0 | LTS bulk [h, -20°C]: | 1000 |
| CY-3-O2 | 7.5 | | |
| PY-1-O2 | 4.75 | | |
| PYP-2-3 | 10.0 | | |
| CC-3-O1 | 10.0 | | |
| Y-4O-O4 | 9.0 | | |
| ∑ | 100.0 | | |

### Mixture M44

| | | | |
|---|---|---|---|
| CCP-3-1 | 2.0 | Clp. [°C]: | 89.5 |
| CCP-V-1 | 8.0 | Δn [589 nm, 20°C]: | 0.1040 |
| CCY-3-O2 | 2.5 | ε_{∥} [1 kHz, 20°C]: | 3.6 |
| CCY-3-O3 | 2.5 | ε_{⊥} [1 kHz, 20°C]: | 7.6 |
| CCY-5-O2 | 2.0 | Δε [1 kHz, 20°C]: | -4.0 |
| CLY-3-O2 | 7.0 | K₁ [pN, 20°C]: | 20.7 |
| CLY-3-O3 | 4.5 | K₃ [pN, 20°C]: | 16.9 |
| CLY-4-O2 | 5.0 | V₀ [V, 20°C]: | 2.17 |
| PGIY-2-O4 | 5.0 | γ₁ [mPa s, 20°C]: | 116 |
| B(S)-2O-O4 | 4.0 | | |
| B(S)-2O-O5 | 5.0 | | |
| B(S)-2O-O6 | 3.5 | | |
| CC-3-V1 | 12.5 | | |
| CC-2-3 | 9.0 | | |
| CC-3-4 | 8.0 | | |
| CC-3-5 | 10.7 | | |
| PY-1-O2 | 2.0 | | |
| Y-4O-O4 | 6.5 | | |
| CCQU-3-F | 0.3 | | |
| ∑ | 100.0 | | |

### Mixture M45

| | | | |
|---|---|---|---|
| CC-3-V | 48.26 | Clp. [°C]: | 76.5 |
| CLY-3-O2 | 7.0 | Δn [589 nm, 20°C]: | 0.0952 |
| CLY-3-O3 | 6.0 | ε_{∥} [1 kHz, 20°C]: | 3.5 |
| CLY-2-O4 | 5.0 | ε_{⊥} [1 kHz, 20°C]: | 6.6 |
| CLY-4-O2 | 5.0 | Δε [1 kHz, 20°C]: | -3.1 |
| CLY-5-O2 | 3.22 | K₁ [pN, 20°C]: | 14.1 |
| CPY-3-O2 | 12.0 | K₃ [pN, 20°C]: | 15.0 |
| B(S)-2O-O4 | 2.04 | V₀ [V, 20°C]: | 2.33 |
| PY-1-O2 | 7.65 | γ₁ [mPa s, 20°C]: | 77 |
| Y-4O-O4 | 3.83 | LTS bulk [h, -20°C]: | 384 |
| ∑ | 100.0 | | |

### Mixture M46

| | | | |
|---|---|---|---|
| CC-3-V | 50.0 | Clp. [°C]: | 75.5 |
| CC-5-V | 6.31 | Δn [589 nm, 20°C]: | 0.0947 |
| CLY-3-O2 | 7.0 | ε_{∥} [1 kHz, 20°C]: | 3.4 |
| CLY-3-O3 | 6.0 | ε_{⊥} [1 kHz, 20°C]: | 6.4 |
| CLY-4-O2 | 5.0 | Δε [1 kHz, 20°C]: | -3.1 |
| CPY-3-O2 | 1.64 | K₁ [pN, 20°C]: | 14.1 |
| B(S)-2O-O4 | 3.0 | K₃ [pN, 20°C]: | 13.4 |
| B(S)-2O-O5 | 4.0 | V₀ [V, 20°C]: | 2.21 |
| B(S)-2O-O6 | 2.0 | γ₁ [mPa s, 20°C]: | 68 |
| COB(S)-2-O4 | 8.0 | LTS bulk [h, -20°C]: | 480 |
| PY-1-O2 | 5.97 | | |
| Y-4O-O4 | 1.08 | | |
| ∑ | 100.0 | | |

### Mixture M47

| | | | |
|---|---|---|---|
| CC-3-V | 48.0 | Clp. [°C]: | 76.5 |
| CLY-3-O2 | 8.0 | Δn [589 nm, 20°C]: | 0.0932 |
| CLY-3-O3 | 6.0 | ε_{∥} [1 kHz, 20°C]: | 3.5 |
| CLY-2-O4 | 6.0 | ε_{⊥} [1 kHz, 20°C]: | 6.7 |
| CLY-4-O2 | 5.0 | Δε [1 kHz, 20°C]: | -3.1 |
| CLY-5-O2 | 5.0 | K₁ [pN, 20°C]: | 14.2 |
| CPY-3-O2 | 8.0 | K₃ [pN, 20°C]: | 14.9 |
| B(S)-2O-O4 | 2.0 | V₀ [V, 20°C]: | 2.31 |
| PY-1-O2 | 8.0 | γ₁ [mPa s, 20°C]: | 79 |
| Y-4O-O4 | 4.0 | LTS bulk [h, -20°C]: | 672 |
| ∑ | 100.0 | | |

### Mixture M48

| | | | |
|---|---|---|---|
| CC-3-V | 49.5 | Clp. [°C]: | 75 |
| CLY-3-O2 | 8.0 | Δn [589 nm, 20°C]: | 0.0935 |
| CLY-3-O3 | 5.0 | ε_{∥} [1 kHz, 20°C]: | 3.5 |
| CLY-2-O4 | 5.0 | ε_{⊥} [1 kHz, 20°C]: | 6.4 |
| CPY-2-O2 | 10.5 | Δε [1 kHz, 20°C]: | -2.9 |
| CPY-3-O2 | 10.5 | K₁ [pN, 20°C]: | 13.3 |
| B(S)-2O-O4 | 2.0 | K₃ [pN, 20°C]: | 14.3 |
| CY-3-O2 | 3.5 | V₀ [V, 20°C]: | 2.33 |
| PY-1-O2 | 2.0 | γ₁ [mPa s, 20°C]: | 75 |
| Y-4O-O4 | 4.0 | | |
| ∑ | 100.0 | | |

### Mixture M49

| | | | |
|---|---|---|---|
| B(S)-2O-O5 | 4.0 | Clp. [°C]: | 75 |
| CPP-3-2 | 8.0 | Δn [589 nm, 20°C]: | 0.1022 |
| CC-3-V1 | 10.0 | ε_{∥} [1 kHz, 20°C]: | 3.8 |
| CC-3-4 | 6.0 | ε_{⊥} [1 kHz, 20°C]: | 7.1 |
| CC-3-5 | 6.0 | Δε [1 kHz, 20°C]: | -3.3 |
| CCY-3-O1 | 12.0 | K₁ [pN, 20°C]: | 13.3 |
| CCY-3-O2 | 7.0 | K₃ [pN, 20°C]: | 15.3 |
| CLY-3-O2 | 1.0 | V₀ [V, 20°C]: | 2.26 |
| CPY-2-O2 | 8.0 | γ₁ [mPa s, 20°C]: | 113 |
| CVCP-V-1 | 8.0 | | |
| CY-1-O2 | 8.5 | | |
| PCH-302 | 13.0 | | |
| PY-1-O2 | 2.5 | | |
| Y-4O-O4 | 6.0 | | |
| ∑ | 100.0 | | |

### Mixture M50

| | | | |
|---|---|---|---|
| B(S)-2O-O5 | 4.0 | Clp. [°C]: | 89.5 |
| CC-3-V | 15.0 | Δn [589 nm, 20°C]: | 0.0929 |
| CC-3-V1 | 8.0 | ε_{∥} [1 kHz, 20°C]: | 3.5 |
| CC-4-V1 | 8.5 | ε_{⊥} [1 kHz, 20°C]: | 7.4 |
| CC-3-5 | 12.0 | Δε [1 kHz, 20°C]: | -3.9 |
| CCY-3-O2 | 11.0 | K₁ [pN, 20°C]: | 18.7 |
| CCY-5-O2 | 3.5 | K₃ [pN, 20°C]: | 18.3 |
| CLY-3-O2 | 9.0 | V₀ [V, 20°C]: | 2.29 |
| CLY-3-O3 | 6.0 | γ₁ [mPa s, 20°C]: | 119 |
| CLY-4-O2 | 5.0 | | |
| CLY-5-O2 | 5.0 | | |
| PY-1-O2 | 6.5 | | |
| Y-4O-O4 | 6.5 | | |
| ∑ | 100.0 | | |

### Mixture M51

| | | | |
|---|---|---|---|
| B(S)-2O-O4 | 5.0 | Clp. [°C]: | 78 |
| B(S)-2O-O5 | 5.0 | Δn [589 nm, 20°C]: | 0.1146 |
| B(S)-2O-O6 | 4.0 | ε_{∥} [1 kHz, 20°C]: | 4.2 |
| CC-3-V | 32.0 | ε_{⊥} [1 kHz, 20°C]: | 10.7 |
| CLY-2-O4 | 4.5 | Δε [1 kHz, 20°C]: | -6.4 |
| CLY-3-O2 | 6.0 | K₁ [pN, 20°C]: | 15.7 |
| CLY-3-O3 | 5.0 | K₃ [pN, 20°C]: | 14.1 |
| CLY-4-O2 | 4.0 | V₀ [V, 20°C]: | 1.56 |
| CLY-5-O2 | 5.0 | γ₁ [mPa s, 20°C]: | 123 |
| COB(S)-2-O4 | 8.5 | LTS bulk [h, -20°C]: | 1000 |
| CCP-3-1 | 1.5 | LTS bulk [h, -30°C]: | 480 |
| CY-3-O2 | 8.5 | | |
| PY-3-O2 | 7.0 | | |
| B(S)-4O-O6 | 2.0 | | |
| Y-4O-O4 | 2.0 | | |
| ∑ | 100.0 | | |

### Mixture M52

| | | | |
|---|---|---|---|
| B(S)-2O-O4 | 5.0 | Clp. [°C]: | 77.5 |
| B(S)-2O-O5 | 5.0 | Δn [589 nm, 20°C]: | 0.1146 |
| B(S)-2O-O6 | 4.0 | ε_{∥} [1 kHz, 20°C]: | 4.3 |
| CC-3-V | 31.5 | ε_{⊥} [1 kHz, 20°C]: | 10.7 |
| CLY-2-O4 | 4.5 | Δε [1 kHz, 20°C]: | -6.4 |
| CLY-3-O2 | 6.0 | K₁ [pN, 20°C]: | 15.7 |
| CLY-3-O3 | 5.0 | K₃ [pN, 20°C]: | 14.0 |
| CLY-4-O2 | 4.0 | V₀ [V, 20°C]: | 1.55 |
| CLY-5-O2 | 5.0 | γ₁ [mPa s, 20°C]: | 123 |
| COB(S)-2-O4 | 8.5 | LTS bulk [h, -20°C]: | 1000 |
| CCP-3-1 | 3.0 | LTS bulk [h, -30°C]: | 336 |
| CY-3-O2 | 5.0 | | |
| PY-3-O2 | 7.5 | | |
| B(S)-4O-O6 | 2.0 | | |
| Y-4O-O4 | 4.0 | | |
| ∑ | 100.0 | | |

### Mixture M53

| | | | |
|---|---|---|---|
| B(S)-2O-O4 | 5.0 | Clp. [°C]: | 77.5 |
| B(S)-2O-O5 | 5.0 | Δn [589 nm, 20°C]: | 0.1150 |
| B(S)-2O-O6 | 4.0 | ε_{∥} [1 kHz, 20°C]: | 4.3 |
| CC-3-V | 30.5 | ε_{⊥} [1 kHz, 20°C]: | 10.8 |
| CLY-2-O4 | 4.5 | Δε [1 kHz, 20°C]: | -6.4 |
| CLY-3-O2 | 6.0 | K₁ [pN, 20°C]: | 15.8 |
| CLY-3-O3 | 5.0 | K₃ [pN, 20°C]: | 14.0 |
| CLY-4-O2 | 4.0 | V₀ [V, 20°C]: | 1.56 |
| CLY-5-O2 | 5.0 | γ₁ [mPa s, 20°C]: | 118 |
| COB(S)-2-O4 | 8.5 | LTS bulk [h, -20°C]: | 1000 |
| CCP-3-1 | 5.0 | LTS bulk [h, -30°C]: | 744 |
| CY-3-O2 | 2.0 | | |
| PY-3-O2 | 7.5 | | |
| B(S)-4O-O6 | 2.0 | | |
| Y-4O-O4 | 6.0 | | |
| ∑ | 100.0 | | |

### Mixture M54

| | | | |
|---|---|---|---|
| B(S)-2O-O4 | 5.0 | Clp. [°C]: | 77 |
| B(S)-2O-O5 | 5.0 | Δn [589 nm, 20°C]: | 0.1145 |
| B(S)-2O-O6 | 4.0 | ε_{∥} [1 kHz, 20°C]: | 4.3 |
| CC-3-V | 32.5 | ε_{⊥} [1 kHz, 20°C]: | 10.8 |
| CLY-2-O4 | 4.5 | Δε [1 kHz, 20°C]: | -6.5 |
| CLY-3-O2 | 6.0 | K₁ [pN, 20°C]: | 15.6 |
| CLY-3-O3 | 5.0 | K₃ [pN, 20°C]: | 14.0 |
| CLY-4-O2 | 4.0 | V₀ [V, 20°C]: | 1.55 |
| CLY-5-O2 | 5.0 | γ₁ [mPa s, 20°C]: | 122 |
| COB(S)-2-O4 | 8.5 | LTS bulk [h, -20°C]: | 1000 |
| CCP-3-1 | 2.0 | | |
| CY-3-O2 | 4.5 | | |
| PY-3-O2 | 7.0 | | |
| B(S)-4O-O6 | 3.0 | | |
| Y-4O-O4 | 4.0 | | |
| ∑ | 100.0 | | |

### Mixture M55

| | | | |
|---|---|---|---|
| B(S)-2O-O4 | 5.0 | Clp. [°C]: | 77.5 |
| B(S)-2O-O5 | 5.0 | Δn [589 nm, 20°C]: | 0.1142 |
| B(S)-2O-O6 | 4.0 | ε_{∥} [1 kHz, 20°C]: | 4.3 |
| CC-3-V | 34.0 | ε_{⊥} [1 kHz, 20°C]: | 10.7 |
| CLY-2-O4 | 4.5 | Δε [1 kHz, 20°C]: | -6.4 |
| CLY-3-O2 | 6.0 | K₁ [pN, 20°C]: | 16.1 |
| CLY-3-O3 | 5.0 | K₃ [pN, 20°C]: | 13.8 |
| CLY-4-O2 | 4.0 | V₀ [V, 20°C]: | 1.55 |
| CLY-5-O2 | 5.0 | γ₁ [mPa s, 20°C]: | 118 |
| COB(S)-2-O4 | 8.5 | LTS bulk [h, -20°C]: | 1000 |
| CCP-3-1 | 1.5 | LTS bulk [h, -30°C]: | 192 |
| CY-3-O2 | 3.0 | | |
| PY-3-O2 | 6.5 | | |
| B(S)-4O-O6 | 4.0 | | |
| Y-4O-O4 | 4.0 | | |
| ∑ | 100.0 | | |

### Mixture M56

| | | | |
|---|---|---|---|
| B(S)-2O-O4 | 5.0 | Clp. [°C]: | 77 |
| B(S)-2O-O5 | 5.0 | Δn [589 nm, 20°C]: | 0.1146 |
| B(S)-2O-O6 | 4.0 | ε_{∥} [1 kHz, 20°C]: | 4.3 |
| CC-3-V | 31.5 | ε_{⊥} [1 kHz, 20°C]: | 10.7 |
| CLY-2-O4 | 5.5 | Δε [1 kHz, 20°C]: | -6.5 |
| CLY-3-O2 | 5.5 | K₁ [pN, 20°C]: | 15.2 |
| CLY-3-O3 | 4.5 | K₃ [pN, 20°C]: | 14.1 |
| CLY-4-O2 | 4.5 | V₀ [V, 20°C]: | 1.56 |
| CLY-5-O2 | 5.0 | γ₁ [mPa s, 20°C]: | 125 |
| COB(S)-2-O4 | 8.0 | LTS bulk [h, -20°C]: | 840 |
| CPY-3-O2 | 2.5 | LTS bulk [h, -30°C]: | 528 |
| CY-3-O2 | 9.5 | | |
| PY-3-O2 | 7.5 | | |
| Y-4O-O4 | 2.0 | | |
| ∑ | 100.0 | | |

### Mixture M57

| | | | |
|---|---|---|---|
| B(S)-2O-O4 | 5.0 | Clp. [°C]: | 78 |
| B(S)-2O-O5 | 5.0 | Δn [589 nm, 20°C]: | 0.1148 |
| B(S)-2O-O6 | 4.0 | ε_{∥} [1 kHz, 20°C]: | 4.3 |
| CC-3-V | 32.0 | ε_{⊥} [1 kHz, 20°C]: | 10.8 |
| CLY-2-O4 | 5.5 | Δε [1 kHz, 20°C]: | -6.5 |
| CLY-3-O2 | 5.5 | K₁ [pN, 20°C]: | 15.3 |
| CLY-3-O3 | 4.5 | K₃ [pN, 20°C]: | 14.1 |
| CLY-4-O2 | 4.5 | V₀ [V, 20°C]: | 1.56 |
| CLY-5-O2 | 5.0 | γ₁ [mPa s, 20°C]: | 125 |
| COB(S)-2-O4 | 8.0 | LTS bulk [h, -20°C]: | 840 |
| CPY-3-O2 | 4.5 | LTS bulk [h, -30°C]: | 144 |
| CY-3-O2 | 6.5 | | |
| PY-3-O2 | 6.0 | | |
| Y-4O-O4 | 4.0 | | |
| ∑ | 100.0 | | |

### Mixture M58

| | | | |
|---|---|---|---|
| B(S)-2O-O4 | 5.0 | Clp. [°C]: | 78 |
| B(S)-2O-O5 | 5.0 | Δn [589 nm, 20°C]: | 0.1145 |
| B(S)-2O-O6 | 4.0 | ε_{∥} [1 kHz, 20°C]: | 4.3 |
| CC-3-V | 32.5 | ε_{⊥} [1 kHz, 20°C]: | 10.8 |
| CLY-2-O4 | 5.5 | Δε [1 kHz, 20°C]: | -6.5 |
| CLY-3-O2 | 5.5 | K₁ [pN, 20°C]: | 15.4 |
| CLY-3-O3 | 4.5 | K₃ [pN, 20°C]: | 14.1 |
| CLY-4-O2 | 4.5 | V₀ [V, 20°C]: | 1.56 |
| CLY-5-O2 | 5.0 | γ₁ [mPa s, 20°C]: | 121 |
| COB(S)-2-O4 | 8.0 | LTS bulk [h, -20°C]: | 1000 |
| CPY-3-O2 | 6.0 | LTS bulk [h, -30°C]: | 792 |
| CY-3-O2 | 3.0 | | |
| PY-3-O2 | 5.5 | | |
| Y-4O-O4 | 6.0 | | |
| ∑ | 100.0 | | |

### Mixture M59

| | | | |
|---|---|---|---|
| B(S)-2O-O4 | 5.0 | Clp. [°C]: | 77 |
| B(S)-2O-O5 | 5.0 | Δn [589 nm, 20°C]: | 0.1146 |
| B(S)-2O-O6 | 4.0 | ε_{∥} [1 kHz, 20°C]: | 4.3 |
| CC-3-V | 31.5 | ε_{⊥} [1 kHz, 20°C]: | 10.8 |
| CLY-2-O4 | 4.5 | Δε [1 kHz, 20°C]: | -6.5 |
| CLY-3-O2 | 6.0 | K₁ [pN, 20°C]: | 16.0 |
| CLY-3-O3 | 5.0 | K₃ [pN, 20°C]: | 13.7 |
| CLY-4-O2 | 4.0 | V₀ [V, 20°C]: | 1.54 |
| CLY-5-O2 | 5.0 | γ₁ [mPa s, 20°C]: | 119 |
| COB(S)-2-O4 | 8.5 | LTS bulk [h, -20°C]: | 264 |
| CCP-3-1 | 4.0 | LTS bulk [h, -30°C]: | 96 |
| CY-3-O2 | 1.5 | | |
| PY-3-O2 | 7.0 | | |
| B(S)-4O-O6 | 3.0 | | |
| Y-4O-O4 | 6.0 | | |
| ∑ | 100.0 | | |

### Mixture M60

| | | | |
|---|---|---|---|
| B(S)-2O-O5 | 4.0 | Clp. [°C]: | 70.1 |
| B-2O-O5 | 6.0 | Δn [589 nm, 20°C]: | 0.1074 |
| CPP-3-2 | 16.0 | ε_{∥} [1 kHz, 20°C]: | 3.7 |
| CC-2-3 | 18.0 | ε_{⊥} [1 kHz, 20°C]: | 6.0 |
| CC-3-4 | 4.0 | Δε [1 kHz, 20°C]: | -2.3 |
| CC-3-5 | 3.0 | K₁ [pN, 20°C]: | 15.5 |
| CCP-3-1 | 13.0 | K₃ [pN, 20°C]: | 12.7 |
| CCP-3-3 | 8.0 | V₀ [V, 20°C]: | 2.40 |
| CLY-3-O2 | 8.0 | γ₁ [mPa s, 20°C]: | 80 |
| PP-1-4 | 5.0 | | |
| PY-3-O2 | 5.0 | | |
| Y-4O-O4 | 10.0 | | |
| ∑ | 100.0 | | |

### Mixture M61

| | | | |
|---|---|---|---|
| B(S)-2O-O4 | 4.0 | Clp. [°C]: | 75.2 |
| B(S)-2O-O5 | 3.0 | Δn [589 nm, 20°C]: | 0.1068 |
| B-2O-O5 | 3.0 | ε_{∥} [1 kHz, 20°C]: | 3.6 |
| CPP-3-2 | 5.75 | ε_{⊥} [1 kHz, 20°C]: | 6.1 |
| BCH-52 | 2.5 | Δε [1 kHz, 20°C]: | -2.5 |
| CC-3-V | 36.25 | K₁ [pN, 20°C]: | 13.9 |
| CC-4-V | 3.25 | K₃ [pN, 20°C]: | 13.3 |
| CCP-V-1 | 14.25 | V₀ [V, 20°C]: | 2.39 |
| CLY-3-O2 | 4.75 | γ₁ [mPa s, 20°C]: | 69 |
| CLY-3-O3 | 5.5 | | |
| CPY-3-O2 | 1.75 | | |
| PGIY-2-O4 | 6.0 | | |
| PY-3-O2 | 5.0 | | |
| Y-4O-O4 | 5.0 | | |
| ∑ | 100.0 | | |

### Mixture M62

| | | | |
|---|---|---|---|
| B(S)-2O-O4 | 4.0 | Clp. [°C]: | 75.2 |
| B(S)-2O-O5 | 3.0 | Δn [589 nm, 20°C]: | 0.1067 |
| B-2O-O5 | 3.0 | ε_{∥} [1 kHz, 20°C]: | 3.5 |
| CPP-3-2 | 3.83 | ε_{⊥} [1 kHz, 20°C]: | 6.1 |
| BCH-52 | 1.67 | Δε [1 kHz, 20°C]: | -2.6 |
| CC-3-V | 40.17 | K₁ [pN, 20°C]: | 13.7 |
| CC-4-V | 2.16 | K₃ [pN, 20°C]: | 13.3 |
| CCP-V-1 | 12.33 | V₀ [V, 20°C]: | 2.40 |
| CLY-3-O2 | 3.83 | γ₁ [mPa s, 20°C]: | 70 |
| CLY-3-O3 | 5.17 | | |
| CPY-2-O2 | 3.34 | | |
| CPY-3-O2 | 1.17 | | |
| CY-3-O2 | 1.67 | | |
| PGIY-2-O4 | 6.0 | | |
| PY-3-O2 | 3.33 | | |
| PYP-2-3 | 2.0 | | |
| Y-4O-O4 | 3.33 | | |
| ∑ | 100.0 | | |

### Mixture M63

| | | | |
|---|---|---|---|
| B(S)-2O-O4 | 4.0 | Clp. [°C]: | 75.7 |
| B(S)-2O-O5 | 3.0 | Δn [589 nm, 20°C]: | 0.1084 |
| B-2O-O5 | 3.0 | ε_{∥} [1 kHz, 20°C]: | 3.6 |
| CPP-3-2 | 16.0 | ε_{⊥} [1 kHz, 20°C]: | 6.2 |
| CC-2-3 | 18.0 | Δε [1 kHz, 20°C]: | -2.6 |
| CC-3-O1 | 8.0 | K₁ [pN, 20°C]: | 15.4 |
| CC-3-4 | 5.0 | K₃ [pN, 20°C]: | 13.2 |
| CC-3-5 | 3.0 | V₀ [V, 20°C]: | 2.38 |
| CCP-3-1 | 13.0 | γ₁ [mPa s, 20°C]: | 86 |
| CLY-3-O2 | 6.5 | | |
| CPY-3-O2 | 5.0 | | |
| PY-3-O2 | 2.0 | | |
| PYP-2-3 | 4.5 | | |
| Y-4O-O4 | 9.0 | | |
| ∑ | 100.0 | | |

### Mixture M64

| | | | |
|---|---|---|---|
| CCY-3-O2 | 7.0 | Clp. [°C]: | 84.6 |
| CPY-3-O2 | 12.0 | Δn [589 nm, 20°C]: | 0.1121 |
| CLY-3-O2 | 7.0 | ε_{∥} [1 kHz, 20°C]: | 3.7 |
| CLY-3-O3 | 7.0 | ε_{⊥} [1 kHz, 20°C]: | 7.7 |
| PY-3-O2 | 5.0 | Δε [1 kHz, 20°C]: | -4.0 |
| Y-4O-O4 | 2.0 | K₁ [pN, 20°C]: | 16.6 |
| PGIY-2-O4 | 6.0 | K₃ [pN, 20°C]: | 16.9 |
| B-2O-O5 | 5.0 | V₀ [V, 20°C]: | 2.14 |
| B(S)-2O-O5 | 5.0 | γ₁ [mPa s, 20°C]: | 104 |
| CC-3-V | 34.0 | | |
| CC-3-V1 | 10.0 | | |
| ∑ | 100.0 | | |

### Mixture M65

| | | | |
|---|---|---|---|
| B(S)-2O-O4 | 6.0 | Clp. [°C]: | 73.8 |
| B(S)-2O-O5 | 3.0 | Δn [589 nm, 20°C]: | 0.1075 |
| B-2O-O5 | 3.0 | ε_{∥} [1 kHz, 20°C]: | 3.6 |
| CPP-3-2 | 14.5 | ε_{⊥} [1 kHz, 20°C]: | 6.3 |
| CC-2-3 | 18.0 | Δε [1 kHz, 20°C]: | -2.7 |
| CC-3-4 | 5.0 | K₁ [pN, 20°C]: | 15.8 |
| CC-3-5 | 3.0 | K₃ [pN, 20°C]: | 13.8 |
| CCP-3-1 | 13.0 | V₀ [V, 20°C]: | 2.37 |
| CCP-3-3 | 5.0 | γ₁ [mPa s, 20°C]: | 88 |
| CLY-3-O2 | 8.0 | | |
| PCH-302 | 7.0 | | |
| PY-3-O2 | 6.5 | | |
| Y-4O-O4 | 8.0 | | |
| ∑ | 100.0 | | |

### Mixture M66

| | | | |
|---|---|---|---|
| B(S)-2O-O5 | 4.0 | Clp. [°C]: | 87.8 |
| CC-3-V | 35.0 | Δn [589 nm, 20°C]: | 0.1024 |
| CC-3-V1 | 5.0 | ε_{∥} [1 kHz, 20°C]: | 3.6 |
| CCY-3-O2 | 6.0 | ε_{⊥} [1 kHz, 20°C]: | 7.5 |
| CCY-4-O2 | 3.0 | Δε [1 kHz, 20°C]: | -3.9 |
| CCY-5-O2 | 6.0 | K₁ [pN, 20°C]: | 16.0 |
| CLY-3-O2 | 6.0 | K₃ [pN, 20°C]: | 16.5 |
| CLY-3-O3 | 6.0 | V₀ [V, 20°C]: | 2.16 |
| CLY-4-O2 | 4.0 | γ₁ [mPa s, 20°C]: | 113 |
| CLY-5-O2 | 4.0 | | |
| CPY-3-O2 | 5.0 | | |
| PGIY-2-O4 | 6.0 | | |
| PY-3-O2 | 5.0 | | |
| Y-4O-O4 | 5.0 | | |
| ∑ | 100.0 | | |

### Mixture M67

| | | | |
|---|---|---|---|
| CCY-3-O2 | 6.0 | Clp. [°C]: | 87.5 |
| CCY-3-O3 | 4.5 | Δn [589 nm, 20°C]: | 0.1033 |
| CCY-5-O2 | 6.0 | ε_{∥} [1 kHz, 20°C]: | 3.6 |
| CLY-3-O2 | 6.0 | ε_{⊥} [1 kHz, 20°C]: | 7.6 |
| CLY-3-O3 | 6.0 | Δε [1 kHz, 20°C]: | -4.0 |
| CLY-4-O2 | 2.0 | K₁ [pN, 20°C]: | 16.4 |
| CPY-3-O2 | 6.0 | K₃ [pN, 20°C]: | 16.8 |
| PGIY-2-O4 | 5.0 | V₀ [V, 20°C]: | 2.16 |
| Y-4O-O4 | 4.0 | γ₁ [mPa s, 20°C]: | 107 |
| B(S)-2O-O4 | 4.0 | LTS bulk [h, -20°C]: | 264 |
| B(S)-2O-O5 | 4.0 | | |
| CC-3-V | 35.0 | | |
| CC-3-V1 | 8.0 | | |
| PY-3-O2 | 3.5 | | |
| ∑ | 100.0 | | |

### Mixture M68

| | | | |
|---|---|---|---|
| B(S)-2O-O4 | 2.0 | Clp. [°C]: | 87.4 |
| B(S)-2O-O5 | 1.5 | Δn [589 nm, 20°C]: | 0.1117 |
| CC-3-V | 33.0 | ε_{∥} [1 kHz, 20°C]: | 3.7 |
| CC-3-V1 | 4.0 | ε_{⊥} [1 kHz, 20°C]: | 7.9 |
| CCY-3-O1 | 4.5 | Δε [1 kHz, 20°C]: | -4.2 |
| CCY-3-O2 | 7.0 | K₁ [pN, 20°C]: | 16.1 |
| CLY-3-O2 | 6.0 | K₃ [pN, 20°C]: | 16.8 |
| CLY-3-O3 | 5.0 | V₀ [V, 20°C]: | 2.11 |
| CLY-4-O2 | 4.0 | γ₁ [mPa s, 20°C]: | 120 |
| CLY-5-O2 | 4.0 | LTS bulk [h, -20°C]: | 1000 |
| CPY-3-O2 | 10.0 | | |
| PGIY-2-O4 | 6.0 | | |
| PY-1-O4 | 5.0 | | |
| PY-3-O2 | 5.0 | | |
| Y-4O-O4 | 3.0 | | |
| ∑ | 100.0 | | |

### Mixture M69

| | | | |
|---|---|---|---|
| B(S)-2O-O4 | 3.0 | Clp. [°C]: | 75.9 |
| B(S)-2O-O5 | 1.75 | Δn [589 nm, 20°C]: | 0.1073 |
| B-2O-O5 | 2.75 | ε_{∥} [1 kHz, 20°C]: | 3.7 |
| CPP-3-2 | 8.0 | ε_{⊥} [1 kHz, 20°C]: | 6.4 |
| CPPC-3-3 | 2.0 | Δε [1 kHz, 20°C]: | -2.7 |
| CGPC-3-3 | 1.0 | K₁ [pN, 20°C]: | 14.1 |
| CC-2-3 | 15.75 | K₃ [pN, 20°C]: | 14.1 |
| CC-3-O1 | 12.5 | V₀ [V, 20°C]: | 2.42 |
| CC-3-4 | 2.0 | γ₁ [mPa s, 20°C]: | 102 |
| CC-3-5 | 1.5 | LTS bulk [h, -20°C]: | 1000 |
| CCP-3-1 | 13.25 | | |
| CCP-3-3 | 2.0 | | |
| CLY-3-O2 | 4.0 | | |
| CPY-3-O2 | 8.25 | | |
| CY-3-O2 | 7.5 | | |
| CY-5-O2 | 0.75 | | |
| PGIGI-3-F | 2.0 | | |
| PY-3-O2 | 0.75 | | |
| PYP-2-3 | 5.0 | | |
| Y-4O-O4 | 6.25 | | |
| ∑ | 100.0 | | |

### Mixture M70

| | | | |
|---|---|---|---|
| CCY-3-O2 | 7.0 | Clp. [°C]: | 84.6 |
| CPY-3-O2 | 12.0 | Δn [589 nm, 20°C]: | 0.1121 |
| CLY-3-O2 | 7.0 | ε_{∥} [1 kHz, 20°C]: | 3.7 |
| CLY-3-O3 | 7.0 | ε_{⊥} [1 kHz, 20°C]: | 7.7 |
| PY-3-O2 | 5.0 | Δε [1 kHz, 20°C]: | -4.0 |
| Y-4O-O4 | 2.0 | K₁ [pN, 20°C]: | 16.6 |
| PGIY-2-O4 | 6.0 | K₃ [pN, 20°C]: | 16.9 |
| B-2O-O5 | 5.0 | V₀ [V, 20°C]: | 2.14 |
| B(S)-2O-O5 | 5.0 | γ₁ [mPa s, 20°C]: | 104 |
| CC-3-V | 34.0 | | |
| CC-3-V1 | 10.0 | | |
| ∑ | 100.0 | | |

### Mixture M71

| | | | |
|---|---|---|---|
| CC-3-V | 17.0 | Clp. [°C]: | 75.1 |
| CLY-2-O4 | 5.0 | Δn [589 nm, 20°C]: | 0.1221 |
| CLY-3-O2 | 8.0 | ε_{∥} [1 kHz, 20°C]: | 4.4 |
| CLY-3-O3 | 6.0 | ε_{⊥} [1 kHz, 20°C]: | 10.6 |
| CLY-4-O2 | 5.0 | Δε [1 kHz, 20°C]: | -6.1 |
| COB(S)-2-O4 | 6.0 | K₁ [pN, 20°C]: | 13.0 |
| CPY-2-O2 | 6.0 | K₃ [pN, 20°C]: | 13.4 |
| CPY-3-O2 | 6.0 | V₀ [V, 20°C]: | 1.56 |
| CY-3-O2 | 6.5 | γ₁ [mPa s, 20°C]: | 167 |
| CY-3-O4 | 15.0 | | |
| PGIY-2-O4 | 5.0 | | |
| PY-2-O2 | 5.0 | | |
| PYP-2-3 | 6.0 | | |
| Y-4O-O4 | 3.5 | | |
| ∑ | 100.0 | | |

### Mixture M72

| | | | |
|---|---|---|---|
| Y-4O-O4 | 4.0 | Clp. [°C]: | 71 |
| CY-3-O2 | 14.0 | Δn [589 nm, 20°C]: | 0.1099 |
| PY-3-O2 | 12.0 | Δε [1 kHz, 20°C]: | -6.0 |
| CCY-3-O1 | 4.0 | K₁ [pN, 20°C]: | 11.2 |
| CCY-3-O2 | 7.0 | K₃ [pN, 20°C]: | 12.5 |
| CCY-3-O3 | 4.0 | V₀ [V, 20°C]: | 1.65 |
| CCY-4-O2 | 4.0 | γ₁ [mPa s, 20°C]: | 125 |
| CLY-3-O2 | 6.0 | | |
| CLY-3-O3 | 6.0 | | |
| B(S)-2O-O4 | 4.0 | | |
| B(S)-(c5)10-02 | 4.0 | | |
| PGIY-2-O4 | 5.0 | | |
| CC-3-V | 21.5 | | |
| CCP-V-1 | 4.5 | | |
| ∑ | 100.0 | | |

### Mixture M73

| | | | |
|---|---|---|---|
| Y-4O-O4 | 4.0 | Clp. [°C]: | 72 |
| CY-(c5)-O2 | 14.0 | Δn [589 nm, 20°C]: | 0.1111 |
| PY-3-O2 | 12.0 | Δε [1 kHz, 20°C]: | -6.2 |
| CCY-3-O1 | 4.0 | γ₁ [mPa s, 20°C]: | 138 |
| CCY-3-O2 | 7.0 | | |
| CCY-3-O3 | 4.0 | | |
| CCY-4-O2 | 4.0 | | |
| CLY-3-O2 | 6.0 | | |
| CLY-3-O3 | 6.0 | | |
| B(S)-2O-O4 | 4.0 | | |
| B(S)-2O-O5 | 4.0 | | |
| PGIY-2-O4 | 5.0 | | |
| CC-3-V | 21.5 | | |
| CCP-V-1 | 4.5 | | |
| ∑ | 100.0 | | |

### Polymerisable Mixtures

The following polymerisable mixtures are prepared from the nematic mixtures given in Table 1 by adding a reactive mesogen (RM) selected from the group of compounds of the formulae RM1. RM2, RM3 and RM4 in the amount given in Table 1 (% RM).

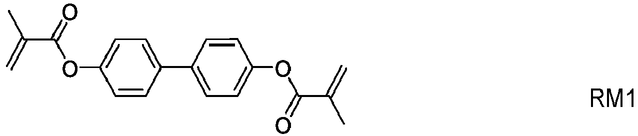

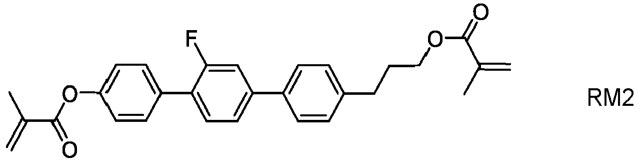

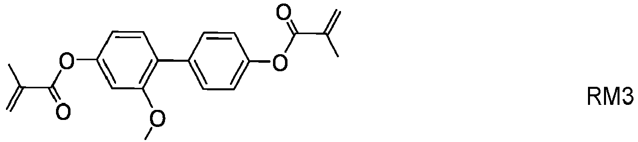

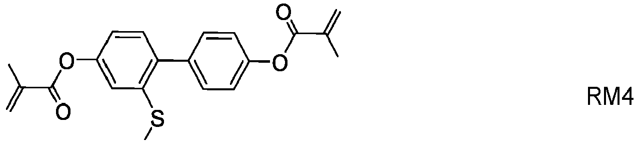

**Table 1: Polymerisable Mixtures.**

| Mixture | LC Host | RM | % RM |
|---|---|---|---|
| P1 | M1 | RM1 | 0.3 |
| P2 | M3 | RM2 | 0.3 |
| P3 | M5 | RM3 | 0.3 |
| P4 | M7 | RM4 | 0.3 |
| P5 | M10 | RM1 | 0.25 |
| P6 | M11 | RM2 | 0.25 |
| P7 | M12 | RM3 | 0.25 |
| P8 | M13 | RM4 | 0.25 |

## Claims

1. A liquid crystal medium comprising a) one or more compounds of formula I 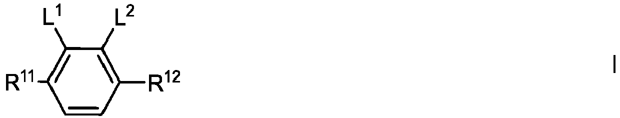 in which
R¹¹, R¹² identically or differently, denote H, straight chain alkyl or alkoxy having 1 to 15 C atoms, straight chain alkenyl or alkenyloxy having 2 to 15 C atoms or branched alkyl, alkoxy, alkenyl or alkenyloxy having 3 to 15 C atoms, where one or more CH₂ groups in these radicals may each be replaced, independently of one another, by 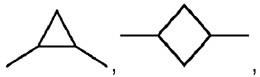 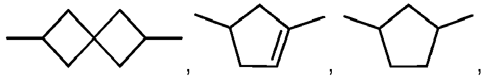 -C≡C-, -CF₂O-, -OCF₂-, -O-, -CO-O- or -O-CO- in such a way that O atoms are not linked directly to one another, and in which one or more H atoms may be replaced by halogen,
L¹, L² identically or differently, denote F or Cl,
and
b) one or more compounds of the formula IIBa 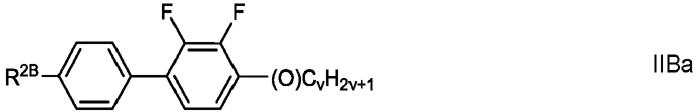 in which
R^{2B} denotes alkyl or alkoxy each having 1 to 7 C atoms or alkenyl having 2 to 7 C atoms,
(O) denotes O or a single bond, and
v is an integer from 1 to 5;
and
c) one or more compounds of the formula IlDa 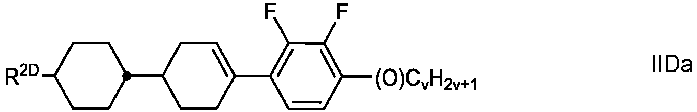 in which
R^{2D} denotes alkyl or alkoxy each having 1 to 7 C atoms or alkenyl having 2 to 7 C atoms,
(O) denotes O or a single bond, and
v is an integer from 1 to 5.

2. The liquid crystal medium according to claim 1, wherein the medium comprises one or more compounds of formula III 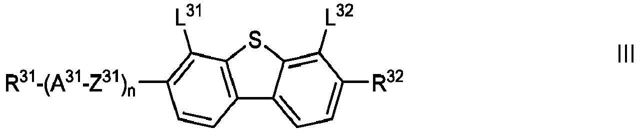 in which
R³¹ and R³² identically or differently, denote H, straight chain alkyl or alkoxy having 1 to 15 C atoms, straight chain alkenyl or alkenyloxy having 2 to 15 C atoms or branched alkyl, alkoxy, alkenyl or alkenyloxy having 3 to 15 C atoms, where one or more CH₂ groups in these radicals may each be replaced, independently of one another, by 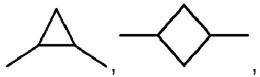 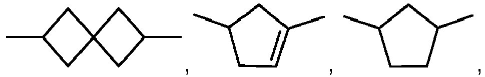 -C≡C-, -CF₂O-, -OCF₂-, -CH=CH-, by -O-, -CO-O- or -O-CO- in such a way that O atoms are not linked directly to one another, and in which one or more H atoms may be replaced by halogen,
A³¹ on each occurrence, independently of one another, denotes
a) 1,4-cyclohexylene or 1,4-cyclohexenylene radical, in which one or two non-adjacent CH₂ groups may be replaced by -O- or -S-,
b) a 1,4-phenylene radical, in which one or two CH groups may be replaced by N, or
c) a radical from the group consisting of spiro[3.3]heptane-2,6-diyl, 1,4-bicyclo[2.2.2]octylene, naphthalene-2,6-diyl, decahydronaphthalene-2,6-diyl, 1,2,3,4-tetrahydronaphthalene-2,6-diyl, phenanthrene-2,7-diyl and fluorene-2,7-diyl,
where the radicals a), b) and c) may be mono- or polysubstituted by halogen atoms,
Z³¹ on each occurrence independently of one another denotes -CO-O-, -O-CO-, -CF₂O-, -OCF₂-, -CH₂O-, -OCH₂-, -CH₂-, -CH₂CH₂-, -(CH₂)₄-, -CH=CH-CH₂O-, -C₂F₄-, -CH₂CF₂-, -CF₂CH₂-, -CF=CF-, -CH=CF-, -CF=CH-, -CH=CH-, -C≡C- or a single bond,
L³¹ and L³² each, independently of one another, denote F, CI, CF₃ or CHF₂, and
n is 0, 1 or 2.

3. The liquid crystal medium according to claim 1 or 2, wherein the medium further comprises one or more compounds selected from the group of compounds of the formulae IIA, IIB, IIC and IID, 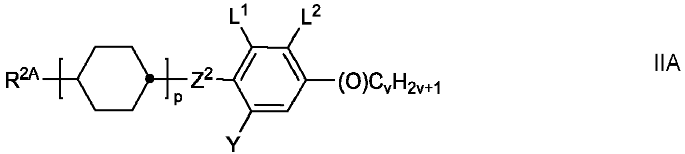 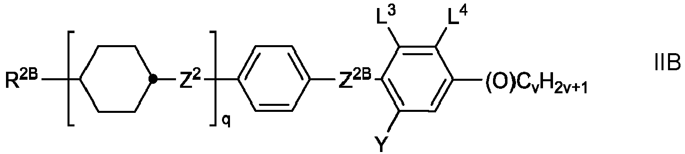 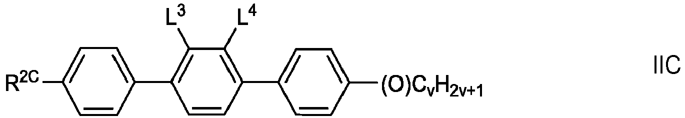 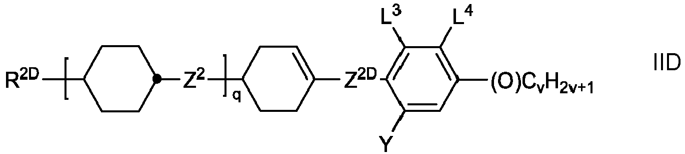 in which
R^{2A}, R^{2B}, R^{2C} and R^{2D} identically or differently, denote H, straight chain alkyl or alkoxy having 1 to 15 C atoms, straight chain alkenyl or alkenyloxy having 2 to 15 C atoms or branched alkyl, alkoxy, alkenyl or alkenyloxy having 3 to 15 C atoms, where one or more CH₂ groups in these radicals may each be replaced, independently of one another, by 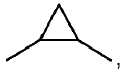 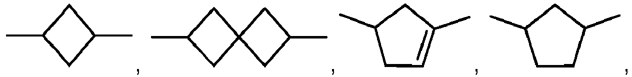 -C≡C-, -CF₂O-, -OCF₂-, -CH=CH-, by -O-, -CO-O- or -O-CO- in such a way that O atoms are not linked directly to one another, and in which one or more H atoms may be replaced by halogen,
(O) denotes O or a single bond,
L¹ to L⁴ each, independently of one another, denote F, Cl, CF₃ or CHF₂,
Y denotes H, F, Cl, CF₃, CHF₂ or CH₃,
Z², Z^{2B} and Z^{2D} each, independently of one another, denote a single bond, -CH₂CH₂-, -CH=CH-, -CF₂O-, -OCF₂-, -CH₂O-, -OCH₂-, -COO-, -OCO -, -C₂F₄-, -CF=CF- or -CH=CHCH₂O-,
p denotes 0, 1 or 2,
q denotes 0 or 1, and
v denotes an integer from 1 to 6,
wherein the compounds of the formulae IIBa and IIDa are excluded from formulae IIB and IID.

4. The liquid crystal medium according to one or more of claims 1 to 3, wherein the medium comprises one or more compounds selected from the group of compounds of the formulae I-1 and I-2 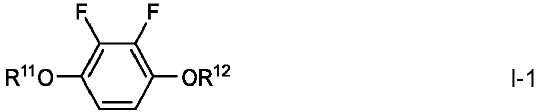 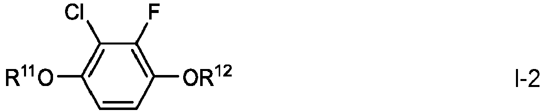 in which R¹¹ and R¹² independently denote alkyl having 1 to 6 C atoms or alkenyl having 2 to 6 C atoms, where at least one of R¹¹ and R¹² denotes alkenyl having 2 to 6 C atoms.

5. The liquid crystal medium according to one or more of claims 1 to 4, wherein the medium comprises one or more compounds of the formula S 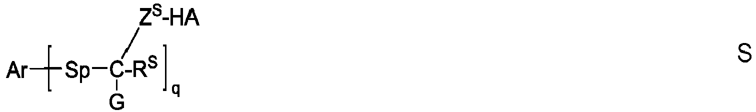 in which
Ar denotes an aromatic or heteroaromatic hydrocarbon group having 4 to 40 C atoms;
Sp denotes a spacer group;
R^{S} denotes H, alkyl having 1 to 12 C atoms or alkenyl having 2 to 12 C atoms;
Z^{S} denotes -O-, -C(O)O-, -(CH₂)_{z}- or -(CH₂)_{z}O-, or a single bond;
HA denotes 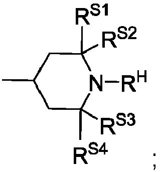
R^{H} denotes H, O^{•}, CH₃, OH or OR^{S};
R^{S1}, R^{S2}, R^{S3} and R^{S4}, identically or differently, denote alkyl having 1 to 6 C atoms, preferably having 1 to 3 C atoms, very preferably CH₃;
G denotes H or R^{S} or a group Z^{S}-HA;
z is an integer from 1 to 6; and
q is 3 or 4.

6. The medium according to claim 5, wherein the total concentration of the one or more compounds of the formula S is in the range of from > 1000 ppm to 5000 ppm.

7. The medium according to one or more of claims 1 to 6, wherein the medium comprises one or more compounds of formula IV 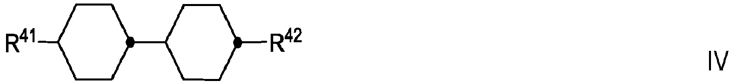 in which
R⁴¹ denotes alkyl having 1 to 7 C atoms or alkenyl having 2 to 7 C atoms, and
R⁴² denotes alkyl having 1 to 7 C atoms or alkoxy having 1 to 6 C atoms or alkenyl having 2 to 7 C atoms.

8. The liquid crystal medium according to one or more of claims 1 to 7, wherein the medium comprises one or more compounds of formula V 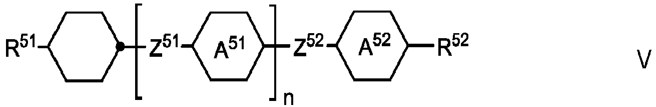 in which
R⁵¹, R⁵² denote alkyl having 1 to 7 C atoms, alkoxy having 1 to 7 C atoms, or alkoxyalkyl, alkenyl or alkenyloxy having 2 to 7 C atoms, 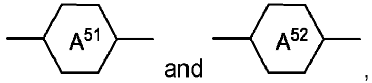 identically or differently, denote 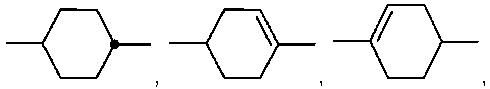 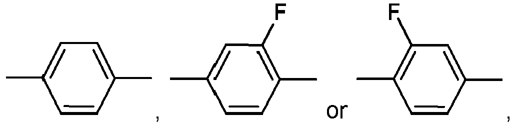
Z⁵¹ , Z⁵² each, independently of one another, denote -CH₂-CH₂-, -CH₂-O-, -CH=CH-, -C=C-, -COO- or a single bond, and
n is 1 or 2.

9. The medium according to one or more of claims 1 to 8, wherein the medium comprises a polymerisable compound of formula R
P-Sp-A¹-(Z¹-A²)_{z}-R R
in which
P denotes a polymerisable group,
Sp denotes a spacer group or a single bond,
A¹, A² identically or differently, denote an aromatic, heteroaromatic, alicyclic or heterocyclic group, preferably having 4 to 25 ring atoms, which may also contain fused rings, and which is unsubstituted, or mono- or polysubstituted by L,
Z¹ -O-, -S-, -CO-, -CO-O-, -O-CO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -CH=CF-, -CF=CH-, -C≡C-, -CH=CH-CO-O-, -O-CO-CH=CH-, -CH₂-CH₂-CO-O-, -O-CO-CH₂-CH₂-, -CR⁰R⁰⁰-, or a single bond,
R⁰, R⁰⁰ H or alkyl having 1 to 12 C atoms,
R H, L, or P-Sp-,
L F, Cl, -CN, P-Sp- or straight chain, branched or cyclic alkyl having 1 to 25 C atoms, wherein one or more non-adjacent CH₂-groups are optionally replaced by -O-, -S-, -CO-, -CO-O-, -O-CO-, -O-CO-O- in such a manner that O- and/or S-atoms are not directly connected with each other, and wherein one or more H atoms are each optionally replaced by P-Sp-, F or Cl,
z is 0, 1, 2 or 3, and
n1 is 1, 2, 3 or 4.

10. An LC display comprising the liquid crystal medium according to one or more of claims 1 to 9.

11. The display according to claim 10, wherein the display is a VA, IPS, FFS or UB-FFS display.

12. A PSA display comprising the liquid crystal medium according to claim 9, wherein the compounds of the formula R are polymerised.

13. The display according to claim 12, wherein the display is a PS-VA, PS-IPS, PS-FFS, PS-UB-FFS, SA-FFS or SA-VA display.

14. Use of the liquid crystal medium according to one or more of claims 1 to 9 for electro-optical purposes.

15. A process for the preparation of the liquid crystal medium according to one or more of claims 1 to 9 comprising at least the steps of mixing one or more compounds of the formula I with one or more compounds of the formula IIBa and one or more compounds of the formula IIDa.
